# EUROPÄISCHE PATENTSCHRIFT

(11) **EP 2 027 919 B1**
(45) Veröffentlichungstag und Bekanntmachung des Hinweises auf die Patenterteilung: **18.05.2016**
(21) Anmeldenummer: 08162050.2
(22) Anmeldetag: 08.08.2008
(51) Int. Cl.: B01J 31/26, B01J 31/22, B01J 31/24, B01J 31/06, B01J 31/18, B01J 27/138, B01J 27/10, C07C 6/04, C08C 19/08, C08C 19/28, C08G 61/12, C07F 11/00, C07F 15/00

(54) **Katalysator-Systeme enthaltend ein Erdalkalimetallchlorid und deren Verwendung für Metathese-Reaktionen**
Catalyst systems comprising an alkaline earth metal chloride and their application for metathesis reactions
Système de catalyseur comprenant un chlorure d'un metal alcalinoterreux et son utilisation pour les réactions de métathèse

(30) Priorität: 21.08.2007 DE 102007039526
(43) Veröffentlichungstag der Anmeldung: 25.02.2009
(73) Patentinhaber: LANXESS Deutschland GmbH, 50569 Köln (DE)
(72) Erfinder: Obrecht, Werner, 47447 Moers (DE); Langfeld, Kerstin, 10317 Berlin (DE); Schneider, Martin, 80804 München (DE); Nuyken, Oskar, 81927 München (DE)

(56) Entgegenhaltungen:
- EP-A1- 1 825 913
- EP-A2- 1 577 282
- WO-A1-03/002613
- DIAS E L ET AL: "WELL-DEFINED RUTHENIUM OLEFIN METATHESIS CATALYSTS: MECHANISM AND ACTIVITY", JOURNAL OF THE AMERICAN CHEMICAL SOCIETY, AMERICAN CHEMICAL SOCIETY, Bd. 119, Nr. 17, 1. Januar 1997 (1997-01-01), Seiten 3887-3897, XP009076454, ISSN: 0002-7863, DOI: 10.1021/JA963136Z
- MEYER W H ET AL: "Tin and iron halogenides as additives in ruthenium-catalyzed olefin metathesis", INORGANICA CHIMICA ACTA, ELSEVIER BV, NL, Bd. 359, Nr. 9, 1. Juni 2006 (2006-06-01), Seiten 2910-2917, XP028068705, ISSN: 0020-1693, DOI: 10.1016/J.ICA.2005.12.032 [gefunden am 2006-06-01]

## Beschreibung

Die vorliegende Erfindung betrifft Katalysator-Systeme und deren Verwendung für die Katalyse von Metathese Reaktionen, insbesondere für die Metathese von Nitrilkautschuk.

Metathese-Reaktionen werden umfangreich im Rahmen chemischer Synthesen eingesetzt, z.B. in Ringschlussmetathesen (RCM), Kreuzmetathesen (CM), Ringöffnungsmetathesen (ROM), ringöffnende Metathesepolymerisationen (ROMP), cyclische Dien Metathese-polymerisationen (ADMET), Selbstmetathese, Umsetzung von Alkenen mit Alkinen (enin-Reaktionen), Polymerisation von Alkinen und Olefinierung von Carbonylen (WO-A-97/06185 und Platinum Metals Rev., 2005, 49(3), 123-137). Anwendung finden Metathese-Reaktionen beispielsweise zur Olefin-Synthese, zur ringöffnenden Polymerisation von Norbornenderivaten, zur Depolymerisation ungesättigter Polymere und zur Synthese von Telechelen.

Metathesekatalysatoren sind unter anderem aus der WO-A-96/04289 und WO-A-97/06185 bekannt. Sie besitzen die folgende prinzipielle Struktur: 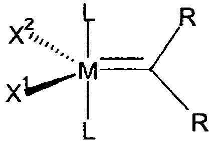 worin M Osmium oder Ruthenium bedeutet, R für gleiche oder verschiedene organische Reste mit großer struktureller Variationsbreite steht, X¹ und X² anionische Liganden bedeuten und L neutrale Elektronen-Donoren darstellt. Unter dem gängigen Begriff "anionische Liganden" werden in der Literatur für derartige Metathese-Katalysatoren immer solche Liganden verstanden, die, wenn man sie als vom Metall-Zentrum entfernt betrachtet, bei geschlossener Elektronenschale negativ geladen sind.

Auch für den Abbau von Nitrilkautschuken gewinnen Metathese-Reaktionen in jüngerer Zeit zunehmende Bedeutung.

Unter Nitrilkautschuk, abgekürzt auch als "NBR" bezeichnet, werden Kautschuke verstanden, bei denen es sich um Co- oder Terpolymere aus mindestens einem α,β-ungesättigten Nitril, mindestens einem konjugierten Dien und gegebenenfalls einem oder mehreren weiteren copolymerisierbaren Monomeren handelt.

Hydrierter Nitrilkautschuk, abgekürzt auch als "HNBR" bezeichnet, wird durch Hydrierung von Nitrilkautschuk hergestellt. Entsprechend sind in HNBR die C=C Doppelbindungen der einpolymerisierten Dieneinheiten ganz oder teilweise hydriert. Der Hydriergrad der einpolymerisierten Dieneinheiten liegt üblicherweise in einem Bereich von 50 bis 100%. Hydrierter Nitrilkautschuk ist ein Spezialkautschuk, der über eine sehr gute Hitzebeständigkeit, eine hervorragende Beständigkeit gegen Ozon und Chemikalien sowie eine ausgezeichnete Ölbeständigkeit verfügt.

Die vorgenannten physikalischen und chemischen Eigenschaften des HNBR gehen einher mit sehr guten mechanischen Eigenschaften, insbesondere einer hohen Abriebfestigkeit. Aus diesem Grund hat HNBR breite Verwendung in den verschiedensten Anwendungsgebieten gefunden. HNBR wird beispielsweise eingesetzt für Dichtungen, Schläuche, Riemen und Dämpfungselemente im Automobilsektor, ferner für Statoren, Bohrlochdichtungen und Ventildichtungen im Bereich der Ölförderung sowie auch für zahlreiche Teile der Luftfahrtindustrie, der Elektroindustrie, des Maschinen- und des Schiffsbaus.

Am Markt kommerziell erhältliche HNBR Typen weisen üblicherweise eine Mooney-Viskosität (ML 1+4 bei 100°C) im Bereich von 55 bis 120 auf, was einem Zahlenmittel des Molekulargewichts Mₙ Bestimmungsmethode: Gelpermeationschromatographie (GPC) gegen Polystyroläquivalente) im Bereich von ca. 200.000 bis 700.000 entspricht. Die dabei zu messenden Polydispersitätsindizes PDI (PDI = M_{w} /Mₙ, wobei M_{w} das Gewichtsmittel und Mₙ das Zahlenmittel des Molekulargewichts darstellt), die eine Aussage über die Breite der Molekulargewichtsverteilung liefern, besitzen häufig einen Wert von 3 oder darüber. Der Restdoppelbindungsgehalt liegt üblicherweise in einem Bereich von 1 bis 18 % (bestimmt durch IR-Spektroskopie).

Der Verarbeitbarkeit von HNBR sind durch die relativ hohe Mooney-Viskosität starke Beschränkungen auferlegt. Für viele Anwendungen wäre ein HNBR Typ wünschenswert, der ein niedrigeres Molekulargewicht und damit eine niedrigere Mooney-Viskosität besitzt. Dies würde die Verarbeitbarkeit entscheidend verbessern.

In der Vergangenheit wurden zahlreiche Versuche unternommen, die Kettenlänge von HNBR durch Abbau zu verkürzen. Beispielsweise ist ein Molekulargewichtsabbau durch thermomechanische Behandlung (Mastikation) z. B. auf einem Walzwerk oder auch in einem Schneckenaggregat (EP-A-0 419 952) möglich. Dieser thermomechanische Abbau hat jedoch den Nachteil, dass durch partielle Oxidation funktionelle Gruppen wie Hydroxyl-, Keto-, Carbonsäure- und Ester-Gruppen in das Molekül eingebaut werden und zusätzlich die Mikrostruktur des Polymers substanziell geändert wird.

Die Herstellung von HNBR mit niedrigen Molmassen, entsprechend einer Mooney-Viskosität (ML 1+4 bei 100°C) in einem Bereich kleiner 55 bzw. einem Zahlenmittel des Molekulargewichts von ca. Mₙ < 200.000 g /mol, war mittels etablierter Herstellungsverfahren lange Zeit nicht möglich, da einerseits bei der Hydrierung von NBR ein sprunghafter Anstieg der Mooney-Viskosität erfolgt und andererseits die Molmasse des für die Hydrierung einzusetzenden NBR-Feedstocks nicht beliebig reduziert werden kann, da sonst die Aufarbeitung in den zur Verfügung stehenden großtechnischen Anlagen wegen zu hoher Klebrigkeit nicht mehr möglich ist. Die niedrigste Mooney-Viskosität eines NBR-Feedstocks, die ohne Schwierigkeiten in einer etablierten großtechnischen Anlage aufarbeitbar ist, liegt bei ca. 30 Mooney-Einheiten (ML 1+4 bei 100°C). Die Mooney-Viskosität des hydrierten Nitrilkautschuks, der mit einem solchen NBR-Feedstock erhalten wird, liegt in der Größenordnung von 55 Mooney-Einheiten (ML 1+4 bei 100°C). Die Bestimmung der Mooney-Viskosität erfolgt dabei gemäß ASTM Norm D 1646.

Im neueren Stand der Technik wird dieses Problem gelöst, indem man das Molekulargewicht des Nitrilkautschuks vor der Hydrierung durch Abbau auf eine Mooney-Viskosität (ML 1+4 bei 100°C) von weniger als 30 Mooney-Einheiten bzw. ein Zahlenmittel des Molekulargewichts von Mₙ < 70.000 g / mol reduziert. Den Abbau des Molekulargewichts erreicht man durch Metathese, bei der man üblicherweise niedermolekulare 1-Olefine zusetzt. Beschrieben ist die Metathese von Nitrilkautschuk beispielsweise in WO-A-02/100905**,** WO-A-02/100941 und WO-A-03/002613. Die Metathesereaktion wird zweckmäßigerweise im gleichen Lösungsmittel wie die Hydrierreaktion durchgeführt, damit man den abgebauten Nitrilkautschuk nach Beendigung der Abbaureaktion nicht aus dem Lösungsmittel isolieren muss, bevor man ihn der nachfolgenden Hydrierung unterwirft. Für die Katalyse der Metathese-Abbaureaktion verwendet man Metathesekatalysatoren, die gegenüber polaren Gruppen, insbesondere gegenüber Nitrilgruppen, tolerant sind.

In der WO-A-02/100905 und der WO-A-02/100941 wird ein Verfahren beschrieben, welches den Abbau von Nitrilkautschuk-Ausgangspolymeren durch Olefinmetathese und eine anschließende Hydrierung zu HNBR mit niedriger Mooney-Viskosität umfasst. Hierbei wird ein Nitrilkautschuk in einem ersten Schritt in Gegenwart eines Co-Olefns und spezieller Komplexkatalysatoren auf Osmium-, Ruthenium-, Molybdän- oder Wolfram-Basis umgesetzt und in einem zweiten Schritt hydriert. Erhältlich sind auf diesem Weg hydrierte Nitrilkautschuke mit einem Gewichtsmittel des Molekulargewichts (M_{w}) im Bereich von 30.000 bis 250.000, einer Mooney-Viskosität (ML 1+4 bei 100 °C) im Bereich von 3 bis 50 und einem Polydispersitätsindex PDI von kleiner 2.5.

Zur Metathese von Nitrilkautschuk kann z.B. der nachfolgend dargestellte Katalysator Bis(tricyclohexylphosphin)benzyliden-rutheniumdichlorid eingesetzt werden.

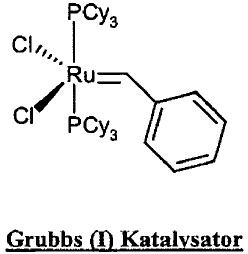

Nach Metathese und Hydrierung weisen die Nitrilkautschuke ein niedrigeres Molekulargewicht sowie eine engere Molekulargewichtsverteilung auf als die nach dem Stand der Technik bisher herstellbaren hydrierten Nitrilkautschuke.

Die für die Durchführung der Metathese angewandten Mengen an Grubbs-(I)-Katalysator sind jedoch groß. Sie betragen in den Versuchen der WO-A-03/002613 beispielsweise 307 ppm und 61 ppm Ru bezogen auf den eingesetzten Nitrilkautschuk. Die notwendigen Reaktionszeiten sind darüber hinaus lang und die Molekulargewichte nach dem Abbau immer noch relativ hoch (siehe Beispiel 3 der WO-A-03/002613 mit M_{w} = 180.000 g/mol und Mₙ = 71.000g/mol).

US 2004/0127647 A1 beschreibt Blends auf der Basis niedermolekularer HNBR-Kautschuke mit bi- bzw. multimodaler Molekulargewichtsverteilung sowie Vulkanisate dieser Kautschuke. Für die Durchführung der Metathese werden nach den Beispielen 0,5 phr an Grubbs-I-Katalysator verwendet. Dies entspricht der hohen Menge von 614 ppm Ruthenium bezogen auf den eingesetzten Nitrilkautschuk.

Aus WO-A-00/71554 ist ferner eine Gruppe von Katalysatoren bekannt, die in der Fachwelt als "Grubbs (II) Katalysatoren" bezeichnet werden.

Verwendet man einen solchen "Grubbs(II) Katalysator" wie z.B. den nachfolgend dargestellten Katalysator 1,3-Bis (2,4,6-trimethylphenyl)-2-imidazolidenyliden) (tricyclohexylphosphin)-ruthenium(phenyl-methylen)dichlorid für die NBR-Metathese **(**US-A-2004/0132891**),** so gelingt diese auch ohne Verwendung eines Co-Olefins.

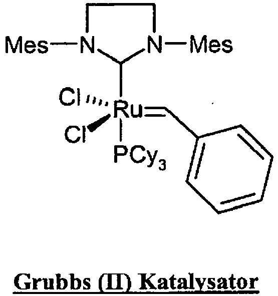

Nach der anschließenden Hydrierung, die bevorzugt im gleichen Lösungsmittel durchgeführt wird, weist der hydrierte Nitrilkautschuk niedrigere Molekulargewichte und eine engere Molekulargewichtsverteilung (PDI) auf als bei Verwendung von Katalysatoren des Grubbs-(I)-Typs. Bezüglich des Molekulargewichts und der Molekulargewichtsverteilung verläuft somit der Metatheseabbau mit Katalysatoren des Typs Grubbs-(II) effizienter als mit Katalysatoren des Typs Grubbs-(I). Allerdings sind die für diesen effizienten Metatheseabbau notwendigen Ruthenium-Mengen immer noch relativ hoch. Auch werden für die Durchführung der Metathese mit dem Grubbs-(II)-Katalysator immer noch lange Reaktionszeiten benötigt.

Allen zuvor genannten Verfahren zum Metatheseabbau von Nitrilkautschuk ist gemeinsam, dass relativ große Katalysatormengen eingesetzt werden müssen und lange Reaktionszeiten benötigt werden, um die gewünschten niedermolekularen Nitrilkautschuke mittels Metathese herzustellen.

Auch bei den anderen Typen der Metathese-Reaktionen kommt der Aktivität der eingesetzten Katalysatoren entscheidende Bedeutung zu.

In J.Am.Chem. Soc. 1997, 119, 3887-3897 wird beschrieben, dass bei der nachfolgend dargestellten Ringschlussmetathese von Diethyldiallylmalonat 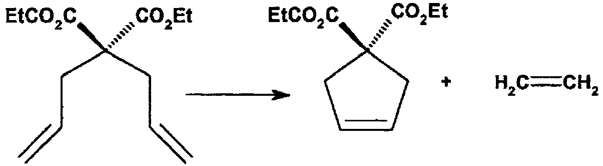 die Aktivität der Katalysatoren des Grubbs-(I) Typs durch Zusätze von CuCl und CuCl₂ gesteigert werden kann. Erklärt wird diese Aktivitätssteigerung durch eine Verschiebung des Dissoziationsgleichgewichts, indem ein abdissoziierender Phosphanligand durch Kupferionen unter Bildung von Kupfer-Phosphankomplexen abgefangen wird.

Diese Aktivitätssteigerung durch Kupfer-Salze in der genannten Ringschlussmetathese lässt sich jedoch nicht beliebig auf andere Arten von Metathese-Reaktionen übertragen. Eigene Untersuchungen ergaben, dass unerwarteterweise der Zusatz von Kupfer-Salzen für den Metathese-Abbau von Nitrilkautschuken zwar zu einer anfänglichen Beschleunigung der Metathese-Reaktion führt, dann aber eine signifikante Verschlechterung der Metathese-Effizienz zu beobachten ist: Die letztendlich erreichbaren Molekulargewichte der abgebauten Nitrilkautschuke sind substanziell höher, als wenn die Metathese-Reaktion in Gegenwart des gleichen Katalysators aber in Abwesenheit der Kupfer-Salze durchgeführt wird.

In einer noch nicht veröffentlichten deutschen Patentanmeldung werden Katalysator-Systeme für die Metathese beschrieben, bei denen neben dem eigentlichen Metathese-Katalysator noch ein oder mehrere Salze eingesetzt werden. Diese Kombination von einem oder mehreren Salzen mit dem Metathese-Katalysator führt zu einer Aktivitätssteigerung des Katalysators. Für die Anionen und Kationen dieser Salze ist jeweils eine Vielzahl von Bedeutungen möglich, die aus verschiedenen Listen ausgewählt werden können. Als besonders vorteilhaft erweist sich in den Beispielen dieser deutschen Patentanmeldung der Einsatz von Lithiumbromid sowohl für den Metathese Abbau von Kautschuken, wie z.B. Nitrilkautschuken, als auch für die Ringschlussmetathese von Diethyldiallylmalonat. Als Katalysatoren werden hierbei der Grubbs-(II) Katalysator, der Hoveyda-, der Buchmeiser-Nuyken- und der Grela-Katalysator eingesetzt.

Der Einsatz von Lithiumbromid und auch von Cäsiumbromid ist wegen der korrosionsfördernden Wirkung von Bromidionen nicht uneingeschränkt für alle Metathese Reaktionen empfehlenswert. Bei der Herstellung niedermolekularer hydrierter Nitrilkautschuke spielen beispielsweise zusätzliche sicherheitstechnische Aspekte eine Rolle, da im Anschluss an den Metatheseabbau des Nitrilkautschuks eine Hydrierung unter erhöhtem Druck in Stahlreaktoren durchgeführt wird. Da über die Restfeuchte des Nitrilkautschuks Wasser in die Reaktionsmischung gelangt, ist bei der Durchführung der Hydrierung in Gegenwart von Bromid-Salzen durch zusätzliche Maßnahmen sicherzustellen, dass es nicht zu einer "Lochkorrosion" des Stahlautoklaven kommt. Aus diesem Grund ist die Verwendung von Bromidzusätzen bei der Herstellung besonders niedermolekularer Nitrilkautschuke keine wirtschaftlich optimale Vorgehensweise.

Des weiteren legen die Beispiele der oben genannten deutschen Patentanmeldung nahe, dass die aktivitätssteigernde Wirkung von Lithiumchlorid schwächer ist als diejenige von Lithiumbromid. In Inorganica Chimica Acta 359 (2006) 2910-2917 wurde ebenfalls die Aktivitätssteigerung von Metathesekatalysatoren durch Salze untersucht. Betrachtet wurden die Einflüsse von Zinnchlorid, Zinnbromid, Zinnjodid, Eisen(II)chlorid, Eisen(II)bromid, Eisen(III)chlorid, Cer(III)chlorid*7H₂O, Ytterbium(III) Chlorid, Antimontrichlorid, Galliumdichlorid und Aluminiumtrichlorid auf die Selbstmetathese von 1-Octen zu 7-Tetradecen und Ethylen. Bei Verwendung des Grubbs-(I)-Katalysators wurde bei Zusatz von Zinnchlorid bzw. Zinnbromid eine deutliche Verbesserung des Umsatzes von 7-Tetradecen beobachtet (Table 1). Ohne Salzzusatz wurde ein Umsatz von 25,8 % erreicht, bei Zusatz von SnCl₂*2H₂O stieg der Umsatz auf 68,5% und durch Zusatz von Zinnbromid auf 71,9%. Ein Zusatz von Zinnjodid verschlechterte den Umsatz signifikant von 25,8% auf 4,1%. In Kombination mit dem Grubbs-(II)-Katalysator führten alle drei Zinnsalze dagegen nur zu geringfügigen Umsatzverbesserungen von 76,3% (Referenzversuch ohne Zusatz) auf 78,1% (SnCl₂), auf 79,5% (SnBr₂) und 77,6% (SnJ₂). Bei Verwendung des sogenannten "Phobcats" [Ru(phobCy)₂Cl₂( = ChPh)] wird der Umsatz durch SnCl₂-Zusatz von 87,9% auf 80,8%, durch SnBr₂ auf 81,6% und durch SnJ₂ auf 73,9% verschlechtert. Bei Verwendung von Eisen(II)-Salzen ist in Kombination mit dem Grubbs-(I)-Katalysators die Erhöhung des Umsatzes mit Eisen(II)bromid höher als bei Verwendung von Eisen(II)chlorid. Es ist anzumerken, dass unabhängig von der Art des verwendeten Katalysators bei Verwendung von Bromiden der Umsatz stets höher als bei Verwendung der entsprechenden Chloride ist.

Der Einsatz des in Inorganica Chimica Acta 359 (2006) 2910-2917 beschriebenen Zinn- bzw. Eisen(II)bromids ist aber für die Herstellung von Nitrilkautschuken wegen der Korrosivität der Bromide wie bereits oben beschrieben keine optimale Lösung.

Üblicherweise wird bei der Herstellung hydrierter Nitrilkautschuke nach der Hydrierung das Lösungsmittel durch Wasserdampfdestillation entfernt. Werden Zinnsalze als Teil des Katalysator-Systems verwendet, gelangen hierbei gewisse Mengen dieser Zinnsalze in das Abwasser, das daher aufwändig gereinigt werden muss. Aus diesem Grund ist die Verwendung von Zinnsalzen zur Aktivitätssteigerung von Katalysatoren bei der Herstellung von Nitrilkautschuken wirtschaftlich nicht empfehlenswert.

Die Verwendung von Eisensalzen ist dadurch eingeschränkt, dass sie die Kapazität mancher Austauscherharze, die üblicherweise für die Rückgewinnung der bei der Hydrierung eingesetzten Edelmetallverbindungen verwendet wird, reduzieren. Hierdurch wird ebenfalls die Wirtschaftlichkeit des Gesamtverfahrens beeinträchtigt.

In ChemBioChem 2003, 4, 1229-1231 wird ferner die Synthese von Polymeren durch eine ringöffnende Metathese-Polymerisation (ROMP) von Norbornyloligopeptiden in Gegenwart eines Rutheniumcarbenkomplexes Cl₂(PCy₃)₂Ru=CHPhenyl beschrieben, wobei LiCl zugesetzt wird. Der Zusatz von LiCl erfolgt dabei mit dem erklärten Ziel der Vermeidung einer Aggregation und der Erhöhung der Löslichkeit der wachsenden Polymerketten. Über eine aktivitätssteigernde Wirkung des Salzzusatzes auf den Katalysator wird nichts berichtet.

Auch aus J. Org. Chem. 2003, 68, 202-2023 ist die Durchführung einer ringöffnenden Polymerisation von mit Oligopeptiden substituierten Norbornenen bekannt, bei der LiCl eingesetzt wird. Auch hier wird auf den Einfluss von LiCl als löslichkeitssteigernder Zusatz für die Peptide in unpolaren organischen Lösungsmitteln abgehoben. Aus diesem Grund kann durch den Zusatz von LiCl eine Steigerung des Polymerisationsgrades DP erreicht werden.

In J.Am.Chem.Soc. 1997, 119, 3887-3897 wird beschrieben, dass man NHC-Liganden enthaltende Metathesekatalysatoren wie den Grubbs-(II) Katalysator mit LiBr oder NaI behandelt, um so die Chlorid-Liganden des Grubbs-(II)-Katalysators gegen Bromid oder Jodid auszutauschen.

EP 1 577 282 A2 offenbart ein Katalysator-System umfassend einen Metathese-Katalysator, bei dem es sich um einen Komplexkatalysator auf Basis eines Metalls der 6. oder 8. Nebengruppe des Periodensystems handelt und der mindestens einen carbenartig an das Metall gebundenen Liganden aufweist, sowie ein Erdalkalimetallhalogenid (Magnesium). Die Systeme werden in Metathese-Reaktionen, insbesondere ROMP, verwendet.

Vor diesem Hintergrund bestand aus verfahrenstechnischen Gründen sowie aus Gründen des Umweltschutzes die Aufgabe der vorliegenden Erfindung darin, besonders geeignete Katalysatorsysteme bereitzustellen, die in den verschiedenen Typen von Metathese Reaktionen universell einsetzbar sind und bei Zugrundelegung verschiedenster Metathese-Katalysatoren zu Aktivitätssteigerungen führen und somit eine Reduktion der Katalysatormenge und damit insbesondere der darin enthaltenen Edelmetallmengen erlauben. Vor allem für den Metatheseabbau von Nitrilkautschuk sollten Möglichkeiten gefunden werden, die eine Aktivitätssteigerung des eingesetzten Katalysators ohne Vergelung des Nitrilkautschuks ermöglichen.

Überraschenderweise wurde gefunden, dass die Aktivität von Metathese-Katalysatoren signifikant gesteigert werden kann, wenn man diese in Kombination mit Erdalkalimetallchloriden einsetzt. Derartige Katalysator-Systeme erweisen sich den bisher aus dem Stand der Technik bekannten und zuvor beschriebenen Systemen als überlegen. Insbesondere bei der Kreuzmetathese von Nitrilkautschuk zum Molekulargewichtsabbau zeigt sich, dass deutlich engere Molekulargewichtsverteilungen und niedrigere Molekulargewichte erhalten werden und gleichzeitig keinerlei Vergelung eintritt.

**Gegenstand der Erfindung** ist somit ein **Katalysator-System** umfassend einen Metathese-Katalysator, bei dem es sich um einen Komplexkatalysator auf Basis eines Metalls der 6. oder 8. Nebengruppe des Periodensystems handelt und der mindestens einen carbenartig an das Metall gebundenen Liganden aufweist, und mindestens ein Erdalkalimetallchlorid.

Im Rahmen dieser Anmeldung und Erfindung können alle zuvor genannten und im Folgenden genannten, allgemeinen oder in Vorzugsbereichen genannten Definitionen von Resten, Parametern oder Erläuterungen untereinander, also auch zwischen den jeweiligen Bereichen und Vorzugsbereichen in beliebiger Weise kombiniert werden.

Der im Rahmen dieser Anmeldung im Zusammenhang mit den verschiedenen Typen von Metathese-Katalysatoren verwendete Begriff "substituiert" bedeutet, dass ein Wasserstoff-Atom an einem angegebenen Rest oder Atom durch eine der jeweils angegebenen Gruppen ersetzt ist, mit der Maßgabe, dass die Wertigkeit des angegebenen Atoms nicht überschritten wird und die Substitution zu einer stabilen Verbindung führt.

Bei den erfindungsgemäß einzusetzenden Metathese-Katalysatoren handelt es sich um Komplexkatalysatoren auf Basis eines Metalls der 6. oder 8. Nebengruppe des Periodensystems. Diese Komplexkatalysatoren besitzen das gemeinsame Strukturmerkmal, dass sie mindestens einen Liganden aufweisen, der carbenartig an das Metall gebunden ist. In einer bevorzugten Ausführungsform weist der Komplexkatalysator zwei Carben-Liganden auf, d.h. zwei Liganden, die carbenartig an das Zentralmetall des Komplexes gebunden sind. Als Metalle der 6. und 8. Nebengruppe des Periodensystems sind Molybdän, Wolfram, Osmium und Ruthenium bevorzugt.

Bei den Erdalkalimetallchloriden handelt es sich um die Chloride der Erdalkalimetalle der 2. Hauptgruppe des Periodensystems. Als Erdalkalichloride werden bevorzugt Calciumchlorid und Magnesiumchlorid eingesetzt.

Als erfindungsgemäße Katalysator-Systeme sind beispielsweise Systeme geeignet, die **Katalysatoren der allgemeinen Formel (A) enthalten,** 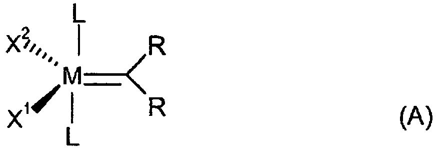 worin
- M: Osmium oder Ruthenium bedeutet,
- X¹ und X²: gleich oder verschieden sind und zwei anionische Liganden, darstellen,
- L: gleiche oder verschiedene neutrale Elektronen-Donor-Liganden darstellen,
- R: gleich oder verschieden sind und Wasserstoff, Alkyl, bevorzugt C₁-C₃₀-Alkyl, Cycloalkyl, bevorzugt C₃-C₂₀-Cycloalkyl, Alkenyl, bevorzugt C₂-C₂₀-Alkenyl, Alkinyl, bevorzugt C₂-C₂₀-Alkinyl, Aryl, bevorzugt C₆-C₂₄-Aryl, Carboxylat, bevorzugt C₁-C₂₀-Carboxylat, Alkoxy, bevorzugt C₁-C₂₀-Alkoxy, Alkenyloxy, bevorzugt C₂-C₂₀-Alkenyloxy, Alkinyloxy, bevorzugt C₂-C₂₀-Alkinyloxy, Aryloxy, bevorzugt C₆-C₂₄-Aryloxy, Alkoxycarbonyl, bevorzugt C₂-C₂₀-Alkoxycarbonyl, Alkylamino, bevorzugt C₁-C₃₀-Alkylamino, Alkylthio, bevorzugt C₁-C₃₀-Alkylthio, Arylthio, bevorzugt C₆-C₂₄-Arylthio, Alkylsulfonyl, bevorzugt C₁-C₂₀-Alkylsulfonyl, oder Alkylsulfinyl, bevorzugt C₁-C₂₀-Alkylsulfinyl darstellen, wobei diese Reste alle jeweils optional durch ein oder mehrere Alkyl-, Halogen-, Alkoxy-, Aryl- oder Heteroaryl-Reste substituiert sein können, oder alternativ beide Reste R unter Einbindung des gemeinsamen C-Atoms, an das sie gebunden sind, zu einer cyclischen Gruppe verbrückt sind, die aliphatischer oder aromatischer Natur sein kann, gegebenenfalls substituiert ist und ein oder mehrere Heteroatome enthalten kann.

Diese Katalysator-Systeme umfassen bevorzugt neben einem Katalysator der allgemeinen Formel (A) Calciumchlorid oder Magnesiumchlorid.

In bevorzugten Katalysatoren der allgemeinen Formel (A) ist der eine Rest R Wasserstoff und der andere Rest R bedeutet C₁-C₂₀-Alkyl, C₃-C₁₀-Cycloalkyl, C₂-C₂₀-Alkenyl, C₂-C₂₀-Alkinyl, C₆-C₂₄-Aryl, C₁-C₂₀-Carboxylat, C₁-C₂₀-Alkoxy, C₂-C₂₀-Alkenyloxy, C₂-C₂₀-Alkinyloxy, C₆-C₂₄-Aryloxy, C₂-C₂₀-Alkoxycarbonyl, C₁-C₃₀-Alkylamino, C₁-C₃₀-Alkylthio, C₆-C₂₄-Arylthio, C₁-C₂₀-Alkylsulfonyl oder C₁-C₂₀-Alkylsulfinyl, wobei diese Reste alle jeweils durch ein oder mehrere Alkyl-, Halogen-, Alkoxy-, Aryl- oder Heteroaryl-Reste substituiert sein können.

In den Katalysatoren der allgemeinen Formel (A) sind X¹ und X² gleich oder verschieden und stellen zwei Liganden, bevorzugt anionische Liganden, dar.

X¹ und X² können beispielsweise Wasserstoff, Halogen, Pseudohalogen, C₁₋C₂₀-Alkoxy, C₆-C₂₄-Aryloxy, C₃-C₂₀-Alkyldiketonat, C₆-C₂₄-Aryldiketonat, C₁-C₂₀-Carboxylat, C₁-C₂₀-Alkylsulfonat, C₆-C₂₄-Arylsulfonat, C₁-C₂₀-Alkylthiol, C₆-C₂₄-Arylthiol, C₁-C₂₀-Alkylsulfonyl oder C₁-C₂₀-Alkylsulfinyl-Reste bedeuten.

Die vorgenannten Reste X¹ und X² können ferner durch ein oder mehrere weitere Reste substituiert sein, beispielsweise durch Halogen, bevorzugt Fluor, C₁-C₁₀-Alkyl, C₁-C₁₀-Alkoxy oder C₆-C₂₄-Aryl, wobei auch diese Reste gegebenenfalls wiederum durch ein oder mehrere Substituenten substituiert sein können, die aus der Gruppe umfassend Halogen, bevorzugt Fluor, C₁-C₅-Alkyl, C₁-C₅-Alkoxy und Phenyl ausgewählt sind.

In einer bevorzugten Ausführungsform sind X und X¹ gleich oder verschieden und bedeuten Halogen, insbesondere Fluor, Chlor, Brom oder Jod, Benzoat, C₁-C₅-Carboxylat, C₁-C₅-Alkyl, Phenoxy, C₁-C₅-Alkoxy, C₁-C₅-Alkylthiol, C₆-C₂₄-Arylthiol, C₆-C₂₄-Aryl oder C₁-C₅-Alkylsulfonat. In einer besonders bevorzugten Ausführungsform sind X und X¹ identisch und bedeuten Halogen, insbesondere Chlor, CF₃COO, CH₃COO, CFH₂COO, (CH₃)₃CO, (CF₃)₂(CH₃)CO, (CF₃)(CH₃)₂CO, PhO (Phenoxy), MeO (Methoxy), EtO (Ethoxy), Tosylat (p-CH₃-C₆H₄-SO₃), Mesylat (2,4,6-Trimethylphenyl) oder CF₃SO₃ (Trifluormethansulfonat).

In der allgemeinen Formel (A) sind L gleiche oder verschiedene Liganden und sind neutrale Elektronen-Donoren.

Die beiden Liganden L können beispielsweise unabhängig voneinander einen Phosphin-, sulfonierten Phosphin-, Phosphat-, Phosphinit-, Phosphonit-, Arsin-, Stibin-, Ether-, Amin-, Amid-, Sulfoxid-, Carboxyl-, Nitrosyl-, Pyridin-, Thioether- oder einen Imidazolidin ("Im")-Liganden darstellen.

Bevorzugt bedeuten die beiden Liganden L unabhängig voneinander einen C₆-C₂₄-Aryl-, C₁-C₁₀-Alkyl- oder C₃-C₂₀-Cycloalkyl-Phosphin-Liganden, einen sulfonierten C₆-C₂₄-Aryl- oder sulfonierten C₁-C₁₀-Alkyl-Phosphin-Liganden, einen C₆-C₂₄-Aryl- oder C₁-C₁₀-Alkyl-Phosphinit-Liganden, einen C₆-C₂₄-Aryl- oder C₁-C₁₀-Alkylphosphonit-Liganden, einen C₆-C₂₄-Aryl- oder C₁-C₁₀-Alkylphosphit-Liganden, einen C₆-C₂₄-Aryl- oder C₁-C₁₀-Alkylarsin-Liganden, einen C₆-C₂₄-Aryl- oder C₁-C₁₀-Alkylamin-Liganden, einen Pyridin-Liganden, einen C₆-C₂₄-Aryl- oder C₁-C₁₀-Alkyl-Sulfoxid-Liganden, einen C₆-C₂₄-Aryl- oder C₁-C₁₀-Alkyl-Ether-Liganden oder einen C₆-C₂₄-Aryl- oder C₁-C₁₀-Alkylamid-Liganden, die alle jeweils durch eine Phenylgruppe substituiert sein können, die wiederum gegebenenfalls durch einen Halogen-, C₁-C₅-Alkyl- oder C₁-C₅-Alkoxy-Rest substituiert ist.

Die Bezeichnung "Phosphin" schließt beispielsweise PPh₃, P(p-Tol)₃, P(o-Tol)₃, PPh(CH₃)₂, P(CF₃)₃, P(p-FC₆H₄)₃, P(p-CF₃C₆H₄)₃, P(C₆H₄-SO₃Na)₃, P(CH₂C₆H₄-SO₃Na)₃, P(iso-Propyl)₃, P(CHCH₃(CH₂CH₃))₃, P(Cyclopentyl)₃, P(Cyclohexyl)₃, P(Neopentyl)₃ und P(Neophenyl)₃ ein.

Die Bezeichnung "Phosphinit" schließt beispielsweise Triphenylphosphinit, Tricyclohexylphosphinit, Triisopropylphosphinit und Methyldiphenylphosphinit ein.

Die Bezeichnung "Phosphit" schließt beispielsweise Triphenylphosphit, Tricyclohexylphosphit, Tri-tert.-Butylphosphit, Triisopropylphosphit und Methyldiphenylphosphit ein.

Die Bezeichnung "Stibin" schließt beispielsweise Triphenylstibin, Tricyclohexylstibin und Trimethylstiben ein.

Die Bezeichnung "Sulfonat" schließt beispielsweise Trifluoromethansulfonat, Tosylat und Mesylat ein.

Die Bezeichnung "Sulfoxid" schließt beispielsweise CH₃S(=O)CH₃ und (C₆H₅)₂SO ein.

Die Bezeichnung "Thioether" schließt beispielsweise CH₃SCH₃, C₆H₅SCH₃, CH₃OCH₂CH₂SCH₃ und Tetrahydrothiophen ein.

Die Bezeichnung "Pyridin" soll im Rahmen dieser Anmeldung als Oberbegriff sämtliche stickstoffhaltigen Liganden einschließen wie sie z.B. von Grubbs in der WO-A-03/011455 genannten werden. Beispiele hierfür sind: Pyridin, Picoline (α-, β-, und γ-Picolin), Lutidine (2,3-, 2,4-, 2,5-, 2,6-, 3,4- und 3,5-Lutidin), Collidin (2,4,6-Trimethylpyridin), Trifluormethylpyridin, Phenylpyridin, 4-(Dimethylamino)pyridin, Chlorpyridine, Brompyridine, Nitropyridine, Chinolin, Pyrimidin, Pyrrol, Imidazol und Phenylimidazol.

Handelt es sich bei einem oder beiden der Liganden L um einen Imidazolidinrest (Im), so weist dieser üblicherweise eine Struktur der allgemeinen Formeln (IIa) oder (IIb) auf, 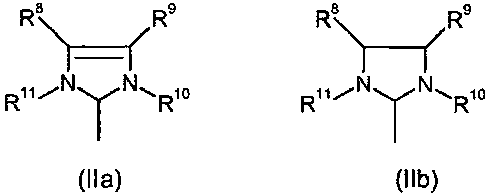 worin
- R⁸, R⁹, R¹⁰, R¹¹: gleich oder verschieden sind und Wasserstoff, geradkettiges oder verzweigtes C₁-C₃₀-Alkyl, C₃-C₂₀-Cycloalkyl, C₂-C₂₀-Alkenyl, C₂-C₂₀-Alkinyl, C₆-C₂₄-Aryl, C₁-C₂₀-Carboxylat, C₁-C₂₀-Alkoxy, C₂-C₂₀-Alkenyloxy, C₂-C₂₀-Alkinyloxy, C₆-C₂₀-Aryloxy, C₂-C₂₀-Alkoxycarbonyl, C₁-C₂₀-Alkylthio, C₆-C₂₀-Arylthio, C₁-C₂₀-Alkylsulfonyl, C₁-C₂₀-Alkylsulfonat, C₆-C₂₀-Arylsulfonat oder C₁-C₂₀-Alkylsulfinyl bedeuten.

Gegebenenfalls kann einer oder mehrere der Reste R⁸, R⁹, R¹⁰, R¹¹ unabhÃ¤ngig voneinander durch einen oder mehrere Substituenten, vorzugsweise geradkettiges oder verzweigtes C₁-C₁₀-Alkyl, C₃-C₈-Cycloalkyl, C₁-C₁₀-Alkoxy oder C₆-C₂₄-Aryl substituiert sein, wobei diese vorgenannten Substituenten wiederum durch ein oder mehrere Reste, vorzugsweise ausgewÃ¤hlt aus der Gruppe Halogen, insbesondere Chlor oder Brom, C₁-C₅-Alkyl, C₁-C₅-Alkoxy und Phenyl substituiert sein kÃ¶nnen.

Nur zur Klarsfellung sei hinzugefÃ¼gt, dass die in den allgemeinen Formeln (IIa) und (IIb) im Rahmen dieser Anmeldung dargestellten Strukturen des Imidazolidinrests mit den in der Literatur fÃ¼r diesen Imidazolidinrest (Im) hÃ¤ufig auch zu findenden Strukturen (IIa') und (IIb'), die den Carben-Charakter des Imidazolidinrests hervorheben, gleichbedeutend sind. Dies gilt entsprechend auch fÃ¼r die zugehÃ¶rigen bevorzugten, nachfolgend noch dargestellten Strukturen (IIIa)-(IIIf).

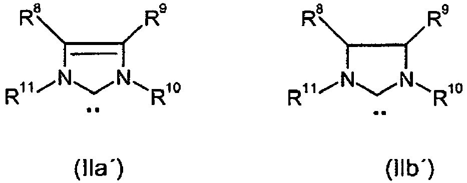

In einer bevorzugten AusfÃ¼hrungsform der Katalysatoren der allgemeinen Formel (A) bedeuten R⁸ und R⁹ unabhÃ¤ngig voneinander Wasserstoff, C₆-C₂₄-Aryl, besonders bevorzugt Phenyl, geradkettiges oder verzweigtes C₁-C₁₀-Alkyl, besonders bevorzugt Propyl oder Butyl, oder bilden zusammen unter Einschluss der Kohlenstoffatome, an die sie gebunden sind, einen Cycloalkyl- oder Aryl-Rest, wobei alle vorgenannten Reste gegebenenfalls wiederum durch ein oder mehrere weitere Reste substituiert sein kÃ¶nnen, ausgewÃ¤hlt aus der Gruppe umfassend geradkettiges oder verzweigtes C₁-C₁₀-Alkyl, C₁-C₁₀-Alkoxy, C₆-C₂₄-Aryl und eine funktionelle Gruppe ausgewÃ¤hlt aus der Gruppe von Hydroxy, Thiol, Thioether, Keton, Aldehyd, Ester, Ether, Amin, Imin, Amid, Nitro, CarbonsÃ¤ure, Disulfid, Carbonat, Isocyanat, Carbodiimid, Carboalkoxy, Carbamat und Halogen.

In einer bevorzugten AusfÃ¼hrungsform der Katalysatoren der allgemeinen Formel (A) sind ferner die Reste R¹⁰ und R¹¹ gleich oder verschieden und bedeuten geradkettiges oder verzweigtes C₁-C₁₀-Alkyl, besonders bevorzugt i-Propyl oder Neopentyl, C₃-C₁₀-Cycloalkyl, bevorzugt Adamantyl, C₆-C₂₄-Aryl, besonders bevorzugt Phenyl, C₁-C₁₀-Alkylsulfonat, besonders bevorzugt Methansulfonat, C₆-C₁₀-Arylsulfonat, besonders bevorzugt p-Toluolsulfonat.

Gegebenenfalls sind die vorgenannten Reste als Bedeutungen von R¹⁰ und R¹¹ substituiert durch einen oder mehrere weitere Reste ausgewählt aus der Gruppe umfassend geradkettiges oder verzweigtes C₁-C₅-Alkyl, insbesondere Methyl, C₁-C₅-Alkoxy, Aryl und eine funktionelle Gruppe ausgewählt aus der Gruppe von Hydroxy, Thiol, Thioether, Keton, Aldehyd, Ester, Ether, Amin, Imin, Amid, Nitro, Carbonsäure, Disulfid, Carbonat, Isocyanat, Carbodiimid, Carboalkoxy, Carbamat und Halogen.

Insbesondere können die Reste R¹⁰ und R¹¹ gleich oder verschieden sein und bedeuten i-Propyl, Neopentyl, Adamantyl, Mesityl oder 2,6-Diisopropylphenyl.

Besonders bevorzugte Imidazolidinreste (Im) haben die nachfolgenden Strukturen (IIIa) bis (IIIf), wobei Mes jeweils für 2,4,6-Trimethylphenyl steht oder alternativ in allen Fällen für 2,6-Diisopropylphenyl.

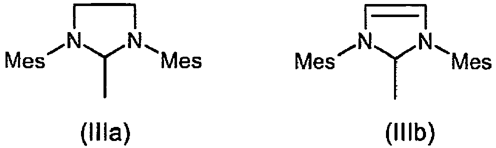

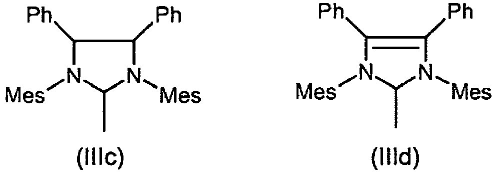

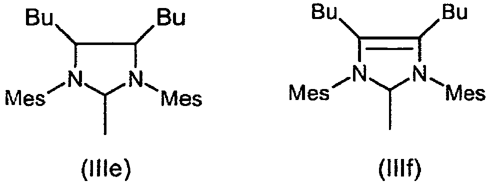

Verschiedenste Vertreter der Katalysatoren der Formel (A) sind prinzipiell bekannt, so z.B. aus der WO-A-96/04289 und der WO-A-97/06185.

Alternativ zu den bevorzugten Im-Resten steht einer oder beide Liganden L in der allgemeinen Formel (A) bevorzugt auch für gleiche oder verschiedene Trialkylphosphin-Liganden, worin mindestens eine der Alkylgruppen eine sekundäre Alkylgruppe oder ein Cycloalkylgruppe darstellt, bevorzugt iso-Propyl, iso-Butyl, sec-Butyl, Neopentyl, Cyclopentyl oder Cyclohexyl.

Besonders bevorzugt stehen in der allgemeinen Formel (A) einer oder beide Liganden L für einen Trialkylphosphin-Liganden, worin mindestens eine der Alkylgruppen eine sekundäre Alkylgruppe oder ein Cycloalkylgruppe darstellt, bevorzugt iso-Propyl, iso-Butyl, sec-Butyl, Neopentyl, Cyclopentyl oder Cyclohexyl.

Besonders bevorzugt sind Katalysator-Systeme, die einen der beiden folgenden Katalysatoren umfassen, die unter die allgemeine Formel (A) fallen, und die Strukturen (IV) (Grubbs (1)-Katalysator) und (V) (Grubbs (II)-Katalysator), wobei Cy für Cyclohexyl steht, besitzen.

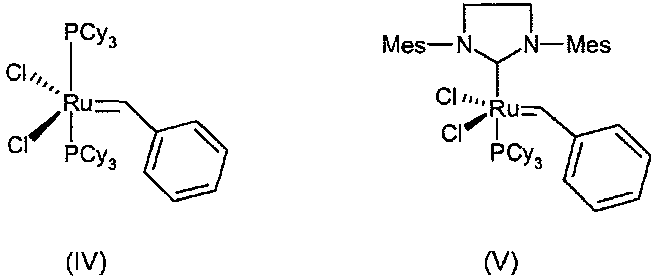

In einer weiteren Ausführungsform werden **Katalysatoren der allgemeinen Formel (A1)** eingesetzt, 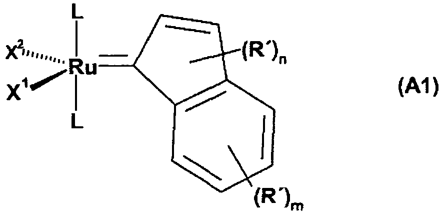 worin
- X¹, X² und L: die gleichen allgemeinen, bevorzugten und besonders bevorzugten Bedeutungen haben können wie in der allgemeinen Formel (A),
- n: gleich 0, 1 oder 2 ist,
- m: gleich 0, 1, 2, 3 oder 4 ist und
- R': gleich oder verschieden sind und Alkyl-, Cycloalkyl-, Alkenyl-, Alkinyl-, Aryl-, Alkoxy-, Alkenyloxy-, Alkinyloxy-, Aryloxy-, Alkoxycarbonyl-, Alkylamino-, Alkylthio-, Arylthio-, Alkylsulfonyl- oder Alkylsulfinyl-Reste bedeuten, die alle jeweils durch ein oder mehrere Alkyl-, Halogen-, Alkoxy-, Aryl- oder Heteroaryl-Reste substituiert sein können.

Als bevorzugter Katalysator, der unter die allgemeine Formel (A1) fällt, kann beispielsweise derjenige der folgenden Formel (VI) eingesetzt werden, wobei Mes jeweils für 2,4,6-Trimethylphenyl und Ph für Phenyl steht.

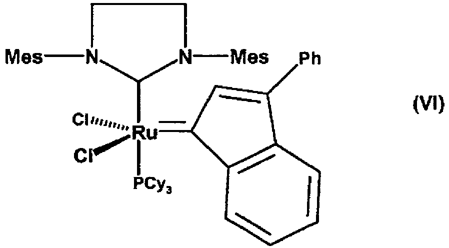

Dieser in der Literatur auch als "Nolan-Katalysator" bezeichnete Katalysator ist beispielsweise aus WO-A-2004/112951 bekannt.

Die besonders bevorzugten erfindungsgemäßen Katalysator-Systeme umfassen neben den Katalysatoren der Formeln (IV), (V) oder (VI) insbesondere Calciumchlorid oder Magnesiumchlorid.

Als erfindungsgemäße Katalysator-Systeme sind ferner auch Systeme geeignet, die **Katalysatoren der allgemeinen Formel (B)** umfassen, 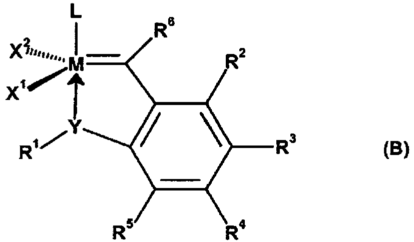 worin
- M: Ruthenium oder Osmium bedeutet,
- X¹ und X²: gleiche oder verschiedene Liganden, bevorzugt anionische Liganden sind,
- Y: Sauerstoff (O), Schwefel (S), einen Rest N-R¹ oder einen Rest P-R¹ bedeutet, wobei R¹ die nachfolgend genannten Bedeutungen besitzt,
- R¹: einen Alkyl-, Cycloalkyl-, Alkenyl-, Alkinyl-, Aryl-, Alkoxy-, Alkenyloxy-, Alkinyloxy-, Aryloxy-, Alkoxycarbonyl-, Alkylamino-, Alkylthio-, Arylthio-, Alkylsulfonyl- oder Alkylsulfinyl-Rest darstellt, die alle jeweils optional durch ein oder mehrere Alkyl-, Halogen-, Alkoxy-, Aryl- oder Heteroaryl-Reste substituiert sein können,
- R², R³, R⁴ und R⁵: gleich oder verschieden sind und Wasserstoff, organische oder anorganische Reste darstellen,
- R⁶: Wasserstoff, einen Alkyl-, Alkenyl-, Alkinyl- oder einen Aryl-Rest bedeutet und
- L: ein Ligand ist, der die gleichen Bedeutungen besitzt wie für die Formel (A) genannt.

Bevorzugterweise umfassen diese Katalysator-Systeme neben dem Katalysator der allgemeinen Formel (B) Calciumchlorid oder Magnesiumchlorid.

Die Katalysatoren der allgemeinen Formel (B) sind prinzipiell bekannt. Vertreter dieser Verbindungsklasse sind die Katalysatoren, die von Hoveyda et al. in US 2002/0107138 A1 und Angew. Chem. Int. Ed. 2003, 42, 4592 beschrieben sind, und die Katalysatoren, die von Grela in WO-A-2004/035596**,** Eur. J. Org. Chem 2003, 963-966 und Angew. Chem. Int. Ed. 2002, 41, 4038 sowie in J. Org. Chem. 2004, 69, 6894-96 und Chem. Enr. J 2004, 10, 777-784 beschrieben werden. Die Katalysatoren sind käuflich erhältlich bzw. gemäß den angegebenen Literaturstellen herstellbar.

In den Katalysatoren der allgemeinen Formel (B) steht L für einen Liganden, der eine Elektronen-Donor-Funktion besitzt und die gleichen allgemeinen, bevorzugten und besonders bevorzugten Bedeutungen annehmen kann wie L in der allgemeinen Formel (A).

Darüber hinaus gilt, dass L in der allgemeinen Formel (B) bevorzugt einen P(R⁷)₃ Rest, wobei R⁷ unabhängig voneinander C₁-C₆ Alkyl, C₃-C₈-Cycloalkyl oder Aryl bedeuten, oder aber einen gegebenenfalls substituierten Imidazolidinrest ("Im") darstellt.

**C₁-C₆-Alkyl** steht beispielsweise für Methyl, Ethyl, n-Propyl, iso-Propyl, n-Butyl, sec.-Butyl, tert.-Butyl, n-Pentyl, 1-Methylbutyl, 2-Methylbutyl, 3-Methylbutyl, neo-Pentyl, 1-Ethylpropyl und n-Hexyl.

**C₃-C₈-Cycloalkyl** umfasst Cyclopropyl, Cyclobutyl, Cylopentyl, Cyclohexyl, Cycloheptyl und Cyclooctyl.

**Aryl** umfasst einen aromatischen Rest mit 6 bis 24 Gerüstkohlenstoffatomen. Als bevorzugte mono-, bi- oder tricyclische carbocyclische aromatische Reste mit 6 bis 10 Gerüstkohlenstoffatomen seien beispielsweise Phenyl, Biphenyl, Naphthyl, Phenanthrenyl oder Anthracenyl genannt.

Der Imidazolidinrest (**Im**) weist üblicherweise eine Struktur der allgemeinen Formeln (IIa) oder (IIb) auf, 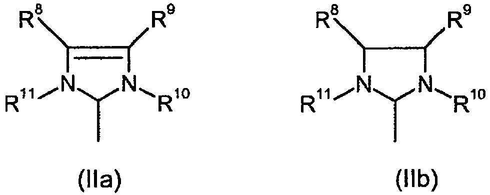 worin
- R⁸, R⁹, R¹⁰, R¹¹: gleich oder verschieden sind und Wasserstoff, geradkettiges oder verzweigtes C₁-C₃₀-Alkyl, C₃-C₂₀-Cycloalkyl, C₂-C₂₀-Alkenyl, C₂-C₂₀-Alkinyl, C₆-C₂₄-Aryl, C₁-C₂₀-Carboxylat, C₁-C₂₀-Alkoxy, C₂-C₂₀-Alkenyloxy, C₂-C₂₀-Alkinyloxy, C₆-C₂₀-Aryloxy, C₂-C₂₀-Alkoxycarbonyl, C₁-C₂₀-Alkylthio, C₆-C₂₀-Arylthio, C₁-C₂₀-Alkylsulfonyl, C₁-C₂₀-Alkylsulfonat, C₆-C₂₀-Arylsulfonat oder C₁-C₂₀-Alkylsulfinyl bedeuten.

Gegebenenfalls kann einer oder mehrere der Reste R⁸, R⁹, R¹⁰, R¹¹ unabhängig voneinander durch einen oder mehrere Substituenten, vorzugsweise geradkettiges oder verzweigtes C₁-C₁₀-Alkyl, C₃-C₈-Cycloalkyl, C₁-C₁₀-Alkoxy oder C₆-C₂₄-Aryl substituiert sein, wobei diese vorgenannten Substituenten wiederum durch ein oder mehrere Reste, vorzugsweise ausgewählt aus der Gruppe Halogen, insbesondere Chlor oder Brom, C₁-C₅-Alkyl, C₁-C₅-Alkoxy und Phenyl substituiert sein können.

In einer bevorzugten Ausführungsform des erfindungsgemäßen Katalysator-Systems werden Katalysatoren der allgemeinen Formel (B) eingesetzt, worin R⁸ und R⁹ unabhängig voneinander Wasserstoff, C₆-C₂₄-Aryl, besonders bevorzugt Phenyl, geradkettiges oder verzweigtes C₁-C₁₀-Alkyl, besonders bevorzugt Propyl oder Butyl, bedeuten oder zusammen unter Einschluss der Kohlenstoffatome, an die sie gebunden sind, einen Cycloalkyl- oder Aryl-Rest bilden, wobei alle vorgenannten Reste gegebenenfalls wiederum durch ein oder mehrere weitere Reste substituiert sein können, ausgewählt aus der Gruppe umfassend geradkettiges oder verzweigtes C₁-C₁₀-Alkyl, C₁-C₁₀-Alkoxy, C₆-C₂₄-Aryl und eine funktionelle Gruppe ausgewählt aus der Gruppe von Hydroxy, Thiol, Thioether, Keton, Aldehyd, Ester, Ether, Amin, Imin, Amid, Nitro, Carbonsäure, Disulfid, Carbonat, Isocyanat, Carbodiimid, Carboalkoxy, Carbamat und Halogen.

In einer weiteren bevorzugten Ausführungsform des erfindungsgemäßen Katalysator-Systems werden Katalysatoren der allgemeinen Formel (B) eingesetzt, worin die Reste R¹⁰ und R¹¹ gleich oder verschieden sind und geradkettiges oder verzweigtes C₁-C₁₀-Alkyl, besonders bevorzugt i-Propyl oder Neopentyl, C₃-C₁₀-Cycloalkyl, bevorzugt Adamantyl, C₆-C₂₄-Aryl, besonders bevorzugt Phenyl, C₁-C₁₀-Alkylsulfonat, besonders bevorzugt Methansulfonat, oder C₆-C₁₀-Arylsulfonat, besonders bevorzugt p-Toluolsulfonat bedeuten.

Gegebenenfalls sind die vorgenannten Reste als Bedeutungen von R¹⁰ und R¹¹ substituiert durch einen oder mehrere weitere Reste ausgewählt aus der Gruppe umfassend geradkettiges oder verzweigtes C₁-C₅-Alkyl, insbesondere Methyl, C₁-C₅-Alkoxy, Aryl und eine funktionelle Gruppe ausgewählt aus der Gruppe von Hydroxy, Thiol, Thioether, Keton, Aldehyd, Ester, Ether, Amin, Imin, Amid, Nitro, Carbonsäure, Disulfid, Carbonat, Isocyanat, Carbodiimid, Carboalkoxy, Carbamat und Halogen.

Insbesondere können die Reste R¹⁰ und R¹¹ gleich oder verschieden sein und bedeuten i-Propyl, Neopentyl, Adamantyl oder Mesityl.

Besonders bevorzugte Imidazolidinreste (Im) haben die bereits zuvor genannten Strukturen (IIIa-IIIf), wobei Mes jeweils für 2,4,6-Trimethylphenyl steht.

In den Katalysatoren der allgemeinen Formel (B) sind X¹ und X² gleich oder verschieden und können beispielsweise Wasserstoff, Halogen, Pseudohalogen, geradkettige oder verzweigte C₁-C₃₀-Alkyl, C₆-C₂₄-Aryl, C₁-C₂₀-Alkoxy, C₆-C₂₄-Aryloxy, C₃-C₂₀-Alkyldiketonat, C₆-C₂₄-Aryldiketonat, C₁-C₂₀-Carboxylat, C₁-C₂₀-Alkylsulfonat, C₆-C₂₄-Arylsulfonat, C₁-C₂₀-Alkylthiol, C₆-C₂₄-Arylthiol, C₁-C₂₀-Alkylsulfonyl oder C₁-C₂₀-Alkylsulfinyl bedeuten.

Die vorgenannten Reste X¹ und X² können ferner durch ein oder mehrere weitere Reste substituiert sein, beispielsweise durch Halogen, bevorzugt Fluor, C₁-C₁₀-Alkyl, C₁-C₁₀-Alkoxy oder C₆-C₂₄-Aryl-Reste, wobei auch die letzteren Reste gegebenenfalls wiederum durch ein oder mehrere Substituenten substituiert sein können, die aus der Gruppe umfassend Halogen, bevorzugt Fluor, C₁-C₅-Alkyl, C₁-C₅-Alkoxy und Phenyl ausgewählt sind.

In einer bevorzugten Ausführungsform sind X¹ und X² gleich oder verschieden und bedeuten Halogen, insbesondere Fluor, Chlor, Brom oder Jod, Benzoat, C₁-C₅-Carboxylat, C₁-C₅-Alkyl, Phenoxy, C₁-C₅-Alkoxy, C₁-C₅-Alkylthiol, C₆-C₂₄-Arylthiol, C₆-C₂₄-Aryl oder C₁-C₅-Alkylsulfonat.

In einer besonders bevorzugten Ausführungsform sind X¹ und X² identisch und bedeuten Halogen, insbesondere Chlor, CF₃COO, CH₃COO, CFH₂COO, (CH₃)₃CO, (CF₃)₂(CH₃)CO, (CF₃)(CH₃)₂CO, PhO (Phenoxy), MeO (Methoxy), EtO (Ethoxy), Tosylat (p-CH₃-C₆H₄-SO₃), Mesylat (2,4,6-Trimethylphenyl) oder CF₃SO₃ (Trifluormethansulfonat).

In der allgemeinen Formel (B) bedeutet der **Rest R¹** einen Alkyl-, Cycloalkyl-, Alkenyl-, Alkinyl-, Aryl-, Alkoxy-, Alkenyloxy-, Alkinyloxy-, Aryloxy-, Alkoxycarbonyl-, Alkylamino,-, Alkylthio-, Arylthio-, Alkylsulfonyl- oder Alkylsulfinyl-Rest, die alle jeweils optional durch ein oder mehrere Alkyl-, Halogen-, Alkoxy-, Aryl- oder Heteroaryl-Reste substituiert sein können.

Üblicherweise bedeutet der Rest R¹ einen C₁-C₃₀-Alkyl, C₃-C₂₀-Cylcoalkyl, C₂-C₂₀-Alkenyl, C₂-C₂₀-Alkinyl, C₆-C₂₄-Aryl, C₁-C₂₀-Alkoxy, C₂-C₂₀-Alkenyloxy, C₂-C₂₀-Alkinyloxy, C₆-C₂₄-Aryloxy, C₂-C₂₀-Alkoxycarbonyl, C₁-C₂₀-Alkylamino-, C₁-C₂₀-Alkylthio, C₆-C₂₄-Arylthio, C₁-C₂₀-Alkylsulfonyl oder C₁-C₂₀-Alkylsulfinyl Rest, die alle jeweils optional durch ein oder mehrere Alkyl-, Halogen-, Alkoxy-, Aryl- oder Heteroaryl-Reste substituiert sein können.

Bevorzugt steht R¹ für einen C₃-C₂₀-Cylcoalkyl-Rest, einen C₆-C₂₄-Aryl-Rest oder einen geradkettigen oder verzweigten C₁-C₃₀-Alkyl-Rest, wobei letztere gegebenenfalls durch ein oder mehrere Doppel- oder Dreifachbindungen oder auch ein oder mehrere Heteroatome, bevorzugt Sauerstoff oder Stickstoff, unterbrochen sein kann. Besonders bevorzugt steht R¹ für einen geradkettigen oder verzweigten C₁-C₁₂-Alkyl-Rest.

Der C₃-C₂₀-Cycloalkyl-Rest umfasst beispielsweise Cyclopropyl, Cyclobutyl, Cylopentyl, Cyclohexyl, Cycloheptyl und Cyclooctyl.

Bei dem C₁-C₁₂-Alkyl-Rest kann es sich beispielsweise um Methyl, Ethyl, n-Propyl, iso-Propyl, n-Butyl, sec.-Butyl, tert.-Butyl, n-Pentyl, 1-Methylbutyl, 2-Methylbutyl, 3-Methylbutyl, neo-Pentyl, 1-Ethylpropyl, n-Hexyl, n-Heptyl, n-Octyl, n-Decyl oder n-Dodecyl handeln. Insbesondere steht R¹ für Methyl oder Isopropyl.

Der C₆-C₂₄-Aryl-Rest steht für einen aromatischen Rest mit 6 bis 24 Gerüstkohlenstoffatomen. Als bevorzugte mono-, bi- oder tricyclische carbocyclische aromatische Reste mit 6 bis 10 Gerüstkohlenstoffatomen seien beispielsweise Phenyl, Biphenyl, Naphthyl, Phenanthrenyl oder Anthracenyl genannt.

In der allgemeinen Formel (B) sind die **Reste R², R³**, **R⁴ und R⁵** gleich oder verschieden und können Wasserstoff, organische oder anorganische Reste darstellen.

In einer geeigneten Ausführungsform sind R², R³, R⁴, R⁵ gleich oder verschieden und bedeuten Wasserstoff, Halogen, Nitro, CF₃, Alkyl-, Cycloalkyl-, Alkenyl-, Alkinyl-, Aryl-, Alkoxy-, Alkenyloxy-, Alkinyloxy-, Aryloxy-, Alkoxycarbonyl-, Alkylamino-, Alkylthio-, Arylthio, Alkylsulfonyl- oder Alkylsulfinyl-Reste darstellen, die alle jeweils optional durch ein oder mehrere Alkyl-, Alkoxy-, Halogen-, Aryl- oder Heteroaryl-Reste substituiert sein können.

Üblicherweise sind R², R³, R⁴, R⁵ gleich oder verschieden und bedeuten Wasserstoff, Halogen, bevorzugt Chlor oder Brom, Nitro, CF₃, C₁-C₃₀-Alkyl, C₃-C₂₀-Cylcoalkyl, C₂-C₂₀-Alkenyl, C₂-C₂₀-Alkinyl, C₆-C₂₄-Aryl, C₁-C₂₀-Alkoxy, C₂-C₂₀-Alkenyloxy, C₂-C₂₀-Alkinyloxy, C₆-C₂₄-Aryloxy, C₂-C₂₀-Alkoxycarbonyl, C₁-C₂₀-Alkylamino-, C₁-C₂₀-Alkylthio, C₆-C₂₄-Arylthio, C₁-C₂₀-Alkylsulfonyl oder C₁-C₂₀-Alkylsulfinyl Reste, die alle jeweils optional durch ein oder mehrere C₁-C₃₀-Alkyl-, C₁-C₂₀-Alkoxy-, Halogen-, C₆-C₂₄-Aryl- oder Heteroaryl-Reste substituiert sein können.

In einer besonders bewährten Ausführungsform sind R², R³, R⁴, R⁵ sind gleich oder verschieden und stehen für Nitro, geradkettige oder verzweigte C₁-C₃₀-Alkyl-, C₅-C₂₀-Cylcoalkyl-, geradkettige oder verzweigte C₁-C₂₀-Alkoxy-Reste oder C₆-C₂₄-Aryl-Reste, bevorzugt Phenyl oder Naphthyl. Die C₁-C₃₀-Alkyl-Reste sowie C₁-C₂₀-Alkoxy-Reste können optional durch ein oder mehrere Doppel- oder Dreifachbindungen oder auch ein oder mehrere Heteroatome, bevorzugt Sauerstoff oder Stickstoff, unterbrochen sein.

Ferner können auch zwei oder mehr der Reste R², R³, R⁴ oder R⁵ über aliphatische oder aromatische Strukturen verbrückt sein. R³ und R⁴ können beispielsweise unter Einbeziehung der Kohlenstoff-Atome, an die sie im Phenylring der Formel (B) gebunden sind, einen ankondensierten Phenylring bilden, so dass insgesamt eine Naphthylstruktur resultiert.

In der allgemeinen Formel (B) bedeutet der **Rest R⁶** Wasserstoff, einen Alkyl-, Alkenyl-, Alkinyl- oder einen Aryl-Rest. Bevorzugt bedeutet R⁶ Wasserstoff, einen C₁-C₃₀-Alkyl, einen C₂-C₂₀-Alkenyl-, einen C₂-C₂₀-Alkinyl oder einen C₆-C₂₄-Aryl-Rest. Besonders bevorzugt ist R⁶ Wasserstoff.

Ferner geeignet sind Katalysator-Systeme, die **Katalysatoren gemäß der allgemeinen Formel (B1)** umfassen, 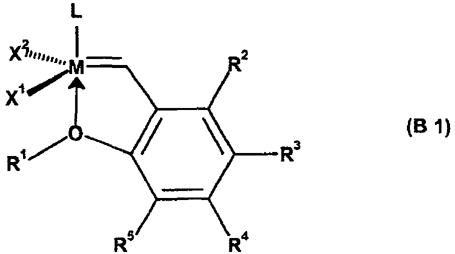 worin
- M, L, X¹, X², R¹, R², R³, R⁴ und R⁵: die für die allgemeine Formel (B) genannten allgemeinen, bevorzugten und besonders bevorzugten Bedeutungen besitzen können.

Bevorzugterweise umfassen diese Katalysator-Systeme neben dem Katalysator der allgemeinen Formel (B1) Calciumchlorid oder Magnesiumchlorid.

Die Katalysatoren der allgemeinen Formel (B1) sind z.B. aus US 2002/0107138 A1 (Hoveyda et al.) prinzipiell bekannt und können nach dort angegebenen Herstellverfahren erhalten werden.

Besonders bevorzugt sind Katalysator-Systeme, die Katalysatoren der allgemeinen Formel (B1), umfassen, wobei
- M: Ruthenium darstellt,
- X¹ und X²: gleichzeitig Halogen, insbesondere gleichzeitig Chlor bedeuten,
- R¹: für einen geradkettigen oder verzweigten C₁-C₁₂ Alkylrest steht,
- R², R³, R⁴, R⁵: die für die allgemeine Formel (B) genannten allgemeinen und bevorzugten Bedeutungen besitzen und
- L: die für die allgemeine Formel (B) genannten allgemeinen und bevorzugten Bedeutungen besitzt.

Insbesondere bevorzugt sind Katalysator-Systeme, die Katalysatoren der allgemeinen Formel (B1), umfassen, wobei
- M: Ruthenium darstellt,
- X¹ und X²: gleichzeitig Chlor bedeuten,
- R¹: für einen Isopropyl-Rest steht,
- R², R³, R⁴, R⁵: alle Wasserstoff bedeuten und
- L: einen gegebenenfalls substituierten Imidazolidin-Rest der Formeln (IIa) oder (IIb) darstellt, 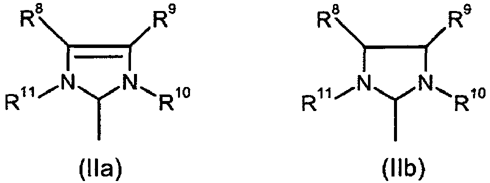
worin
- R⁸, R⁹, R¹⁰, R¹¹: gleich oder verschieden sind und Wasserstoff, geradkettiges oder verzweigtes C₁-C₃₀-Alkyl, C₃-C₂₀-Cylcoalkyl, C₂-C₂₀-Alkenyl, C₂-C₂₀-Alkinyl, C₆-C₂₄-Aryl, C₁-C₂₀-Carboxylat, C₁-C₂₀-Alkoxy, C₂-C₂₀-Alkenyloxy, C₂-C₂₀-Alkinyloxy, C₆-C₂₄-Aryloxy, C₂-C₂₀-Alkoxycarbonyl, C₁-C₂₀-Alkylthio, C₆-C₂₄-Arylthio, C₁-C₂₀-Alkylsulfonyl, C₁-C₂₀-Alkylsulfonat, C₆-C₂₄-Arylsulfonat oder C₁-C₂₀-Alkylsulfinyl bedeuten, wobei die vorgenannten Reste jeweils durch einen oder mehrere Substituenten, vorzugsweise geradkettiges oder verzweigtes C₁-C₁₀-Alkyl, C₃-C₈-Cycloalkyl, C₁-C₁₀-Alkoxy oder C₆-C₂₄-Aryl substituiert sein können, wobei auch diese vorgenannten Substituenten wiederum durch ein oder mehrere Reste, vorzugsweise ausgewählt aus der Gruppe Halogen, insbesondere Chlor oder Brom, C₁-C₅-Alkyl, C₁-C₅-Alkoxy und Phenyl substituiert sein können.

Ganz besonders bevorzugt ist ein Katalysator-System umfassend Calciumchlorid oder Magnesiumchlorid und einen Katalysator, der unter die allgemeine Strukturformel (B1) fällt und die Formel (VII) besitzt, wobei Mes jeweils für 2,4,6-Trimethylphenyl steht.

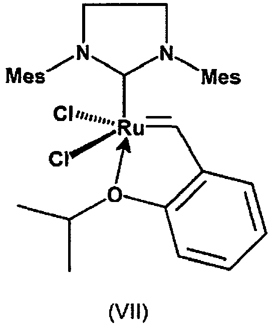

Dieser Katalysator (VII) wird in der Literatur auch als "Hoveyda-Katalysator" bezeichnet.

Weiterhin geeignete Katalysator-Systeme sind solche, die Calciumchlorid oder Magnesiumchlorid umfassen sowie einen Katalysator, der unter die allgemeine Strukturformel (B1) fällt und eine der folgenden Formeln (VIII), (IX), (X), (XI), (XII), (XIII), (XIV) und (XV) besitzt, wobei Mes jeweils 2,4,6-Trimethylphenyl bedeutet.

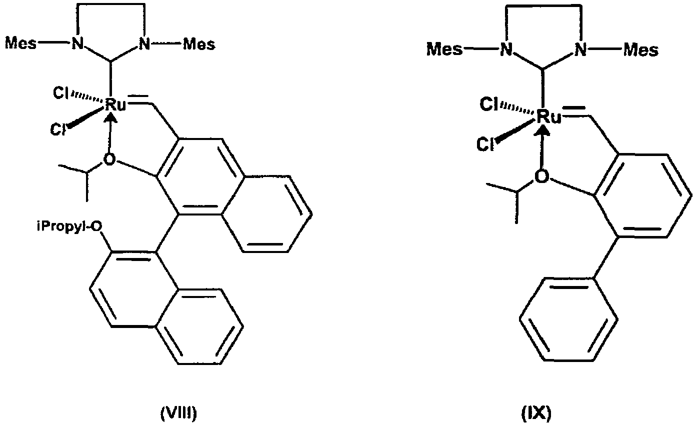

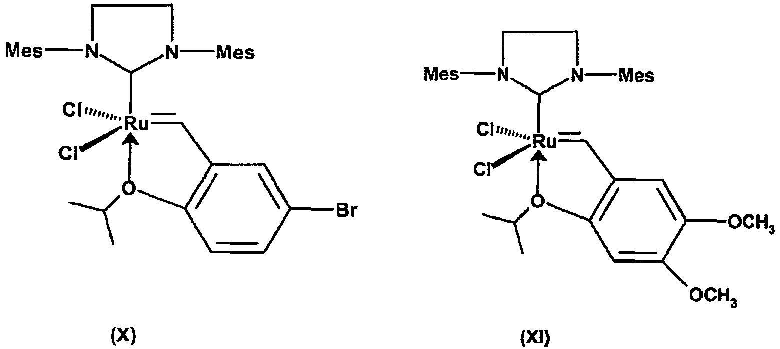

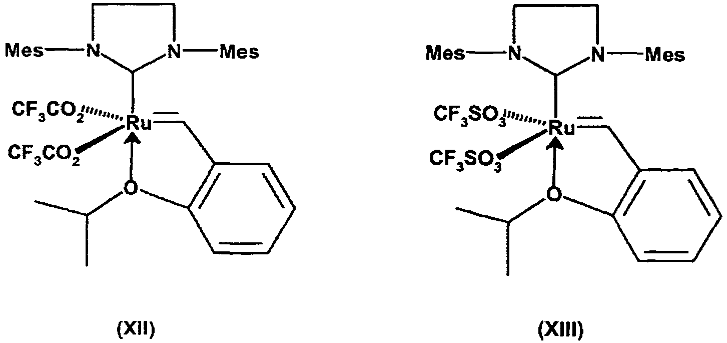

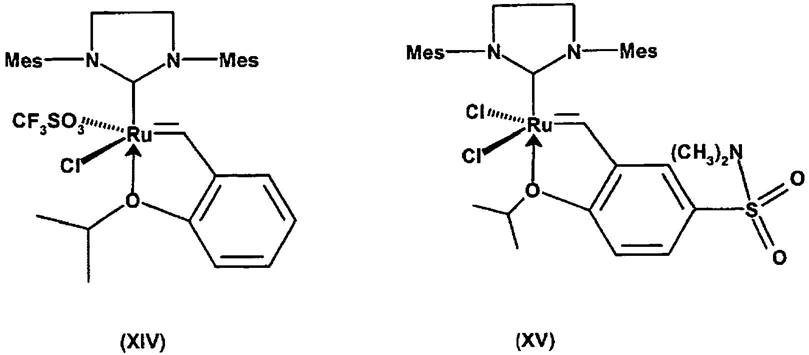

Ein weiteres erfindungsgemäßes Katalysator-System umfasst einen **Katalysator gemäß der allgemeinen Formel (B2),** 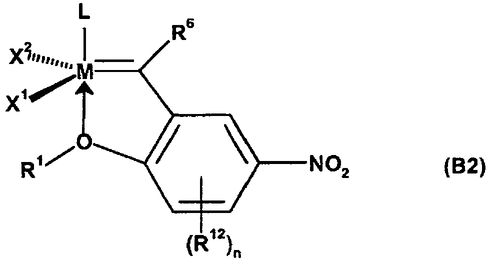 worin
- M, L, X¹, X², R¹ und R⁶: die für die Formel (B) genannten allgemeinen und bevorzugten Bedeutungen haben,
- R¹²: gleich oder verschieden sind und die für die Reste R², R³, R⁴ und R⁵ in der Formel (B) genannten allgemeinen und bevorzugten Bedeutungen, ausgenommen Wasserstoff, besitzen und
- n: gleich 0, 1, 2 oder 3 ist.

Bevorzugt umfassen diese Katalysator-Systeme neben dem Katalysator der allgemeinen Formel (B2) Calciumchlorid oder Magnesiumchlorid.

Die Katalysatoren der allgemeinen Formel (B2) sind beispielsweise aus WO-A-2004/035596 **(Grela)** prinzipiell bekannt und können nach dort angegebenen Herstellverfahren erhalten werden.

Besonders bevorzugt sind Katalysator-Systeme, die einen Katalysator der allgemeinen Formel (B2) umfassen, wobei
- M: Ruthenium darstellt,
- X¹ und X²: gleichzeitig Halogen, insbesondere gleichzeitig Chlor bedeuten,
- R¹: für einen geradkettigen oder verzweigten C₁-C₁₂ Alkylrest steht,
- R¹²: die für die allgemeine Formel (B2) genannten Bedeutungen besitzt,
- n: gleich 0, 1, 2 oder 3 ist,
- R⁶: Wasserstoff bedeutet und
- L: die für die allgemeine Formel (B) genannten Bedeutungen besitzt,

Insbesondere bevorzugt sind Katalysator-Systeme, die einen Katalysator der allgemeinen Formel (B2) umfassen, wobei
- M: Ruthenium darstellt,
- X¹ und X²: gleichzeitig Chlor bedeuten,
- R¹: für einen Isopropyl-Rest steht,
- n: gleich 0 ist und
- L: einen gegebenenfalls substituierten Imidazolidin-Rest der Formeln (IIa) oder (IIb) darstellt, worin R⁸, R⁹, R¹⁰, R¹¹ gleich oder verschieden sind und die für die insbesondere bevorzugten Katalysatoren der allgemeinen Formel (B1) genannten Bedeutungen besitzen.

Besonders geeignet ist ein Katalysator-System, das Calciumchlorid oder Magnesiumchlorid umfasst sowie einen Katalysator, der unter die allgemeine Formel (B2) fällt und die Struktur (XVI) besitzt.

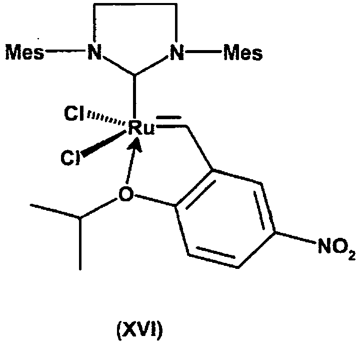

Der Katalysator (XVI) wird in der Literatur auch als "Grela-Katalysator" bezeichnet.

Ein weiteres geeignetes Katalysator-System umfasst Calciumchlorid oder Magnesiumchlorid und einen Katalysator, der unter die allgemeine Formel (B2) fällt und folgende Struktur (XVII) besitzt, wobei Mes jeweils für 2,4,6-Trimethylphenyl steht.

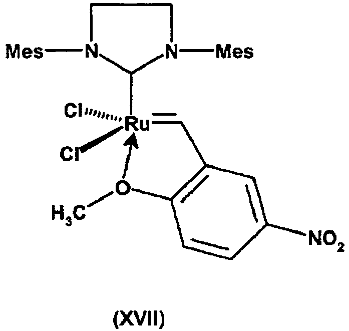

Eine alternative Ausführungsform betrifft Katalysator-Systeme, die einen dendritisch aufgebauten **Katalysator der allgemeinen Formel (B3)** umfassen, 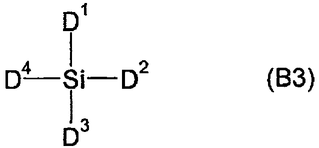 worin D¹, D², D³ und D⁴ jeweils eine Struktur der nachfolgend dargestellten allgemeinen Formel (XVIII) aufweisen, die über die rechts dargestellte Methylengruppe an das Silicium der Formel (B3) angebunden ist und 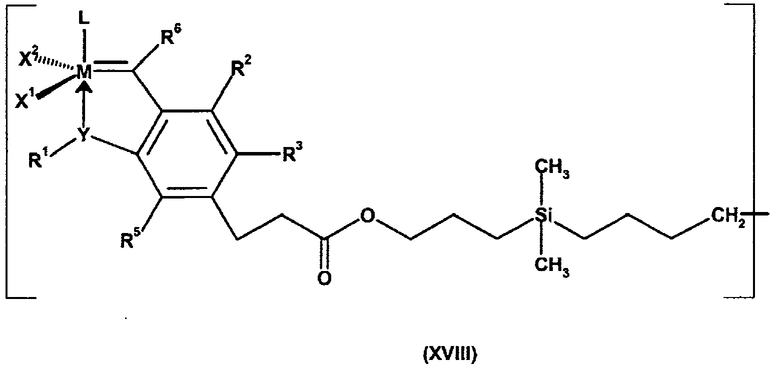 worin
- M, L, X¹, X², R¹, R², R³, R⁵ und R⁶: die für die allgemeine Formel (B) genannten allgemeinen und bevorzugten Bedeutungen besitzen können.

Bevorzugterweise umfassen diese Katalysator-Systeme neben dem Katalysator der allgemeinen Formel (B3) Calciumchlorid oder Magnesiumchlorid.

Die Katalysatoren gemäß der allgemeinen Formel (B3) sind aus US 2002/0107138 A1 bekannt und gemäß den dort gemachten Angaben herstellbar.

Eine weitere alternative Ausführungsform betrifft ein Katalysator-System, welches Calciumchlorid oder Magnesiumchlorid umfasst sowie einen Katalysator der Formel (B4), 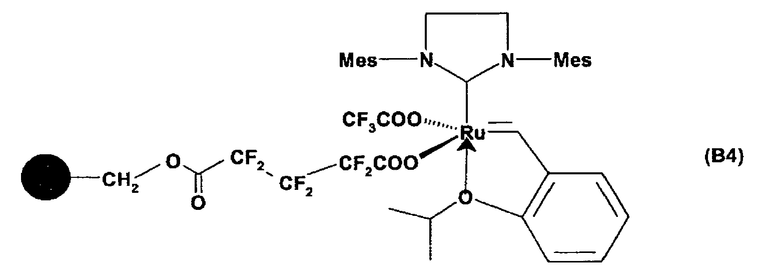 worin das Symbol 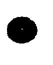

für einen Träger steht.

Bevorzugt handelt es sich bei dem Träger um ein Poly(styroldivinylbenzol)-Copolymer (PS-DVB).

Die Katalysatoren gemäß Formel (B4) sind aus Chem. Eur. J. 2004 10, 777-784 prinzipiell bekannt und nach dort beschriebenen Herstellmethoden erhältlich.

Alle vorgenannten Katalysatoren des Typs (B) können entweder als solche im Reaktionsgemisch der NBR-Metathese eingesetzt werden oder aber auch auf einem festen Träger aufgebracht und immobilisiert werden. Als feste Phasen bzw. Träger sind solche Materialien geeignet, die einerseits inert gegenüber dem Reaktionsgemisch der Metathese sind und zum anderen die Aktivität des Katalysators nicht beeinträchtigen. Einsetzbar sind zur Immobilisierung des Katalysators beispielsweise Metalle, Glas, Polymere, Keramik, organische Polymerkügelchen oder auch anorganische Sol-Gele, Ruß, Kieselsäure, Silikate, Calciumcarbonat und Bariumsulfat.

Eine weitere Ausführungsform betrifft Katalysator-Systeme umfassend einen **Katalysator der allgemeinen Formel (C),** 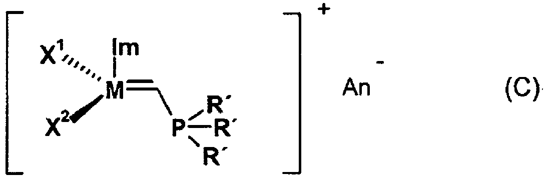 wobei
- M: Ruthenium oder Osmium bedeutet,
- X¹ und X²: gleich oder verschieden sind und anionische Liganden darstellen,
- R': gleich oder verschieden sind und organische Reste darstellen, wie nachfolgend definiert
- Im: einen gegebenenfalls substituierten Imidazolidinrest darstellt und
- An: ein Anion darstellt.

Bevorzugterweise umfassen diese Katalysator-Systeme neben dem Katalysator der allgemeinen Formel (C) Calciumchlorid oder Magnesiumchlorid.

Die Katalysatoren der allgemeinen Formel (C) sind prinzipiell bekannt (siehe z.B. Angew. Chem. Int. Ed. 2004,43, 6161-6165**).**

X¹ und X² können in der allgemeinen Formel (C) die gleichen allgemeinen, bevorzugten und besonders bevorzugten Bedeutungen besitzen wie in den Formeln (A) und (B).

Der Imidazolidinrest (Im) weist üblicherweise eine Struktur der allgemeinen Formeln (IIa) oder (IIb) auf, die bereits für den Katalysator-Typ der Formeln (A) und (B) genannt wurden und kann auch alle dort als bevorzugt genannten Strukturen, insbesondere die der Formeln (IIIa)-(IIIf) aufweisen.

Die Reste R' sind in der allgemeinen Formel (C) gleich oder verschieden und bedeuten einen geradkettigen oder verzweigten C₁-C₃₀-Alkyl-, C₅-C₃₀-Cycloalkyl- oder Aryl-Rest, wobei die C₁-C₃₀-Alkylreste gegebenenfalls durch ein oder mehrere Doppel- oder Dreifachbindungen oder auch ein oder mehrere Heteroatome, bevorzugt Sauerstoff oder Stickstoff, unterbrochen sein können.

Aryl umfasst einen aromatischen Rest mit 6 bis 24 Gerüstkohlenstoffatomen. Als bevorzugte mono-, bi- oder tricyclische carbocyclische aromatische Reste mit 6 bis 10 Gerüstkohlenstoffatomen seien beispielsweise Phenyl, Biphenyl, Naphthyl, Phenanthrenyl oder Anthracenyl genannt.

Bevorzugt sind die Reste R' in der allgemeinen Formel (C) gleich und bedeuten Phenyl, Cyclohexyl, Cyclopentyl, Isopropyl, o-Tolyl, o-Xylyl oder Mesityl.

Eine weitere alternative Ausführungsform betrifft ein Katalysator-System, welches einen **Katalysator der allgemeinen Formel (D)** umfasst, 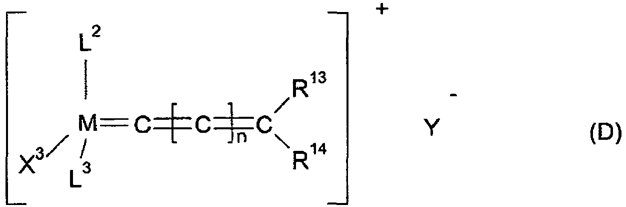 worin
- M: Ruthenium oder Osmium bedeutet,
- R¹³ und R¹⁴: unabhängig voneinander Wasserstoff, C₁-C₂₀-Alkyl, C₂-C₂₀-Alkenyl, C₂-C₂₀ Alkinyl, C₆-C₂₄-Aryl, C₁-C₂₀-Carboxylat, C₁-C₂₀-Alkoxy, C₂-C₂₀-Alkenyloxy, C₂-C₂₀-Alkinyloxy, C₆-C₂₄-Aryloxy, C₂-C₂₀-Alkoxycarbonyl, C₁-C₂₀-Alkylthio, C₁-C₂₀ -Alkylsulfonyl oder C₁-C₂₀ Alkylsulfinyl bedeuten,
- X³: ein anionischer Ligand ist,
- L²: ein neutraler π-gebundenen Ligand ist, unabhängig davon, ob mono- oder polycyclisch,
- L³: einen Ligand aus der Gruppe der Phosphine, sulfonierten Phosphine, fluorierten Phosphine, funktionalisierten Phosphine mit bis zu drei Aminoalkyl-, Ammoniumalkyl-, Alkoxyalkyl-, Alkoxycarbonylalkyl-, Hydrocarbonylalkyl-, Hydroxyalkyl- oder Ketoalkyl-Gruppen, Phosphite, Phosphinite, Phosphonite, Phosphinamine, Arsine, Stibine, Ether, Amine, Amide, Imine, Sulfoxide, Thioether und Pyridine darstellt,
- Y⁻: ein nicht-koordinierendes Anion ist und
- n: 0, 1, 2, 3, 4 oder 5 ist.

Bevorzugt umfassen diese Katalysator-Systeme neben dem Katalysator der allgemeinen Formel (D) Calciumchlorid oder Magnesiumchlorid.

Eine weitere erfindungsgemäße Ausführungsform betrifft ein Katalysator-System, welches einen **Katalysator der allgemeinen Formel (E)** umfasst, 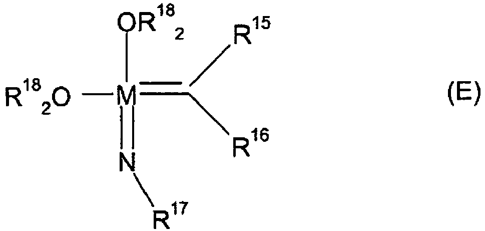 worin
- M²: Molybdän oder Wolfram bedeutet,
- R¹⁵ und R¹⁶: gleich oder verschieden sind und Wasserstoff, C₁-C₂₀-Alkyl, C₂-C₂₀-Alkenyl, C₂-C₂₀-Alkinyl, C₆-C₂₄-Aryl, C₁-C₂₀-Carboxylat, C₁-C₂₀-Alkoxy, C₂-C₂₀-Alkenyloxy, C₂-C₂₀-Alkinyloxy, C₆-C₂₄-Aryloxy, C₂-C₂₀-Alkoxycarbonyl, C₁-C₂₀-Alkylthio, C₁-C₂₀ -Alkylsulfonyl oder C₁-C₂₀ Alkylsulfinyl bedeuten,
- R¹⁷ and R¹⁸: gleich oder verschieden sind und einen substituierten oder einen halogensubstituierten C₁-C₂₀-Alkyl, C₆-C₂₄-Aryl, C₆-C₃₀-Aralkyl-Rest oder Silikonenthaltende Analoga davon darstellen.

Bevorzugt umfassen diese Katalysator-Systeme neben dem Katalysator der allgemeinen Formel (E) Calciumchlorid oder Magnesiumchlorid.

Eine weitere alternative Ausführungsform betrifft ein Katalysator-System, welches einen **Katalysator der allgemeinen Formel (F)** umfasst, 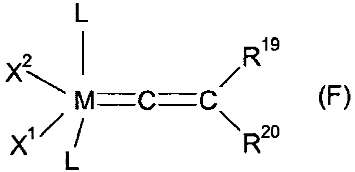 worin
- M: Ruthenium oder Osmium bedeutet,
- X¹ und X²: gleich oder verschieden sind und anionische Liganden darstellen, die alle in den allgemeinen Formeln (A) und (B) genannte Bedeutungen von X¹ und X² annehmen können,
- L: gleiche oder verschiedene Liganden darstellt, die alle in den allgemeinen Formeln (A) und (B) genannten Bedeutungen von L annehmen können,
- R¹⁹ and R²⁰: gleich oder verschieden sind und Wasserstoff oder substituiertes oder unsubstituiertes Alkyl bedeuten.

Bevorzugterweise umfassen diese Katalysator-Systeme neben dem Katalysator der allgemeinen Formel (F) Calciumchlorid oder Magnesiumchlorid.

Eine weitere alternative Ausführungsform betrifft ein erfindungsgemäßes Katalysator-System, welches einen **Katalysator der allgemeinen Formel (G), (H) oder (K)** umfasst, 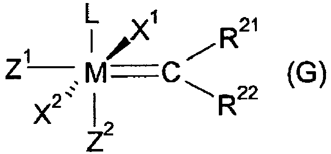 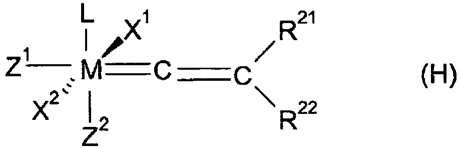 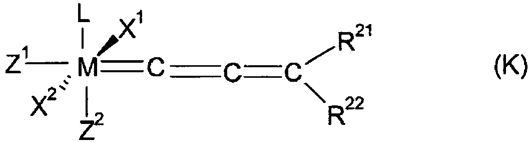 wobei
- M: Osmium oder Ruthenium bedeutet,
- X¹ und X²: gleich oder verschieden sind und zwei anionische Liganden darstellen,
- L: eine neutralen Elektronen-Donor-Liganden darstellt,
- Z¹ und Z²: gleich oder verschieden sind und neutrale Elektronen-Donoren darstellen,
- R²¹ und R²²: unabhängig voneinander Wasserstoff, Alkyl, Cycloalkyl, Alkenyl, Alkinyl, Aryl, Carboxylat, Alkoxy, Alkenyloxy, Alkinyloxy, Aryloxy, Alkoxycarbonyl, Alkylamino, Alkylthio, Alkylsulfonyl oder Alkylsulfinyl bedeuten, die jeweils durch ein oder mehrere Reste ausgewählt aus Alkyl, Halogen, Alkoxy, Aryl oder Heteroaryl substituiert sind.

Die Katalysatoren der allgemeinen Formeln (G), (H) und (K) sind prinzipiell bekannt, so z.B. aus WO 2003/011455 A1**,** WO 2003/087167 A2**,** Organometallics 2001, 20, 5314 und Angew. Chem. Int. Ed. 2002, 41, 4038**.** Die Katalysatoren sind kommerziell verfügbar oder aber nach den in den vorgenannten Literaturstellen angegebenen Herstellungsmethoden synthetisierbar.

### Z¹ und Z²

In den erfindungsgemäß einsetzbaren Katalysator-Systemen werden Katalysatoren der allgemeinen Formeln (G), (H) und (K) eingesetzt, worin **Z¹ und Z²** gleich oder verschieden sind und neutrale Elektronen-Donoren darstellen. Diese Liganden sind üblicherweise schwach koordinierend. Typischerweise handelt es sich um optional substituierte heterocyclische Gruppen. Hierbei kann es sich um fünf oder sechsgliedrige monocyclische Gruppen mit 1 bis 4, bevorzugterweise 1 bis 3 und besonders bevorzugt 1 oder 2 Heteroatomen handeln oder um zwei oder polycyclische Strukturen aus 2, 3, 4 oder 5 solcher fünf oder sechsgliedriger monocyclischer Gruppen, wobei alle jeweils vorgenannten Gruppen optional durch ein oder mehrere Alkyl, bevorzugt C₁-C₁₀-Alkyl, Cycloalkyl, bevorzugt C₃-C₈-Cycloalkyl, Alkoxy, bevorzugt C₁-C₁₀-Alkoxy, Halogen, bevorzugt Chlor oder Brom, Aryl, bevorzugt C₆-C₂₄-Aryl, oder Heteroaryl, bevorzugt C₅-C₂; Heteroaryl-Reste, die jeweils erneut durch ein oder mehrere Gruppen, bevorzugt ausgewählt aus der Gruppe bestehend aus Halogen, inbesondere Chlor oder Brom, C₁-C₅-Alkyl, C₁-C₅-Alkoxy und Phenyl substituiert sein können.

Beispiele für Z¹ und Z² umfassen Stickstoff enthaltende Heterocyclen wie Pyridine, Pyridazine, Bipyridine, Pyrimidine, Pyrazine, Pyrazolidine, Pyrrolidine, Piperazine, Indazole, Quinoline, Purine, Acridine, Bisimidazole, Picolylimine, Imidazolidine und Pyrrole.

Z¹ und Z² können auch miteinander verbrückt sein unter Ausbildung einer cyclischen Struktur. In diesem Fall handelt es sich bei Z¹ und Z² um einen einzigen zweizähnigen Liganden.

### L

In den Katalysatoren der allgemeinen Formeln (G), (H) und (K) kann L die gleichen allgemeinen, bevorzugten und besonders bevorzugten Bedeutungen annehmen wie L in den allgemeinen Formeln (A) und (B).

### R²¹ und R²²

In den Katalysatoren der allgemeinen Formeln (G), (H) und (K) sind **R²¹ und R²²** gleich oder verschieden und bedeuten Alkyl, bevorzugt C₁-C₃₀-Alkyl, besonders bevorzugt C₁-C₂₀-Alkyl, Cycloalkyl, bevorzugt C₃-C₂₀-Cycloalkyl, besonders bevorzugt C₃-C₈-Cycloalkyl, Alkenyl, bevorzugt C₂-C₂₀-Alkenyl, besonders bevorzugt C₂-C₁₆-Alkenyl, Alkinyl, bevorzugt C₂-C₂₀-Alkinyl, besonders bevorzugt C₂-C₁₆-Alkinyl, Aryl, bevorzugt C₆-C₂₄-Aryl, Carboxylat, bevorzugt C₁-C₂₀-Carboxylat, Alkoxy, bevorzugt C₁-C₂₀-Alkoxy, Alkenyloxy, bevorzugt C₂-C₂₀-Alkenyloxy, Alkinyloxy, bevorzugt C₂-C₂₀-Alkynyloxy, Aryloxy, bevorzugt C₆-C₂₄-Aryloxy, Alkoxycarbonyl, bevorzugt C₂-C₂₀-Alkoxycarbonyl, Alkylamino, bevorzugt C₁-C₃₀-Alkylamino, Alkylthio, bevorzugt C₁-C₃₀-Alkylthio, Arylthio, bevorzugt C₆-C₂₄-Arylthio, Alkylsulfonyl, bevorzugt C₁-C₂₀-Alkylsulphonyl, oder Alkylsulfinyl, bevorzugt C₁-C₂₀-Alkylsulphinyl, wobei die vorgenannten Substituenten durch einen oder mehrere Alkyl, Halogen, Alkoxy, Aryl oder Heteroaryl Reste substituiert sein können.

### X¹ und X²

In den Katalysatoren der allgemeinen Formeln (G), (H) und (K) sind **X¹ und X²** gleich oder verschieden und können die gleichen allgemeinen, bevorzugten und besonders bevorzugten Bedeutungen haben wie zuvor für X¹ und X² in der allgemeinen Formel (A) angegeben.

Bevorzugt werden Katalysatoren der allgemeinen Formeln (G), (H) und (K) eingesetzt, wobei
- M: Ruthenium ist,
- X¹ und X²: beide Halogen, insbesondere Chlor darstellen,
- R¹ und R²: gleich oder verschieden sind und fünf- oder sechsgliedrige monocyclische Gruppen mit 1 bis 4, bevorzugterweise 1 bis 3 und besonders bevorzugt 1 oder 2 Heteroatomen darstellen oder zwei- oder polycyclische Strukturen aus 2, 3, 4 oder 5 solcher fünf- oder sechsgliedriger monocyclischer Gruppen, wobei alle jeweils vorgenannten Gruppen durch ein oder mehrere Alkyl, bevorzugt C₁-C₁₀-Alkyl, Cycloalkyl, bevorzugt C₃-C₈-Cycloalkyl, Alkoxy, bevorzugt C₁-C₁₀-Alkoxy, Halogen, bevorzugt Chlor oder Brom, Aryl, bevorzugt C₆-C₂₄-Aryl, oder Heteroaryl, bevorzugt C₅-C₂₃ Heteroaryl-Reste substituiert sein können,
- R²¹ und R²²: gleich oder verschieden sind und C₁-C₃₀-Alkyl C₃-C₂₀-Cycloalkyl, C₂-C₂₀-Alkenyl, C₂-C₂₀-Alkynyl, C₆-C₂₄-Aryl, C₁-C₂₀-Carboxylate, C₁-C₂₀-Alkoxy, C₂-C₂₀-Alkenyloxy, C₂-C₂₀-Alkynyloxy, C₆-C₂₄-Aryloxy, C₂-C₂₀-Alkoxycarbonyl, C₁-C₃₀-Alkylamino, C₁-C₃₀-Alkylthio, C₆-C₂₄-Arylthio, C₁-C₂₀-Alkylsulphonyl, C₁-C₂₀-Alkylsulphinyl darstellen, und
- L: eine Struktur der bereits zuvor beschriebenen allgemeinen Formeln (IIa) oder (IIb), inbesondere der Formeln (IIIa) bis (IIIf) besitzt.

Ein besonders bevorzugter Katalysator, der unter die allgemeine Formel (G) fällt, besitzt die Struktur (XIX), 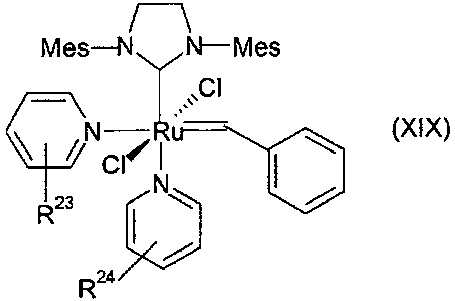 worin
- R²³ und R²⁴: gleich oder verschieden sind und Halogen, geradkettiges oder verzweigtes C₁-C₂₀-Alkyl, C₁-C₂₀-Heteroalkyl, C₁-C₁₀-Haloalkyl, C₁-C₁₀-Alkoxy, C₆-C₂₄-Aryl, bevorzugt Phenyl, Formyl, Nitro, Stickstoff-Heterocyclen, bevorzugt Pyridin, Piperidin und Pyrazin, Carboxy, Alkylcarbonyl, Halocarbonyl, Carbamoyl, Thiocarbomoyl, Carbamido, Thioformyl, Amino, Dialkylamino, Trialkylsilyl und Trialkoxysilyl bedeuten.

Die vorgenannten Reste C₁-C₂₀-Alkyl, C₁-C₂₀-Heteroalkyl, C₁-C₁₀-Haloalkyl, C₁-C₁₀-Alkoxy, C₆-C₂₄-Aryl, bevorzugt Phenyl, Formyl, Nitro, Stickstoff-Heterocyclen, bevorzugt Pyridin, Piperidin und Pyrazin, Carboxy, Alkylcarbonyl, Halocarbonyl, Carbamoyl, Thiocarbomoyl, Carbamido, Thioformyl, Amino, Trialkylsilyl und Trialkoxysilyl können jeweils wieder durch ein oder mehrere Reste Halogen, bevorzugt Fluor, Chlor oder Brom, C₁-C₅-Alkyl, C₁-C₅-Alkoxy oder Phenyl substituiert sein.

Besonders bevorzugte Ausführungsformen des Katalysators der Formel (XIX) besitzen die Strukturen (XIX a) oder (XIX b), wobei R²³ und R²⁴ die gleichen Bedeutungen besitzen wie in der Formel (XIX) angegeben.

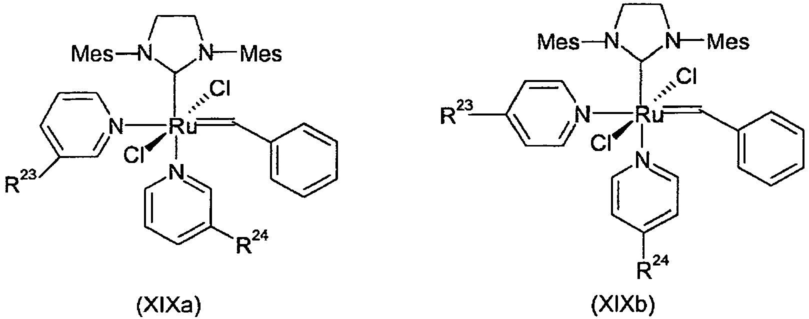

Wenn R²³ und R²⁴ Wasserstoff bedeuten, wird in der Literatur vom "Grubbs III Katalysator" gesprochen.

Weitere geeignete Katalysatoren, die unter die allgemeinen Formeln (G), (H) und (K) fallen, besitzen die nachfolgend genannten Strukhuformen (XX)-(XXXI), wobei Mes jeweils für 2,4,6-Trimethylphenyl steht.

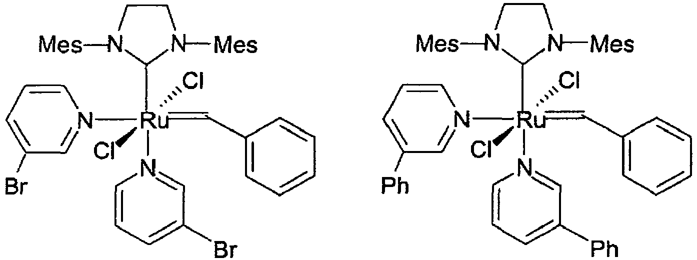

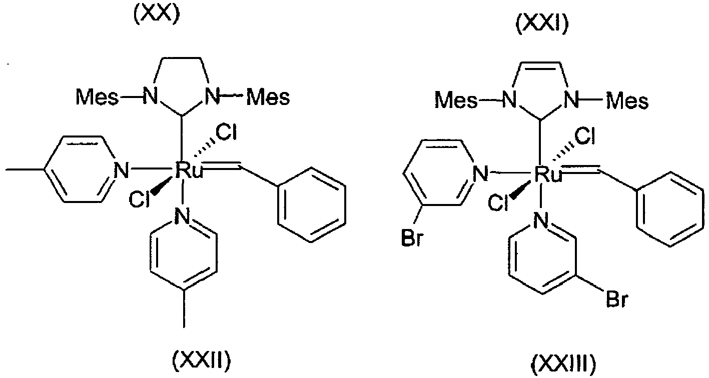

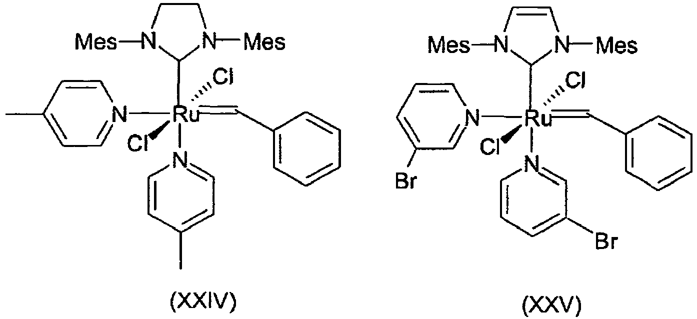

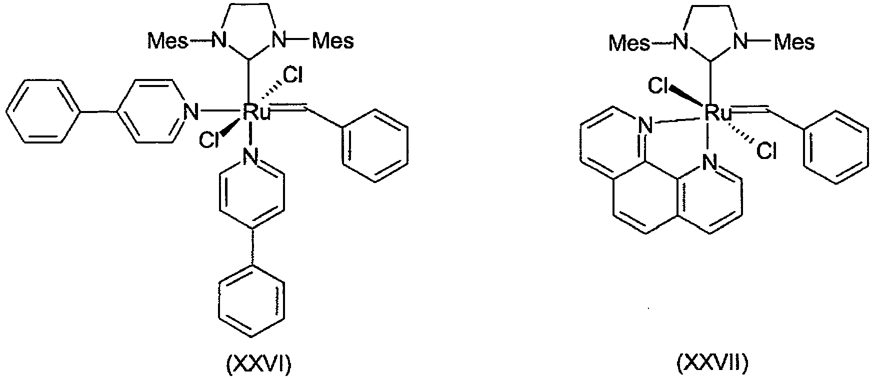

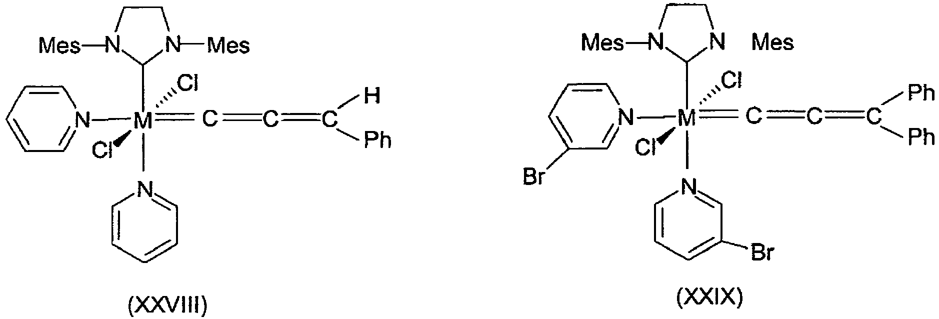

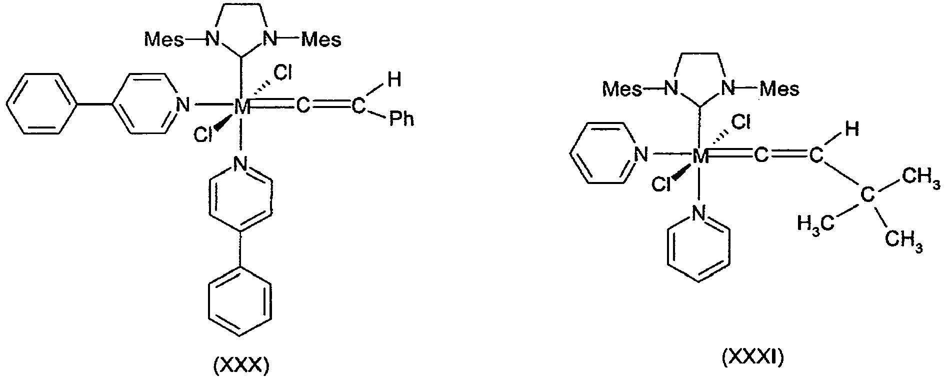

**Gegenstand der Erfindung** ist ferner die Verwendung der erfindungsgemäßen Katalysator-Systeme in Metathese-Reaktionen.

Bei den Metathese-Reaktionen kann es sich beispielsweise um Ringschlussmetathesen (RCM), Kreuzmetathesen (CM) oder auch Ringöffnungsmetathesen (ROMP) handeln.

Im erfindungsgemäßen Katalysator-System wird der Metathese-Katalysator und das Erdalkalimetallchlorid in einem Gewichtsverhältnis Erdalkalimetallchlorid : Metathesekatalysator von 0,01:1 bis 10.000:1, bevorzugt 0,1:1 bis 1.000:1, besonders bevorzugt 0,5:1 bis 500:1 eingesetzt.

Das Erdalkalimetallchlorid kann in einem Dispergiermittel oder auch ohne Dispergiermittel zum Metathese-Katalysator oder dessen Lösung gegeben werden, um dadurch das erfindungsgemäße Katalysator-System zu erhalten.

Als Dispergiermittel, in dem das Erdalkalimetallchlorid dem Katalysator bzw. dessen Lösung zugesetzt wird, können alle bekannten Lösungsmittel verwendet werden. Für die Wirksamkeit des Erdalkalimetallchlorid-Zusatzes ist es nicht erforderlich, dass das Erdalkalimetallchlorid in dem Dispergiermittel eine Löslichkeit aufweist. Bevorzugte Dispergiermittel umfassen, sind aber nicht beschränkt auf, Aceton, Benzol, Chlorbenzol, Chloroform, Cyclohexan, Dichlormethan, Dioxan, Dimethylformamid, Dimethylacetamid, Dimethylsulfon, Dimethylsufoxid, Methylethylketon, Tetrahydrofuran, Tetrahydropyran und Toluol. Vorzugsweise ist das Dispergiermittel gegenüber dem Metathese-Katalysator inert.

Bevorzugt werden die erfindungsgemäßen Katalysator-Systeme für die Metathese von Nitrilkautschuk verwenden. Bei der erfindungsgemäßen Verwendung handelt es sich dann um ein Verfahren zum Molekulargewichtsabbau des Nitrilkautschuks, indem man den Nitrilkautschuk mit dem erfindungsgemäßen Katalysator-System in Kontakt bringt. Diese Reaktion stellt eine Kreuzmetathese dar.

Sofern die erfindungsgemäßen Katalysator-Systeme für die Metathese von Nitrilkautschuk eingesetzt werden, liegt die Menge, in der das Erdalkalimetallchlorid bezogen auf den abzubauenden Kautschuk verwendet werden, in einem Bereich von 0,0001 phr bis 50 phr, bevorzugt 0,001 phr bis 35 phr (phr = Gew.Teile auf 100 Gew.-Teile Kautschuk).

Auch für den Einsatz zur NBR Metathese kann das Erdalkalimetallchlorid in einem Dispergiermittel oder auch ohne Dispergiermittel zu einer Lösung des Metathese-Katalysators gegeben werden. Alternativ dazu kann das Erdalkalimetallchlorid auch direkt einer Lösung des abzubauenden Nitrilkautschuks zugegeben werden, der darüber hinaus der Metathese-Katalysator zugegeben wird, so dass das gesamte erfindungsgemäße Katalysator-System im Reaktionsgemisch vorliegt.

Die Menge des Metathese-Katalysators bezogen auf den eingesetzten Nitrilkautschuk hängt von der Natur sowie katalytischen Aktivität des speziellen Katalysators ab. Die Menge an eingesetztem Katalysator beträgt üblicherweise 1 bis 1.000 ppm Edelmetall, bevorzugt 2 bis 500 ppm, insbesondere 5 bis 250 ppm, bezogen auf den eingesetzten Nitrilkautschuk.

Die NBR-Metathese kann in Abwesenheit oder aber in Gegenwart eines Co-Olefins durchgeführt werden. Bei diesem Co-Olefin handelt es sich bevorzugt um ein geradkettiges oder verzweigtes C₂-C₁₆-Olefin. Geeignet sind beispielsweise Ethylen, Propylen, Isobuten, Styrol, 1-Hexen oder 1-Octen. Bevorzugt wird 1-Hexen oder 1-Octen verwendet. Sofern das Co-Olefin flüssig ist (wie beispielsweise 1-Hexen), liegt die Menge des Co-Olefins bevorzugt in einem Bereich von 0,2-20 Gew.% bezogen auf den eingesetzten Nitrilkautschuk. Sofern das Co-Olefin ein Gas ist, wie beispielsweise Ethylen, wird die Menge des Co-Olefins so gewählt, dass sich im Reaktionsgefäß bei Raumtemperatur ein Druck im Bereich von 1 x 10⁵ Pa - 1 x 10⁷ Pa einstellt, bevorzugt ein Druck im Bereich von 5,2 x 10⁵ Pa bis 4 x 10⁶ Pa.

Die Metathese-Reaktion kann in einem geeigneten Lösungsmittel durchgeführt werden, welches den eingesetzten Katalysator nicht deaktiviert und die Reaktion auch nicht in irgendeiner anderen Weise negativ beeinflusst. Bevorzugte Lösungsmittel umfassen, sind aber nicht begrenzt auf, Dichlormethan, Benzol, Toluol, Methylethylketon, Aceton, Tetrahydrofuran, Tetrahydropyran, Dioxan und Cyclohexan. Das besonders bevorzugte Lösungsmittel ist Chlorbenzol. In manchen Fällen, wenn das Co-Olefin selbst als Lösungsmittel fungieren kann, so z.B. bei 1-Hexen, kann auch auf den Zusatz eines weiteren zusätzlichen Lösungsmittels verzichtet werden.

Die Konzentration des eingesetzten Nitrilkautschuks in der Reaktionsmischung der Metathese ist nicht kritisch, aber es ist natürlich zu beachten, dass die Reaktion nicht durch eine viel zu hohe Viskosität der Reaktionsmischung und die damit verbundenen Mischungsprobleme negativ beeinflusst werden sollte. Bevorzugt liegt die Konzentration des NBR in der Reaktionsmischung im Bereich von 1 bis 25 Gew.%, besonders bevorzugt im Bereich von 5 bis 20 Gew.%, bezogen auf die gesamte Reaktionsmischung.

Der Metathese Abbau wird üblicherweise bei einer Temperatur im Bereich von 10°C bis 150°C durchgeführt, bevorzugt bei einer Temperatur im Bereich von 20 bis 100 °C.

Die Reaktionszeit hängt von einer Reihe von Faktoren ab, beispielsweise vom Typ des NBR, der Art des Katalysators, der verwendeten Katalysator-Konzentration und der Reaktionstemperatur. Typischerweise ist die Reaktion innerhalb von fünf Stunden unter normalen Bedingungen beendet. Der Fortschritt der Metathese kann durch Standard-Analytik überwacht werden, z.B. durch GPC-Messungen oder durch Bestimmung der Viskosität.

Als Nitrilkautschuke ("NBR") können in die Metathese-Reaktion Co- oder Terpolymere eingesetzt werden, welche Wiederholungseinheiten mindestens eines konjugierten Diens, mindestens eines α,β-ungesättigten Nitrils und gegebenenfalls einer oder mehrerer weiterer copolymerisierbarer Monomere enthalten.

Das konjugierte Dien kann von jeder Natur sein. Bevorzugt werden (C₄-C₆) konjugierte Diene eingesetzt. Besonders bevorzugt sind 1,3-Butadien, Isopren, 2,3-Dimethylbutadien, Piperylen oder Gemische daraus. Insbesondere bevorzugt sind 1,3-Butadien und Isopren oder Gemische daraus. Ganz besonders bevorzugt ist 1,3-Butadien.

Als α,β-ungesättigtes Nitril kann jedes bekannte α,β-ungesättigte Nitril eingesetzt werden, bevorzugt sind (C₃-C₅)-α,β-ungesättigte Nitrile wie Acrylnitril, Methacrylnitril, Ethacrylnitril oder Mischungen davon. Besonders bevorzugt ist Acrylnitril.

Einen besonders bevorzugten Nitrilkautschuk stellt somit ein Copolymer aus Acrylnitril und 1,3-Butadien dar.

Neben dem konjugierten Dien und dem α,β-ungesättigten Nitril können noch ein oder mehrere weitere dem Fachmann bekannte, copolymerisierbare Monomere eingesetzt werden, z.B. α,β-ungesättigte Mono- oder Dicarbonsäuren, deren Ester oder Amide. Als α,β-ungesättigte Mono- oder Dicarbonsäuren sind dabei Fumarsäure, Maleinsäure, Acrylsäure und Methacrylsäure bevorzugt. Als Ester der α,β-ungesättigten Carbonsäuren werden vorzugsweise deren Alkylester und Alkoxyalkylester eingesetzt. Besonders bevorzugte Alkylester der α,β-ungesättigten Carbonsäuren sind Methylacrylat, Ethylacrylat, Butylacrylat, Butylmethacrylat, 2-Ethylhexylacrylat, 2-Ethylhexylmethacrylat und Octylacrylat. Besonders bevorzugte Alkoxyalkylester der α,β-ungesättigten Carbonsäuren sind Methoxyethyl(meth)acrylat, Ethoxyethyl(meth)acrylat und Methoxyethyl-(meth)acrylat. Einsetzbar sind auch Mischungen von Alkylestern, wie z.B. den vorgenannten, mit Alkoxyalkylestern, z.B. in Form der vorgenannten.

Die Anteile an konjugiertem Dien und α,β-ungesättigtem Nitril in den einzusetzenden NBR-Polymeren können in weiten Bereichen schwanken. Der Anteil des oder der Summe der konjugierten Diene liegt üblicherweise im Bereich von 40 bis 90 Gew.-%, bevorzugt im Bereich von 60 bis 85 Gew. %, bezogen auf das Gesamtpolymer. Der Anteil des oder der Summe der α,β-ungesättigten Nitrile liegt üblicherweise bei 10 bis 60 Gew.-%, bevorzugt bei 15 bis 40 Gew.-%, bezogen auf das Gesamtpolymer. Die Anteile der Monomere summieren sich jeweils zu 100 Gew.-% auf. Die zusätzlichen Monomere können in Mengen von 0 bis 40 Gew.%, bevorzugt 0,1 bis 40 Gew.-%, besonders bevorzugt 1 bis 30 Gew.-%, bezogen auf das Gesamtpolymer, vorliegen. In diesem Fall werden entsprechende Anteile des oder der konjugierten Diene und/oder des oder der α,β-ungesättigten Nitrile durch die Anteile der zusätzlichen Monomere ersetzt, wobei sich die Anteile aller Monomere jeweils zu 100 Gew.-% aufsummieren.

Die Herstellung der Nitrilkautschuke durch Polymerisation der vorgenannten Monomere ist dem Fachmann hinlänglich bekannt und in der Literatur umfangreich beschrieben.

Nitrilkautschuke, die im erfindungsgemäßen Sinn verwendet werden können, sind ferner käuflich erhältlich, z.B. als Produkte aus der Produktreihe der Marken Perbunan^{®} und Krynac^{®} von der Lanxess Deutschland GmbH.

Die zur Metathese eingesetzten Nitrilkautschuke besitzen eine Mooney-Viskosität (ML 1+4 bei 100°C) im Bereich von 30 bis 70, bevorzugt von 30 bis 50. Dies entspricht einem Gewichtsmittel des Molekulargewicht M_{w} im Bereich von 150.000 - 500.000, bevorzugt im Bereich von 180.000-400.000. Die eingesetzten Nitrilkautschuke besitzen ferner eine Polydispersität PDI = M_{w}/Mₙ, wobei M_{w} das Gewichtsmittel und Mₙ das Zahlenmittel des Molekulargewichts darstellt, im Bereich von 2,0 - 6,0 und bevorzugt im Bereich von 2,0 - 4,0.

Die Bestimmung der Mooney-Viskosität erfolgt dabei gemäß ASTM Norm D 1646.

Die durch das erfindungsgemäße Metathese-Verfahren erhaltenen Nitrilkautschuke besitzen eine Mooney-Viskosität (ML 1+4 bei 100°C) im Bereich von 5 - 30, bevorzugt im Bereich von 5 - 20. Dies entspricht einem Gewichtsmittel des Molekulargewicht M_{w} im Bereich von 10.000-100.000, bevorzugt im Bereich von 10.000-80.000. Die erhaltenen Nitrilkautschuke besitzen ferner eine Polydispersität PDI = M_{w}/Mₙ, wobei Mₙ das Zahlenmittel des Molekulargewichts darstellt, im Bereich 1,4 - 4,0 bevorzugt im Bereich von 1,5 - 3,0.

An den Metathese Abbau in Gegenwart des erfindungsgemäßen Katalysator-Systems kann sich eine Hydrierung der erhaltenen abgebauten Nitrilkautschuke anschließen. Diese kann in einer dem Fachmann bekannten Art und Weise erfolgen.

Es ist möglich, die Hydrierung unter Einsatz homogener oder heterogener Hydrierkatalysatoren durchzuführen. Es ist ferner möglich, die Hydrierung in-situ durchzuführen, d.h. in dem gleichen Reaktionsgemisch, in dem zuvor auch der Metathese-Abbau erfolgte und ohne Notwendigkeit, den abgebauten Nitrilkautschuk zu isolieren. Der Hydrierkatalysator wird einfach dem Reaktionsgefäß zugesetzt.

Die eingesetzten Katalysatoren basieren üblicherweise auf Rhodium, Ruthenium oder Titan, es können aber auch Platin, Iridium, Palladium, Rhenium, Ruthenium, Osmium, Kobalt oder Kupfer entweder als Metall, oder aber bevorzugt in Form von Metallverbindungen eingesetzt werden (siehe **z.B.**US-A-3,700,637**,** DE-A-25 39 132**,** EP-A- 0 134 023**,** DE-OS- 35 41 689**,** DE-OS- 35 40 918**,** EP-A-0 298 386**,** DE-OS- 35 29 252**,** DE-OS- 34 33 392**,** US-A-4,464,515 **und** US-A-4,503,196**).**

Geeignete Katalysatoren und Lösungsmittel für eine Hydrierung in homogener Phase werden im Folgenden beschrieben und sind auch aus DE-A-25 39 132 und der EP-A-0 471 250 bekannt

Die selektive Hydrierung kann beispielsweise in Gegenwart eines Rhodium- oder Rutheniumhaltigen Katalysators erreicht werden. Einsetzbar ist beispielsweise ein Katalysator der allgemeinen Formel

(R¹ₘB)₁ M Xₙ,

worin M Ruthenium oder Rhodium ist, R¹ gleich oder verschieden sind und eine C₁-C₈ Alkylgruppe, eine C₄-C₈ Cycloalkylgruppe, eine C₆-C₁₅ Aryl-Gruppe oder eine C₇-C₁₅ AralkylGruppe darstellen. B ist Phosphor, Arsen, Schwefel oder eine Sulfoxid-Gruppe S=O, X ist Wasserstoff oder ein Anion, vorzugsweise Halogen und besonders bevorzugt Chlor oder Brom, 1 ist 2,3 oder 4, m ist 2 oder 3 und n ist 1,2 oder 3, bevorzugt 1 oder 3. Bevorzugte Katalysatoren sind Tris(triphenylphosphin)-rhodium(I)-chlorid, Tris(triphenylphosphin)-rhodium(III)-chlorid und Tris(dimethylsulfoxid)-rhodium(III)-chlorid sowie Tetrakis(triphenylphosphin)-rhodium-hydrid der Formel (C₆H₅)₃P)₄RhH und die entsprechenden Verbindungen, in denen das Triphenylphosphin ganz oder teilweise durch Tricyclohexylphosphin ersetzt wurde. Der Katalysator kann in kleinen Mengen benutzt werden. Eine Menge im Bereich von 0,01-1 Gew.%, bevorzugt im Bereich von 0,03-0,5 Gew.% und besonders bevorzugt im Bereich von 0,1-0,3 Gew.% bezogen auf das Gewicht des Polymers sind geeignet.

Üblicherweise ist es sinnvoll, den Katalysator zusammen mit einem Co-Katalysator zu verwenden, der ein Ligand der Formel R¹ₘB ist, wobei R¹, m und B die zuvor für den Katalysator genannten Bedeutungen besitzen. Bevorzugt ist m gleich 3, B gleich Phosphor und die Reste R¹ können gleich oder verschieden sein. Bevorzugt handelt es sich um Co-Katalysatoren mit Trialkyl, Tricycloalkyl, Triaryl, Triaralkyl, Diaryl-monoalkyl, Diaryl-monocycloalkyl, Dialkyl-monoaryl, Dialkyl-monocycloalkyl, Dicycloalkyl-monoaryl oder Dicyclalkyl-monoaryl-Resten.

Beispiele von Co-Katalysatoren finden sich beispielsweise in US-A-4,631,315. Bevorzugter Co-Katalysator ist Triphenylphosphin. Der Co-Katalysator wird bevorzugt in Mengen in einem Bereich von 0,1-5 Gew.%, bevorzugt im Bereich von 0,3-4 Gew.% eingesetzt, bezogen auf das Gewicht des zu hydrierenden Nitrilkautschuks. Bevorzugt liegt ferner das Gewichtsverhältnis des Rhodium-haltigen Katalysators zum Co-Katalysator im Bereich von 1:3 bis 1:55, besonders bevorzugt im Bereich von 1:5 bis 1:45. Bezogen auf 100 Gewichtsteile des zu hydrierenden Nitrilkautschuks werden geeigneterweise 0,1 bis 33 Gewichtsteile des Co-Katalyators, bevorzugt 0,5 bis 20 und ganz besonders bevorzugt 1 bis 5 Gewichtsteile, insbesondere mehr als 2 aber weniger als 5 Gewichtsteile Co-Katalysator bezogen auf 100 Gewichtsteile des zu hydrierenden Nitrilkautschuks eingesetzt.

Die praktische Durchführung dieser Hydrierung ist dem Fachmann aus US-A-6,683,136 hinlänglich bekannt. Sie erfolgt üblicherweise, indem man den zu hydrierenden Nitrilkautschuk in einem Lösungsmittel wie Toluol oder Monochlorbenzol bei einer Temperatur im Bereich von 100 bis 150 °C und einem Druck im Bereich von 50 bis 150 bar für 2 bis 10 h mit Wasserstoff beaufschlagt.

Unter Hydrierung wird im Rahmen dieser Erfindung eine Umsetzung der im Ausgangs-Nitrilkautschuk vorhandenen Doppelbindungen zu mindestens 50 %, bevorzugt 70-100%, besonders bevorzugt 80-100%, verstanden. Besonders bevorzugt sind auch Restgehalte von Doppelbindungen im HNBR von 0 bis 8%.

Bei Einsatz heterogener Katalysatoren handelt es sich üblicherweise um geträgerte Katalysatoren auf der Basis von Palladium, die z. B. auf Kohle, Kieselsäure, Calciumcarbonat oder Bariumsulfat geträgert sind.

Nach Abschluss der Hydrierung erhält man einen hydrierten Nitrilkautschuk mit einer Mooney-Viskosität (ML 1-n4 bei 100°C), gemessen gemäß ASTM Norm D 1646, im Bereich von 10 - 50, bevorzugt von 10 bis 30. Dies entspricht einem Gewichtsmittel des Molekulargewicht M_{w} im Bereich von 2.000 - 400.000 g/mol, bevorzugt im Bereich von 20.000 - 200.000. Die erhaltenen hydrierten Nitrilkautschuke besitzen ferner eine Polydispersität PDI= M_{w}/Mₙ, wobei M_{w} das Gewichtsmittel und Mₙ das Zahlenmittel des Molekulargewichts darstellt, im Bereich von 1- 5 und bevorzugt im Bereich von 1,5 - 3.

Überraschenderweise tritt bei Zusatz eines Erdalkalimetallchlorids der negative Effekt, der unter Verwendung von Kupfer-Salzen bei der Nitrilkautschuk-Metathese beobachtet wurde, nicht ein. Gleichzeitig führen Erdalkalimetallchloride auch zu einem stärkeren Molekulargewichtsabbau bei gleichzeitig enger Molekulargewichtsverteilung als der Zusatz von Alkalimetallsalzen und dabei inbesondere LiCl, LiBr und LiI.

Das erfindungsgemäße Katalysator-System lässt sich jedoch nicht nur erfolgreich für den Metathese-Abbau von Nitrilkautschuken einsetzen, sondern auch universell für andere Metathese-Reaktionen. In einem Verfahren zur Ringschlussmetathese wird das erfindungsgemäße Katalysator-System mit dem entsprechenden acyclischen Edukt, wie z.B. Diethyldiallylmalonat in Kontakt gebracht.

Durch den Einsatz der erfindungsgemäßen Katalysator-Systeme aus Metathese-Katalysator und Erdalkalimetallchlorid lässt sich bei vergleichbaren Reaktionszeiten die Menge des eigentlichen Metathese-Katalysators und damit die Edelmetall-Menge deutlich gegenüber analogen Metathese-Reaktionen reduzieren, bei denen nur der Katalysator; d.h. ohne Erdalkalimetallchlorid eingesetzt wird. Bei Einsatz vergleichbarer Edelmetallgehalte wird durch den Zusatz des Erdalkalimetallchlorids die Reaktionszeit substanziell verkürzt. Beim Einsatz für den Abbau von Nitrilkautschuken können abgebaute Nitrilkautschuke mit deutlich niedrigeren Molekulargewichten M_{w} und Mₙ erreicht werden.

### BEISPIELE

Eingesetzt wurden folgende Katalysatoren:
**"Grubbs-II Katalysator" (MG: 848,33 g/mol)**

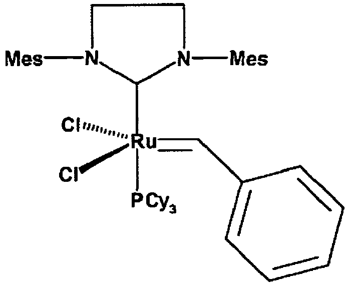

Der Grubbs-II-Katalysator wurde von der Firma Materia (Pasadena/Kalifornien) bezogen.

### "Hoveyda-Katalysator" (MG: 626,14 g/mol)

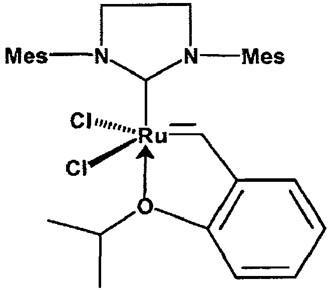

Der Hoveyda-Katalysator wurde von Aldrich unter der Produktnummer 569755 bezogen.

### "Grela-Katalysator" (MG: 617,13 g/mol)

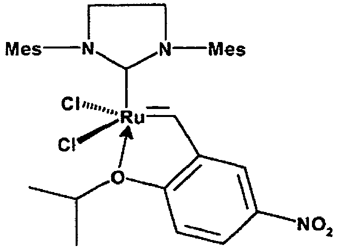

Der Grela-Katalysator wurde nach der in J. Org. Chem. 2004, 69, 6894-6896 publizierten Vorschrift hergestellt.

### Allgemeine Vorschrift zum Metathese-Abbau von Nitrilkautschuk ("NBR")

Die nachfolgend beschriebenen Abbaureaktionen in den Versuchserien 1 bis 5 wurden unter Einsatz des Nitrilkautschuks Perbunan^{®} NT 3435 der Lanxess Deutschland GmbH durchgeführt. Dieser Nitrilkautschuk wies folgende charakteristischen Kenngrößen auf:

| | |
|---|---|
| Acrylnitrilgehalt: | 34 Gew.% |
| Mooney-Viskosität (ML 1+4 @100°C): | 31 Mooney-Einheiten |
| Restfeuchte: | 1,2 Gew.% |
| M_{w}: | 186.832 g/mol |
| Mₙ: | 60.000 g/mol |
| PDI (M_{w}/Mₙ): | 3,1 |

Für den Metatheseabbau wurden jeweils 293,3 g Chlorbenzol (nachfolgend "MCB" genannt/ Firma Acros Organics) ohne weitere Reinigung verwendet. Hierin wurden 40 g NBR während eines Zeitraums von 10 h bei Raumtemperatur gelöst. Zu der NBR-haltigen Lösung wurde jeweils 0,8 g (2 phr) 1-Hexen gegeben und zur Homogenisierung 30 min gerührt.

Die Durchführung der Metathese-Reaktion erfolgte mit den nachfolgend in Tabelle 1 genannten Mengen an Einsatzstoffen bei Raumtemperatur. Die Katalysatoren wurden jeweils in 20 g MCB bei Raumtemperatur unter Argon gelöst. Die eingesetzten Katalysatormengen sind in Tabelle 2 zusammengefasst. Die Zugabe der Katalysatorlösungen zu den NBR-Lösungen in MCB erfolgte sofort nach der Herstellung der Katalysatorlösungen. Nach den in der nachfolgenden Tabelle 3 angegebenen Reaktionszeiten wurden von den Reaktionslösungen jeweils ca. 5 ml entnommen und zur Abstoppung unmittelbar mit ca. 0,2 ml Ethylvinylether versetzt und anschließend mit 5 ml DMAc (*N,N*-Dimethylacetamid) der Firma Aldrich verdünnt. Von diesen Lösungen wurden jeweils 2 ml in ein GPC-Gläschen gegeben und mit DMAc auf 3 ml verdünnt. Vor Durchführung der GPC-Analyse wurden die Lösungen jeweils mittels eines 0,2µm-Spritzenfilters aus Teflon (Chromafil PTFE 0,2 µm; Firma Machery-Nagel) filtriert. Im Anschluss daran erfolgte die GPC-Analyse mit einem Gerät der Firma Waters (Mod. 510). Für die Analytik wurde eine Kombination von 4 Säulen der Polymer Laboratories verwendet: 1) PLgel 5 µm Mixed-C, 300 x 7,5mm, 2) PLgel 5µm Mixed-C, 300 x 7,5mm, 3) PLgel 3µm Mixed-E, 300 x 7,5mm, und 4) PLgel 3µm Mixed-E, 300 x 7,5mm.

Die Kalibrierung der GPC-Säulen erfolgte mit linearem Poly(methylmethacrylat) der Firma Polymer Standards Services. Als Detektor wurde ein RI-Detektor der Firma Waters (Waters 410) verwendet. Die Analytik wurde mit einer Flussgeschwindigkeit von 0,5 mL/min durchgeführt, wobei als Eluent DMAc verwendet wurde. Die Auswertung der GPC-Kurven erfolgte mit Software der Firma Millenium.

Mittels GPC-Analyse wurden folgende charakteristischen Kenngrößen sowohl für den NBR-Originalkautschuk (vor dem Abbau) als auch für die abgebauten Nitrilkautschuke bestimmt:
M_{w} [kg/mol]: Gewichtsmittel der Molmasse
Mₙ [kg/mol]: Zahlenmittel der Molmasse
PDI: Breite der Molmassenverteilung (M_{w}/Mₙ)

**Tabelle 1: Metatheseabbau von Nitrilkautschuk: Übersicht über die durchgeführten Versuche**

| **Versuchs-Serie** | | **Katalysator** | **Salzzusatz** | |
|---|---|---|---|---|
| | | | **Art** | **Menge [phr]** |
| 1.01 | Vergleichsbeispiel | Grubbs-(II) | - | - |
| 1.02 | Vergleichsbeispiel | Grubbs-(I) | LiBr | 2 |
| 1.03 | Vergleichsbeispiel | Grubbs-(I) | LiCl | 2 |
| 1.04 | Vergleichsbeispiel | Grubbs-(II) | LiI | 2 |
| 1.05 | Erfindungsgemäßes Beispiel | Grubbs-(II) | CaCl₂ | 0,01 |
| 1.06 | Erfindungsgemäßes Beispiel | Grubbs-(II) | CaCl₂ | 0,05 |
| 1.07 | Erfindungsgemäßes Beispiel | Grubbs-(II) | CaCl₂ | 0,1 |
| 1.09 | Erfindungsgemäßes Beispiel | Grubbs-(II) | CaCl₂ | 0,5 |
| 1.09 | Erfindungsgemäßes Beispiel | Grubbs-(II) | CaCl₂ | 1 |
| 1.10 | Erfindungsgemäßes Beispiel | Grubbs-(II) | CaCl₂ | 2 |
| 1.11 | Erfindungsgemäßes Beispiel | Grubbs-(II) | CaCl₂ | 5 |
| 1.12 | Erfindungsgemäßes Beispiel | Grubbs-(II) | CaCl₂ | 10 |
| 2.01 | Vergleichsbeispiel | Hoveyda | - | - |
| 2.02 | Erfindungsgemäßes Beispiel | Hoveyda | CaCl₂ | 2 |
| 3.01 | Vergleichsbeispiel | Grela | - | - |
| 3.02 | Erfindungsgemäßes Beispiel | Grela | CaCl₂ | 2 |
| 4.01 | Vergleichsbeispiel | Grubbs-(II) | SnCl₂*2H₂O | 2 |
| 4.02 | Vergleichsbeispiel | Grubbs-(II) | SnCl₂*2 H₂O | 0,5 |
| 4.03 | Vergleichsbeispiel | Grubbs-(II) | SnCl₂ (wasserfrei) | 2 |
| 4.04 | Vergleichsbeispiel | Grubbs-(II) | SnCl₂ (wasserfrei) | 0,5 |
| 5.01 | Vergleichsbeispiel | Grubbs-(I) | FeCl₂ (wasserfrei) | 2 |
| 5.01 | Vergleichsbeispiel | Grubbs-(II) | FeCl₂ (wasserfrei) | 0,5 |

**Tabelle 2:**

| ("phr" bedeutet "parts per 100 parts of rubber" also "Gewichtsteile bezogen auf 100 Gewichtsteile Nitrilkautschuk") | | | |
|---|---|---|---|
| **Katalysator** | **Stoffmenge n [mmol]** | **Menge m [mg]** | **phr** |
| Grubbs-II | 0,02357 | 20 | 0,05 |
| Grubbs-Hoveyda | 0,02357 | 14,77 | 0,037 |
| Grela | 0,02357 | 15,8 | 0,0395 |

### 1.00. NBR-Abbau unter Verwendung des Grubbs-II-Katalysators

### 1.01. Vergleichsversuch: Grubbs-II-Katalysator ohne Salzzusatz

| **Grubbs-II-Katalysator** | | | **Salz** | | **Temperatur** |
|---|---|---|---|---|---|
| Menge | Menge | Ru | Art | Menge | |
| [mg] | [phr] | [ppm] | | [phr] | [°C] |
| 20 | 0,05 | 60 | - | - | 23 |

| **Analytische Daten** | **Reaktionszeit [min.]** | | | | | |
|---|---|---|---|---|---|---|
| | **0** | **30** | **60** | **90** | **180** | **420** |
| **M_{w} [kg/mol]** | 186.832 | 117.542 | 99.937 | 84.396 | 64.982 | 53.852 |
| **Mₙ [kg/mol]** | 60.000 | 48.915 | 41.769 | 40.248 | 33.968 | 29.314 |
| **PDI** | 3,1 | 2,4 | 2,4 | 2,1 | 1,9 | 1,8 |

### 1.02 Vergleichsversuch: Grabbs-II-Katalysator mit Zusatz von 2 phr LiBr

| **Grubbs-II-Katalysator** | | | **Salz** | | **Temperatur** |
|---|---|---|---|---|---|
| Menge | Menge | Ru | Art | Menge | |
| [mg] | [phr] | [ppm] | | [phr] | [°C] |
| 20 | 0,05 | 60 | LiBr | 2 | 23 |

| **Analytische Daten** | **Reaktionszeit [min.]** | | | | | |
|---|---|---|---|---|---|---|
| | **0** | **30** | **60** | **90** | **180** | **420** |
| **M_{w} [kg/mol]** | 186.832 | 115.683 | 81.347 | 77.562 | 61.392 | 51.827 |
| **Mₙ [kg/mol]** | 60.000 | 48.347 | 38.775 | 40.796 | 34.147 | 28.793 |
| **PDI** | 3,1 | 2,4 | 2,1 | 1,9 | 1,8 | 1,8 |

### 1.03 Vergleichsversuch: Grubbs-II-Katalysator mit Zusatz von 2 phr LiCl

| **Grubbs-II-Katalysator** | | | **Salz** | | **Temperatur** |
|---|---|---|---|---|---|
| Menge | Menge | Ru | Art | Menge | |
| [mg] | [phr] | [ppm] | | [phr] | [°C] |
| 20 | 0,05 | 60 | LiCl | 2 | 23 |

| **Analytische Daten** | **Reaktionszeit [min.]** | | | | | |
|---|---|---|---|---|---|---|
| | **0** | **30** | **60** | **90** | **180** | **420** |
| **M_{w} [kg/mol]** | 186.832 | 121.905 | 71.885 | 56.724 | 31.683 | 21.337 |
| **Mₙ [kg/mol]** | 60.000 | 53.249 | 35.623 | 31390 | 18.615 | 13.153 |
| **PDI** | 3,1 | 2,3 | 2,0 | 1,8 | 1,7 | 1,6 |

### 1.04 Vergleichsversuch: Grubbs-II-Katalysator mit Zusatz von 2 phr LiI

| **Grubbs-II-Katalysator** | | | **Salz** | | **Temperatur** |
|---|---|---|---|---|---|
| Menge | Menge | Ru | Art | Menge | |
| [mg] | [phr] | [ppm] | | [phr] | [°C] |
| 20 | 0,05 | 60 | Lil | 2 | 23 |

| **Analytische Daten** | **Reaktionszeit [min.]** | | | | | |
|---|---|---|---|---|---|---|
| | **0** | **30** | **60** | **90** | **180** | **420** |
| **M_{w} [kg/mol]** | 186.832 | 152.415 | 132.923 | 122.523 | 84.021 | 51.827 |
| **Mₙ [kg/mol]** | 60.000 | 58.620 | 55.382 | 53.268 | 39.571 | 28.793 |
| **PDI** | 3,1 | 2,6 | 2,4 | 2,3 | 2,1 | 1,8 |

### 1.05 Erfindungsgemäßes Beispiel: Grubbs-II-Katalysator mit 0,01 phr CaCl₂

| **Grubbs-II-Katalysator** | | | **Salz** | | **Temperatur** |
|---|---|---|---|---|---|
| Menge | Menge | Ru | Art | Menge | |
| [mg] | [phr] | [ppm] | | [phr] | [°C] |
| 20 | 0,05 | 60 | CaCl₂ | 0,01 | 23 |

| **Analytische Daten** | **Reaktionszeit [min.]** | | | | | |
|---|---|---|---|---|---|---|
| | **0** | **30** | **60** | **90** | **180** | **420** |
| **M_{w} [kg/mol]** | 186.832 | 118.048 | 80.122 | 70.878 | 38.924 | 25.212 |
| **Mₙ [kg/mol]** | 60.000 | 45.835 | 36.082 | 34.950 | 21.346 | 15.145 |
| **PDI** | 3,1 | 2,6 | 2.2 | 2,0 | 1,8 | 1,7 |

### 1.06 Erfindungsgemäßes Beispiel: Grubbs-H-Katalysator mit 0,05 phr CaCl₂

| **Grubbs-II-Katalysator** | | | **Salz** | | **Temperatur** |
|---|---|---|---|---|---|
| Menge | Menge | Ru | Art | Menge | |
| [mg] | [phr] | [ppm] | | [phr] | [°C] |
| 20 | 0,05 | 60 | CaCl₂ | 0,05 | 23 |

| **Analytische Daten** | **Reaktionszeit [min.]** | | | | | |
|---|---|---|---|---|---|---|
| | **0** | **30** | **60** | **90** | **180** | **420** |
| **M_{w} [kg/mol]** | 186.832 | 135.432 | 100.204 | 84.748 | 52.755 | 37.620 |
| **Mₙ [kg/mol]** | 60.000 | 54.808 | 42.803 | 39.701 | 27.289 | 21.185 |
| **PDI** | 3,1 | 2,5 | 2,3 | 2,1 | 1,9 | 1,8 |

### 1.07 Erfindungsgemäßes Beispiel: Grubbs-II-Katalysator mit 0,1 phr CaCl₂

| **Grubbs-II-Katalysator** | | | **Salz** | | **Temperatur** |
|---|---|---|---|---|---|
| Menge | Menge | Ru | Art | Menge | |
| [mg] | [phr] | [ppm] | | [phr] | [°C] |
| 20 | 0,05 | 60 | CaCl₂ | 0,1 | 23 |

| **Analytische Daten** | **Reaktionszeit [min.]** | | | | | |
|---|---|---|---|---|---|---|
| | **0** | **30** | **60** | **90** | **180** | **420** |
| **M_{w} [kg/mol]** | 186.832 | 106.206 | 72.551 | 58.789 | 33.847 | 21.642 |
| **Mₙ [kg/mol]** | 60.000 | 47.089 | 34.584 | 31.294 | 19.307 | 12.933 |
| **PDI** | 3,1 | 2,3 | 2,1 | 1,9 | 1,8 | 1,7 |

### 1.08 Erfindungsgemäßes Beispiel: Grubbs-II-Katalysator mit 0,5 phr CaCl₂

| **Grubbs-II-Katalysator** | | | **Salz** | | **Temperatur** |
|---|---|---|---|---|---|
| Menge | Menge | Ru | Art | Menge | |
| [mg] | [phr] | [ppm] | | [phr] | [°C] |
| 20 | 0,05 | 60 | CaCl₂ | 0,5 | 23 |

| **Analytische Daten** | **Reaktionszeit [min.]** | | | | | |
|---|---|---|---|---|---|---|
| | **0** | **30** | **60** | **90** | **180** | **420** |
| **M_{w} [kg/mol]** | 186.832 | 108.891 | 74.219 | 52.432 | 31.465 | 19.615 |
| **Mₙ [kg/mol]** | 60.000 | 45.991 | 33.998 | 29.529 | 18.895 | 12.184 |
| **PDI** | 3,1 | 2,4 | 2,2 | 1,8 | 1,7 | 1,6 |

### 1.09 Erfindungsgemäßes Beispiel: Grubbs-II-Katalysator mit 1 phr CaCl₂

| **Grubbs-II-Katalysator** | | | **Salz** | | **Temperatur** |
|---|---|---|---|---|---|
| Menge | Menge | Ru | Art | Menge | |
| [mg] | [phr] | [ppm] | | [phr] | [°C] |
| 20 | 0,05 | 60 | CaCl₂ | 1 | 23 |

| **Analytische Daten** | **Reaktionszeit [min.]** | | | | | |
|---|---|---|---|---|---|---|
| | **0** | **30** | **60** | **90** | **180** | **420** |
| **M_{w} [kg/mol]** | 186.832 | 117.623 | 72.736 | 54.787 | 31.255 | 18.030 |
| **Mₙ [kg/mol]** | 60.000 | 51.933 | 35.284 | 27.448 | 18.296 | 10.955 |
| **PDI** | 3,1 | 2,3 | 2,1 | 2,0 | 1,7 | 1,6 |

### 1.10 Erfindungsgemäßes Beispiel: Grubbs-II-Katalysator mit 2 phr CaCl₂

| **Grubbs-II-Katalysator** | | | **Salz** | | **Temperatur** |
|---|---|---|---|---|---|
| Menge | Menge | Ru | Art | Menge | |
| [mg] | [phr] | [ppm] | | [phr] | [°C] |
| 20 | 0,05 | 60 | CaCl₂ | 2 | 23 |

| **Analytische Daten** | **Reaktionszeit [min.]** | | | | | |
|---|---|---|---|---|---|---|
| | **0** | **30** | **60** | **90** | **180** | **420** |
| **M_{w} [kg/mol]** | 186.832 | 84.409 | 61.838 | 44.220 | 25.228 | 16.827 |
| **Mₙ [kg/mol]** | 60.000 | 38.993 | 31.428 | 25.218 | 14.646 | 10.800 |
| **PDI** | 3,1 | 2,2 | 2,0 | 1,8 | 1,7 | 1,6 |

### 1.11 Erfindungsgemäßes Beispiel: Grubbs-II-Katalysator mit 5 phr CaCl₂

| **Grubbs-II-Katalysator** | | | **Salz** | | **Temperatur** |
|---|---|---|---|---|---|
| Menge | Menge | Ru | Art | Menge | |
| [mg] | [phr] | [ppm] | | [phr] | [°C] |
| 20 | 0,05 | 60 | CaCl₂ | 5 | 23 |

| **Analytische Daten** | **Reaktionszeit [min.]** | | | | | |
|---|---|---|---|---|---|---|
| | **0** | **30** | **60** | **90** | **180** | **420** |
| **M_{w} [kg/mol]** | 186.832 | 88.402 | 59.597 | 44.464 | 26.900 | 17.933 |
| **Mₙ [kg/mol]** | 60.000 | 37.704 | 29.340 | 24.415 | 15.978 | 11.324 |
| **PDI** | 3,1 | 2,3 | 2,0 | 1,8 | 1,7 | 1,6 |

### 1.12 Erfindungsgemäßes Beispiel: Grubbs-II-Katalysator mit 10 phr CaCl₂

| **Grubbs-II-Katalysator** | | | **Salz** | | **Temperatur** |
|---|---|---|---|---|---|
| Menge | Menge | Ru | Art | Menge | |
| [mg] | [phr] | [ppm] | | [phr] | [°C] |
| 20 | 0,05 | 60 | CaCl₂ | 10 | 23 |

| **Analytische Daten** | **Reaktionszeit [min.]** | | | | | |
|---|---|---|---|---|---|---|
| | **0** | **30** | **60** | **90** | **180** | **420** |
| **M_{w} [kg/mol]** | 186.832 | 95.414 | 64.055 | 45.408 | 26.883 | 15.974 |
| **Mₙ [kg/mol]** | 60.000 | 41.172 | 32.139 | 24.193 | 17.000 | 9.806 |
| **PDI** | 3,1 | 2,3 | 2,0 | 1,9 | 1,6 | 1,6 |

### 2.0 NBR-Abbau unter Verwendung des Hoveyda-Katalysators

### 2.01 Vergleichsversuch: Hoveyda-Katalysator ohne Salzzusatz

| **Hoveyda-Katalysator** | | | **Salz** | | **Temperatur** |
|---|---|---|---|---|---|
| Menge | Menge | Ru | Art | Menge | |
| [mg] | [phr] | [ppm] | | [phr] | [°C] |
| 14,77 | 0,037 | 60 | - | - | 23 |

| **Analytische Daten** | **Reaktionszeit [min.]** | | | | | |
|---|---|---|---|---|---|---|
| | **0** | **30** | **60** | **90** | **180** | **420** |
| **M_{w} [kg/mol]** | 186.832 | 53.835 | 49.500 | 48.033 | 48.402 | 47.425 |
| **Mₙ [kg/mol]** | 60.000 | 28.715 | 27.249 | 25.651 | 26.425 | 25.205 |
| **PDI** | 3,1 | 1,9 | 1,8 | 1,8 | 1,8 | 1,8 |

### 2.02 Erfindungsgemäßes Beispiel: Hoveyda-Katalysator mit 2 phr CaCl₂

| **Hoveyda-Katalysator** | | | | **Salz** | **Temperatur** |
|---|---|---|---|---|---|
| Menge | Menge | Ru | Art | Menge | |
| [mg] | [phr] | [ppm] | | [phr] | [°C] |
| 14,77 | 0,037 | 60 | CaCl₂ | 2 | 23 |

| **Analytische Daten** | **Reaktionszeit [min.]** | | | | | |
|---|---|---|---|---|---|---|
| | **0** | **30** | **60** | **90** | **180** | **420** |
| **M_{w} [kg/mol]** | 186.832 | 33.063 | 22.800 | 20.092 | 16.384 | 13t0t5 |
| **Mₙ [kg/mol]** | 60.000 | 19.293 | 13.771 | 11.797 | 10.428 | 8.226 |
| **PDI** | 3,1 | 1,7 | 1,7 | 1,7 | 1,6 | 1,6 |

### 3.00 NBR-Abbau unter Verwendung des Grela-Katalysators

### 3.01 Vergleichsversuch: Grela-Katalysator ohne Salzzusatz

| **Grela-Katalysator** | | | **Salz** | | **Temperatur** |
|---|---|---|---|---|---|
| Menge | Menge | Ru | Art | Menge | |
| [mg] | [phr] | [ppm] | | [phr] | [°C] |
| 15,8 | 0,0395 | 65 | - | - | 23 |

| **Analytische Daten** | **Reaktionszeit [min.]** | | | | | |
|---|---|---|---|---|---|---|
| | **0** | **30** | **60** | **90** | **180** | **420** |
| **M_{w} [kg/mol]** | 186.832 | 48.336 | 48.742 | 46.987 | 46.579 | 45.662 |
| **Mₙ [kg/mol]** | 60.000 | 26.657 | 28.093 | 27.230 | 24.504 | 25.585 |
| **PDI** | 3,1 | 1,8 | 1,7 | 1,7 | 1,9 | 1,8 |

### 3.02 Erfindungsgemäßes Beispiel: Grela-Katalysator mit 2 phr Calciumchlorid

| **Grela-Katalys tor** | | | **Salz** | | **Temperatur** |
|---|---|---|---|---|---|
| Menge | Menge | Ru | Art | Menge | |
| [mg] | [phr] | [ppm] | | [phr] | [°C] |
| 15,8 | 0,0395 | 65 | **CaCl₂** | 2 | 23 |

| **Analytische Daten** | **Reaktionszeit [min.]** | | | | | |
|---|---|---|---|---|---|---|
| | **0** | **30** | **60** | **90** | **180** | **420** |
| **M_{w} [kg/mol]** | 186.832 | 24.292 | 17.800 | 16.547 | 14.213 | 11.316 |
| **Mₙ [kg/mol]** | 60.000 | 14.574 | 11.047 | 10.519 | 9.390 | 7.008 |
| **PDI** | 3,1 | 1,7 | 1,6 | 1,6 | 1,5 | 1,6 |

### 4.01 Vergleichsversuch: Grubbs-II-Katalysator mit 2 phr Zinn(II)chlorid * 2 H₂O

| **Grubbs-II-Katalysator** | | **Salz** | | **Temperatur** |
|---|---|---|---|---|
| Menge | Menge | Art | Menge | |
| [mg] | [phr] | | [phr] | [°C] |
| 20 | 0,05 | SnCl₂ * 2 H₂O | 2 | 23 |

| **Analytische Daten** | **Reaktionszeit [min.]** | | | | | |
|---|---|---|---|---|---|---|
| | **0** | **30** | **60** | **90** | **180** | **420** |
| **M_{w} [kg/mol]** | 186.832 | 182.823 | 103.018 | 95.448 | 94.975 | 89.419 |
| **Mₙ [kg/mol]** | 60.000 | 46.986 | 33.650 | 27.233 | 30.906 | 26.491 |
| **PDI** | 3,1 | 3,89 | 3,06 | 3,50 | 3,07 | 3,37 |

### 4.02 Vergleichsversuch: Grubbs-II-Katalysator mit 0,5 phr Zinn(II)chlorid * 2 H₂O

| **Grubbs-II-Katalysator** | | **Salz** | | **Temperatur** |
|---|---|---|---|---|
| Menge | Menge | Art | Menge | |
| [mg] | [phr] | | [phr] | [°C] |
| 20 | 0,05 | SnCl₂ * 2H₂O | 0,5 | 23 |

| **Analytische Daten** | **Reaktionszeit [min.]** | | | | | |
|---|---|---|---|---|---|---|
| | **0** | **30** | **60** | **90** | **180** | **420** |
| **M_{w} [kg/mol]** | 186.832 | 97.588 | 99.369 | 82.183 | 75.589 | 75.197 |
| **Mₙ [kg/mol]** | 60.000 | 27.057 | 35.402 | 27.920 | 31.320 | 25.228 |
| **PDI** | 3,1 | 3,6 | 2,8 | 2,94 | 2,41 | 2,98 |

### 4.03 Vergleichsversuch: Grubbs-II-Katalysator mit 2 phr Zinn(II)chlorid (wasserfrei)

| **Grabbs-II-Katalysator** | | **Salz** | | **Temperatur** |
|---|---|---|---|---|
| Menge | Menge | Art | Menge | |
| [mg] | [phr] | | [phr] | [°C] |
| 20 | 0,05 | SnCl₂ | 2 | 23 |

| **Analytische Daten** | **Reaktionszeit [min.]** | | | | | |
|---|---|---|---|---|---|---|
| | **0** | **30** | **60** | **90** | **180** | **420** |
| **M_{w} [kg/mol]** | 186.832 | 138.602 | 129.318 | 132.987 | 155.772 | 132.360 |
| **Mₙ [kg/mol]** | 60.000 | 29.298 | 28.047 | 23.814 | 34.319 | 28.654 |
| **PDI** | 3,1 | 4,73 | 4,61 | 5,58 | 4,53 | 4,61 |

### 4.04 Vergleichsversuch: Grubbs-II-Katalysator mit 0,5 phr Zinn(II)chlorid (wasserfrei)

| **Grubbs-II-Katalysator** | | **Salz** | | **Temperatur** |
|---|---|---|---|---|
| Menge | Menge | Art | Menge | |
| [mg] | [phr] | | [phr] | [°C] |
| 20 | 0,05 | SnCl₂ | 0,5 | 23 |

| **Analytische Daten** | **Reaktionszeit [min.]** | | | | | |
|---|---|---|---|---|---|---|
| | **0** | **30** | **60** | **90** | **180** | **420** |
| **M_{w} [kg/mol]** | 186.832 | 172.740 | 179.958 | 165.102 | 195.872 | 172.011 |
| **Mₙ [kg/mol]** | 60.000 | 52.378 | 64.693 | 55.153 | 80.763 | 61.117 |
| **PDI** | 3,1 | 3,29 | 2,78 | 2,99 | 2,42 | 2,81 |

### 5.01 Vergleichsversuch: Grubbs-II-Katalysator mit 2 phr Eisen(II)chlorid (wasserfrei)

| **Grubbs-II-Katalysator** | | **Salz** | | **Temperatur** |
|---|---|---|---|---|
| Menge | Menge | Art | Menge | |
| [mg] | [phr] | | [phr] | [°C] |
| 20 | 0,05 | FeCl₂ | 2 | 23 |

| **Analytische Daten** | **Reaktionszeit [min.]** | | | | | |
|---|---|---|---|---|---|---|
| | **0** | **30** | **60** | **90** | **180** | **420** |
| **M_{w} [kg/mol]** | 186.832 | 164.895 | 130.683 | 116.729 | 99.024 | 78.434 |
| **Mₙ [kg/mol]** | 60.000 | 76.853 | 65.115 | 61.606 | 52.624 | 43.608 |
| **PDI** | 3,1 | 2,14 | 2,00 | 1,89 | 1,88 | 1,79 |

### 5.02 Vergleichsversuch: Grubbs-II-Katalysator mit 0,5 phr Eisen(II)chlorid (wasserfrei)

| **Grubbs-II-Katalysator** | | **Salz** | | **Temperatur** |
|---|---|---|---|---|
| Menge | Menge | Art | Menge | |
| [mg] | [phr] | | [phr] | [°C] |
| 20 | 0,05 | FeCl₂ | 2 | 23 |

| **Analytische Daten** | **Reaktionszeit [min.]** | | | | | |
|---|---|---|---|---|---|---|
| | **0** | **30** | **60** | **90** | **180** | **420** |
| **M_{w} [kg/mol]** | 186.832 | 161.754 | 102.060 | 125.433 | 104.398 | 84.933 |
| **Mₙ [kg/mol]** | 60.000 | 69.453 | 73.226 | 63.871 | 57.623 | 46.604 |
| **PDI** | 3,1 | 2,32 | 2,01 | 1,96 | 1,81 | 1,82 |

### 6. Einsatz von CaCl₂ zur Ringschlussmetathese von Diethyldiallylmalonat

Die Ringschlussmetathese von Diethyldiallylmalonat unter Einsatz des Grubbs-II-Katalysators (4.01 und 4.02) wurde einmal ohne und einmal mit 1 mg CaCl₂ durchgeführt. 10 mg Grubbs-II-Katalysator (0,0118 mmol) wurden in ein Probengläschen in der Glovebox abgewogen, welches mit einem Septum verschlossen und aus der Glovebox genommen wurde. Der Katalysator wurde in 0,3 mL Chlorbenzol (nicht deuteriert) gelöst und in das NMR Röhrchen überführt. Anschließend wurde das Probengläschen mit 0,2 mL deuteriertem Chloroform (CDCl₃) nachgespült und das CDCl₃ wurde ebenfalls in das NMR Röhrchen überführt. Bei dem Versuch mit Calciumchlorid wurde noch ca. 1 mg Calciumchlorid in das NMR Röhrchen gegeben. Durch Hinzufügen von 0,151 mL (0,625 mmol) Diethyldiallylmalonat (ALDRICH) wurde die Reaktion gestartet. Die Reaktionen verliefen unter Raumtemperatur. Nach definierten Zeitabständen wurde jeweils ein ¹H-NMR Spektrum aufgenommen.

Die Reaktionsumsätze wurden mittels HNMR bestimmt. Die nachfolgende Tabelle zeigt deutlich die beschleunigende Wirkung des Zusatzes von CaCl₂ auf die Ringschlussmetathese des Diethyldiallylmalonats (DEDAM).

**Ringschlussmetathese von DEDAM mit Grubbs-II-Katalysator:**

| **Reaktionszeit [min]** | **Umsatz (ohne CaCl₂)** | **Umsatz (mit CaCl₂)** |
|---|---|---|
| 0 | 0% | 0% |
| 5 | 35,1% | 37,9% |
| 15 | 71,4% | 77,3% |
| 30 | 87,8% | 96,4% |
| 60 | 97,7% | 100% |
| 90 | 100% | 100% |

## Patentansprüche

1. Katalysator-System umfassend einen Metathese-Katalysator, bei dem es sich um einen Komplexkatalysator auf Basis eines Metalls der 6. oder 8. Nebengruppe des Periodensystems handelt und der mindestens einen carbenartig an das Metall gebundenen Liganden aufweist, und ein Erdalkalimetallchlorid, bevorzugt Calciumchlorid oder Magnesiumchlorid.

2. Katalysator-System gemäß Anspruch 1, wobei ein Komplexkatalysator auf Basis von Molybdän, Wolfram, Osmium oder Ruthenium eingesetzt wird.

3. Katalysator-System gemäß Anspruch 1, wobei als Katalysator Verbindungen der allgemeinen Formel (A) eingesetzt werden, 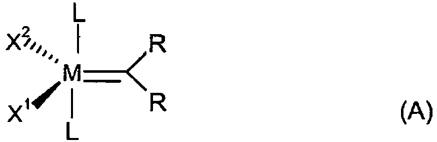 worin
M Osmium oder Ruthenium bedeutet,
X¹ und X² gleich oder verschieden sind und zwei anionische Liganden darstellen,
L gleiche oder verschiedene neutrale Elektronen-Donor-Liganden darstellen,
R gleich oder verschieden sind und Wasserstoff, einen Alkyl-, bevorzugt C₁-C₃₀-Alkyl-, Cycloalkyl-, bevorzugt C₃-C₂₀-Cycloalkyl-, Alkenyl-, bevorzugt C₂-C₂₀Alkenyl-, Alkinyl-, bevorzugt C₂-C₂₀-Alkinyl-, Aryl-, bevorzugt C₆-C₂₄-Aryl-, Carboxylat-, bevorzugt C₁-C₂₀-Carboxylat-, Alkoxy-, bevorzugt C₁-C₂₀-Alkoxy-, Alkenyloxy-, bevorzugt C₂-C₂₀-Alkenyloxy-, Alkinyloxy-, bevorzugt C₂-C₂₀-Alkinyloxy-, Aryloxy-, bevorzugt C₆-C₂₄-Aryloxy, Alkoxycarbonyl-, bevorzugt C₂-C₂₀-Alkoxycarbonyl-, Alkylamino-, bevorzugt C₁-C₃₀-Alkylamino, Alkylthio-, bevorzugt C₁-C₃₀-Alkylthio, Arylthio-, bevorzugt C₆-C₂₄-Arylthio, Alkylsulfonyl-, bevorzugt C₁-C₂₀-Alkylsulfonyl, oder Alkylsulfinyl, bevorzugt C₁-C₂₀-Alkylsulfinyl-Rest darstellen, die alle jeweils durch ein oder mehrere Alkyl-, Halogen-, Alkoxy-, Aryl- oder Heteroaryl-Reste substituiert sein können, oder alternativ beide Reste R unter Einbindung des gemeinsamen C-Atoms, an das sie gebunden sind, zu einer cyclischen Gruppe verbrÃ¼ckt sind, die aliphatischer oder aromatischer Natur sein kann, gegebenenfalls substituiert ist und ein oder mehrere Heteroatome enthalten kann.

4. Katalysator-System gemäß Anspruch 3, wobei X¹ und X² gleich oder verschieden sind und Wasserstoff, Halogen, Pseudohalogen, C₁-C₂₀-Alkoxy, C₆-C₂₄-Aryloxy, C₃-C₂₀-Alkyldiketonat, C₆-C₂₄-Aryldiketonat, C₁-C₂₀-Carboxylat, C₁-C₂₀-Alkylsulfonat, C₆-C₂₄-Arylsulfonat, C₁-C₂₀-Alkylthiol, C₆-C₂₄-Arylthiol, C₁-C₂₀-Alkylsulfonyl oder C₁-C₂₀-Alkylsulfinyl-Reste bedeuten.

5. Katalysator-System gemäß Anspruch 3 oder 4, wobei X¹ und X² gleich oder verschieden sind und Halogen, insbesondere Fluor, Chlor, Brom oder Jod, Benzoat, C₁-C₅-Carboxylat, C₁-C₅-Alkyl, Phenoxy, C₁-C₅-Alkoxy, C₁-C₅-Alkylthiol, C₆-C₂₄-Arylthiol, C₆-C₂₄-Aryl oder C₁-C₅-Alkylsulfonat bedeuten.

6. Katalysator-System gemäß einem oder mehreren der AnsprÃ¼che 3 bis 5, wobei X¹ und X² identisch sind und Halogen, insbesondere Chlor, CF₃COO, CH₃COO, CFH₂COO, (CH₃)₃CO, (CF₃)₂(CH₃)CO, (CF₃)(CH₃)₂CO, PhO (Phenoxy), MeO (Methoxy), EtO (Ethoxy), Tosylat (p-CH₃-C₆H₄-SO₃), Mesylat (2,4,6-Trimethylphenyl) oder CF₃SO₃ (Trifluormethansulfonat) bedeuten.

7. Katalysator-System gemäß einem oder mehreren der AnsprÃ¼che 3 bis 6, wobei die beiden Liganden L unabhÃ¤ngig voneinander einen Phosphin-, sulfonierten Phosphin-, Phosphat-, Phosphinit-, Phosphonit-, Arsin-, Stibin-, Ether-, Amin-, Amid-, Sulfoxid-, Carboxyl-, Nitrosyl-, Pyridin-, Thioether- oder einen Imidazolidin("Im")-Liganden bedeuten.

8. Katalysator-System gemäß Anspruch 7, wobei der Imidazolidinrest (Im) eine Struktur der allgemeinen Formeln (IIa) oder (IIb) auf weist, 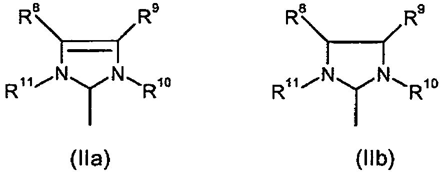 worin
R⁸, R⁹, R¹⁰, R¹¹ gleich oder verschieden sind und Wasserstoff, geradkettiges oder verzweigtes C₁-C₃₀-Alkyl, C₃-C₂₀-Cycloalkyl, C₂-C₂₀-Alkenyl, C₂-C₂₀-Alkinyl, C₆-C₂₄-Aryl, C₁-C₂₀-Carboxylat, C₁-C₂₀-Alkoxy, C₂-C₂₀-Alkenyloxy, C₂-C₂₀-Alkinyloxy, C₆-C₂₀-Aryloxy, C₂-C₂₀-Alkoxycarbonyl, C₁-C₂₀-Alkylthio, C₆-C₂₀-Arylthio, C₁-C₂₀-Alkylsulfonyl, C₁-C₂₀-Alkylsulfonat, C₆-C₂₀-Arylsulfonat oder C₁-C₂₀-Alkylsulfinyl bedeuten, wobei alle zuvor genannten Reste gegebenenfalls substituiert sind.

9. Katalysator-System nach einem oder mehreren der Ansprüche 1 bis 8, wobei Katalysatoren der allgemeinen Formel (A1) eingesetzt werden, 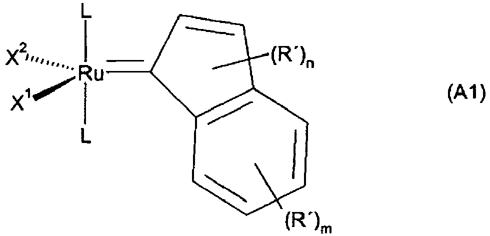 worin
X¹, X² und L die gleichen allgemeinen, bevorzugten und besonders bevorzugten Bedeutungen haben können wie in der allgemeinen Formel (A),
n gleich 0, 1 oder 2 ist,
m gleich 0, 1, 2, 3 oder 4 ist und
R' gleich oder verschieden sind und Alkyl-, Cycloalkyl-, Alkenyl-, Alkinyl-, Aryl-, Alkoxy-, Alkenyloxy-, Alkinyloxy-, Aryloxy-, Alkoxycarbonyl-, Alkylamino-, Alkylthio-, Arylthio-, Alkylsulfonyl- oder Alkylsulfinyl-Reste bedeuten können, die alle jeweils durch ein oder mehrere Alkyl-, Halogen-, Alkoxy-, Aryl- oder Heteroaryl-Reste substituiert sein können.

10. Katalysator-System gemäß Anspruch 1, wobei der Katalysator die Struktur (IV), (V) oder (VI) besitzt, wobei Cy jeweils für Cyclohexyl, Mes für 2,4,6-Trimethylphenyl und Ph für Phenyl steht.

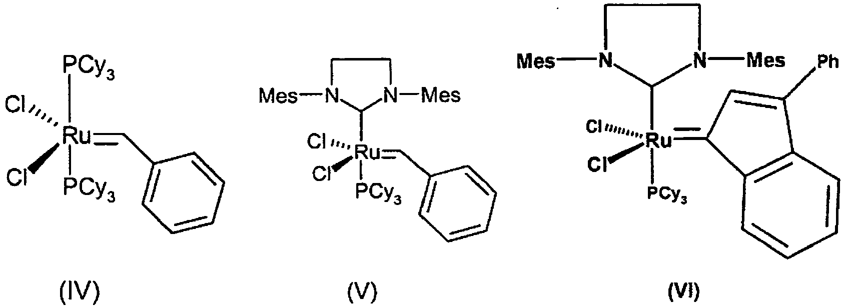

11. Katalysator-System gemäß Anspruch 1, wobei Katalysatoren der allgemeinen Formel (B) eingesetzt werden, 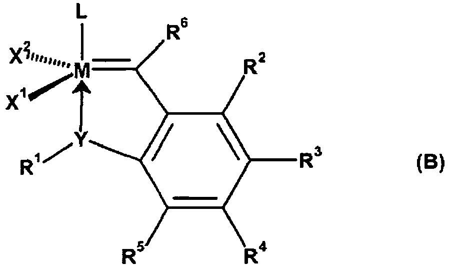 worin
M Ruthenium oder Osmium bedeutet,
Y Sauerstoff (O), Schwefel (S), einen Rest N-R¹ oder einen Rest P-R¹ bedeutet,
X¹ und X² gleiche oder verschiedene anionische Liganden sind,
R¹ einen Alkyl-, Cycloalkyl-, Alkenyl-, Alkinyl-, Aryl-, Alkoxy-, Alkenyloxy-, Alkinyloxy-, Aryloxy-, Alkoxycarbonyl-, Alkylamino-, Alkylthio-, Arylthio-, Alkylsulfonyl- oder Alkylsulfinyl-Rest darstellt, die alle jeweils optional durch ein oder mehrere Alkyl-, Halogen-, Alkoxy-, Aryl- oder Heteroaryl-Reste substituiert sein können,
R², R³, R⁴ und R⁵ gleich oder verschieden sind und Wasserstoff, organische oder anorganische Reste darstellen,
R⁶ Wasserstoff, einen Alkyl-, Alkenyl-, Alkinyl- oder einen Aryl-Rest bedeutet und
L ein Ligand ist, der die gleichen Bedeutungen besitzt, wie der Ligand L in der in Anspruch 7 genannten Formel (A).

12. Katalysator-System gemäß Anspruch 11, wobei L einen P(R⁷)₃ Rest darstellt, wobei R⁷ unabhängig voneinander C₁-C₆-Alkyl, C₃-C₈-Cycloalkyl oder Aryl bedeuten, oder aber L für einen gegebenenfalls substituierten Imidazolidinrest ("Im") steht, der bevorzugt die Struktur der in Anspruch 8 genannten allgemeinen Formeln (IIa) und (IIb) besitzt und besonders bevorzugt eine der nachfolgenden Strukturen (IIIa) bis (IIIf) aufweist, wobei Mes jeweils für einen 2,4,6-Trimethylphenyl-Rest oder alternativ jeweils für einen 2,6-Diisopropylphenyl-Rest steht.

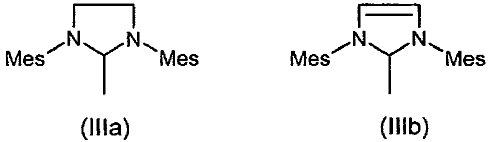

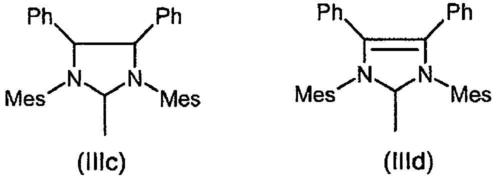

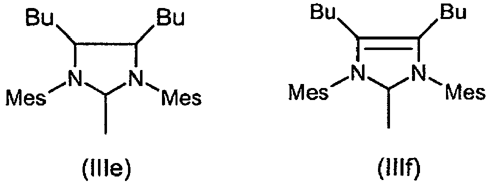

13. Katalysator-System gemäß Anspruch 11 oder 12, wobei X¹ und X² in der allgemeinen Formel (B) die Bedeutungen besitzen können, die X¹ und X² in den Ansprüchen 4-6 besitzen.

14. Katalysator-System gemäß einem oder mehreren der Ansprüche 11 bis 13, wobei Katalysatoren gemäß der allgemeinen Formel (B1) eingesetzt werden, 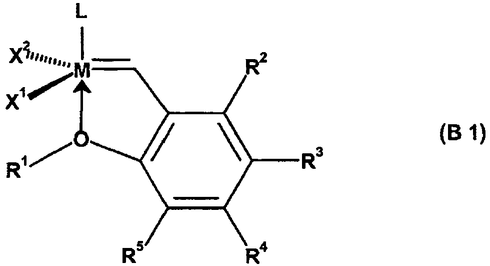 worin
M, L, X¹, X², R¹, R², R³, R⁴ und R⁵ die für die allgemeine Formel (B) in Anspruch 11 genannten Bedeutungen besitzen.

15. Katalysator-System gemäß Anspruch 14, wobei Katalysatoren gemäß der allgemeinen Formel (B1) eingesetzt werden, worin
M Ruthenium bedeutet,
X¹ und X² gleichzeitig Halogen, insbesondere Chlor bedeuten,
R¹ für einen geradkettigen oder verzweigten C₁-C₁₂ Alkylrest steht,
R², R³, R⁴, R⁵ die für die allgemeine Formel (B) in Anspruch 11 genannten Bedeutungen besitzen und
L die für die allgemeine Formel (B) in Anspruch 11 genannten Bedeutungen besitzt.

16. Katalysator-System gemäß Anspruch 14, wobei Katalysatoren gemäß der allgemeinen Formel (B1) eingesetzt werden, worin
M Ruthenium darstellt,
X¹ und X² gleichzeitig Chlor bedeuten,
R¹ für einen Isopropyl-Rest steht,
R², R³, R⁴, R⁵ alle Wasserstoff bedeuten und
L einen gegebenenfalls substituierten Imidazolidin-Rest der Formeln (IIa) oder (IIb) darstellt, 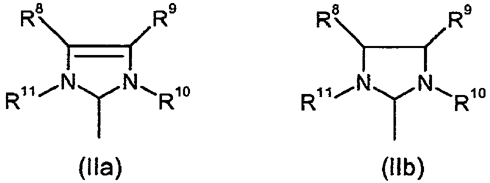
worin
R⁸, R⁹, R¹⁰, R¹¹ gleich oder verschieden sind und Wasserstoff, geradkettiges oder verzweigtes C₁-C₃₀-Alkyl, C₃-C₂₀-Cylcoalkyl, C₂-C₂₀-Alkenyl, C₂-C₂₀-Alkinyl, C₆-C₂₄-Aryl, C₁-C₂₀-Carboxylat, C₁-C₂₀-Alkoxy, C₂-C₂₀-Alkenyloxy, C₂-C₂₀-Alkinyloxy, C₆-C₂₄-Aryloxy, C₂-C₂₀-Alkoxycarbonyl, C₁-C₂₀-Alkylthio, C₆-C₂₄-Arylthio, C₁-C₂₀-Alkylsulfonyl, C₁-C₂₀-Alkylsulfonat, C₆-C₂₄-Arylsulfonat oder C₁-C₂₀-Alkylsulfinyl bedeuten.

17. Katalysator-System gemäß Anspruch 14, wobei als Katalysator der allgemeinen Strukturformel (B1) ein Katalysator der nachfolgenden Strukturen (VII), (VIII), (IX), (X), (XI), (XII), (XIII), (XIV) oder (XV) eingesetzt wird, wobei Mes jeweils 2,4,6-Trimethylphenyl bedeutet.

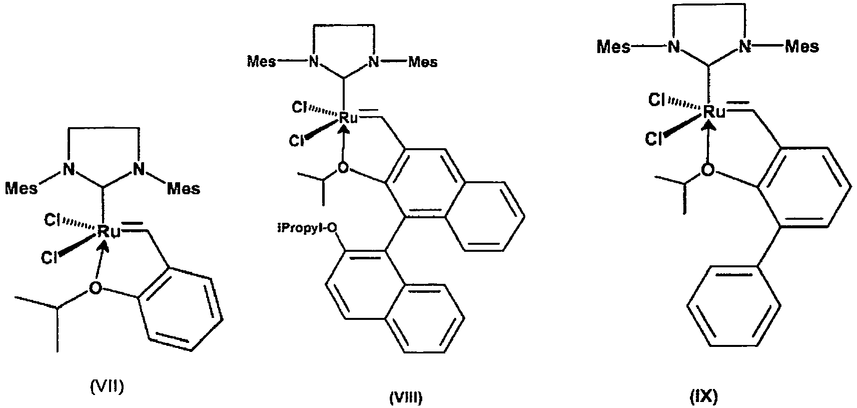

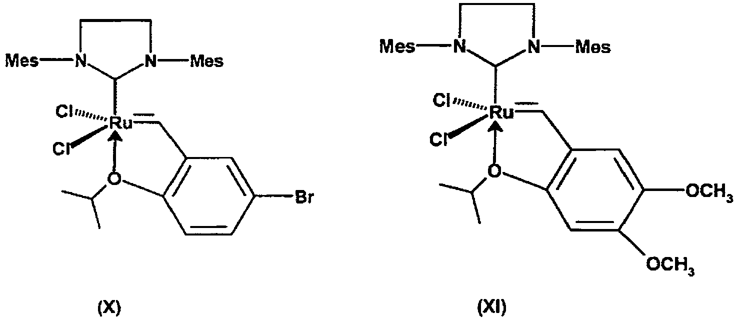

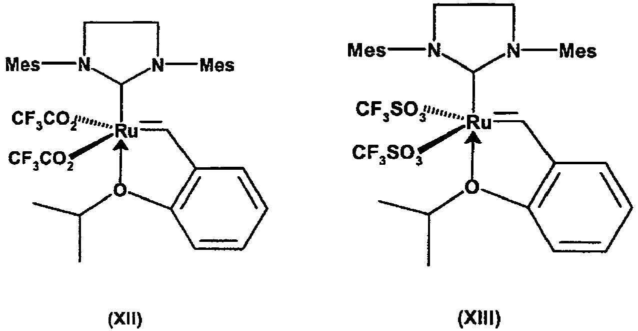

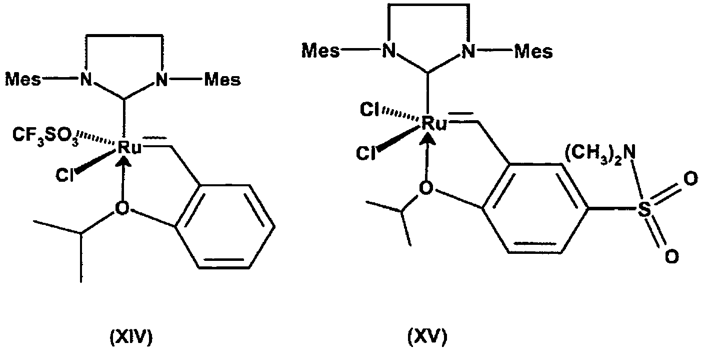

18. Katalysator-System gemäß Anspruch 11, wobei ein Katalysator der allgemeinen Formel (B2) eingesetzt wird, 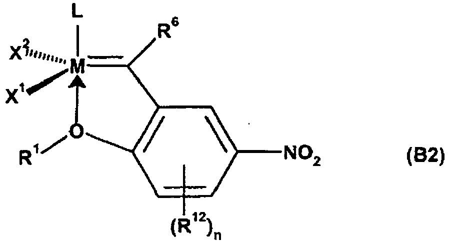 worin
M, L, X¹, X², R¹ und R⁶ die für die allgemeine Formel (B) in Anspruch 11 genannten Bedeutungen haben,
R¹² gleich oder verschieden sind und die für die Reste R², R³, R⁴ und R⁵ in der allgemeinen Formel (B) in Anspruch 11 genannten Bedeutungen, ausgenommen Wasserstoff, besitzen und
n gleich 0, 1, 2 oder 3 ist.

19. Katalysator-System gemäß Anspruch 18, wobei ein Katalysator der folgenden Strukturen (XVI) oder (XVII) eingesetzt wird, wobei Mes jeweils 2,4,6-Trimethylphenyl bedeutet.

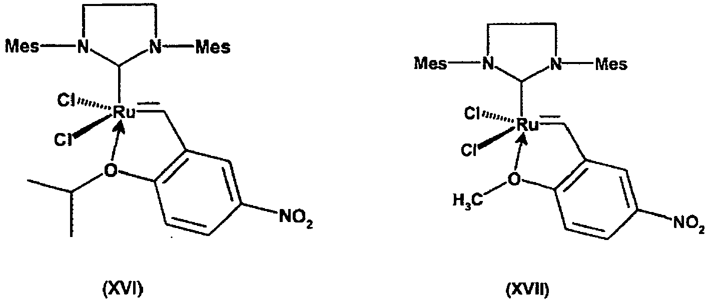

20. Katalysator-System gemäß Anspruch 11, wobei ein Katalysator der allgemeinen Formel (B3) eingesetzt wird, 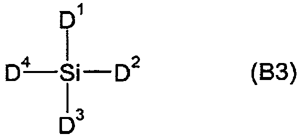 worin D¹, D², D³ und D⁴ jeweils eine Struktur der nachfolgend dargestellten allgemeinen Formel (XVIII) aufweisen, die über die Methylengruppe an das Silicium der Formel (B3) angebunden ist und 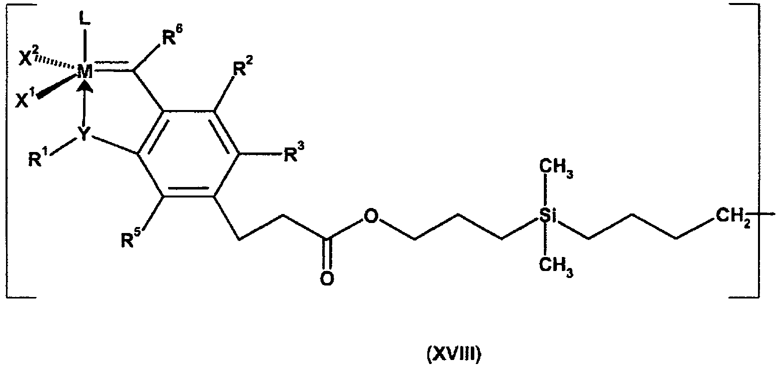 worin
M, L, X¹, X², R¹, R², R³, R⁵ und R⁶ die für die allgemeine Formel (B) in Anspruch 11 genannten Bedeutungen besitzen.

21. Katalysator-System gemäß Anspruch 1, wobei ein Katalysator allgemeinen Formel (B4) eingesetzt wird, 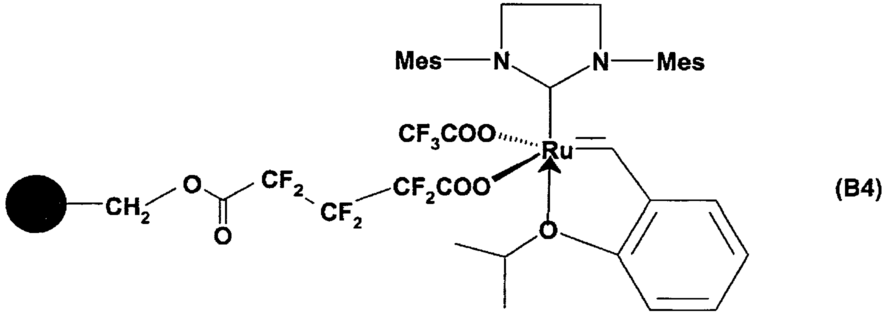 worin das Symbol 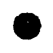
für einen Träger steht.

22. Katalysator-System gemäß Anspruch 1, wobei ein Katalysator der allgemeinen Formel (C) eingesetzt wird, 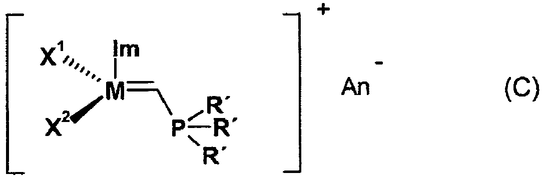 worin
M Ruthenium oder Osmium bedeutet,
X¹ und X² gleich oder verschieden sind und anionische Liganden darstellen,
R' gleich oder verschieden sind und einen geradkettigen oder verzweigten C₁-C₃₀-Alkyl-, C₅-C₃₀-Cylcoalkyl- oder Aryl-Rest bedeuten, wobei die C₁-C₃₀-Alkylreste gegebenenfalls durch ein oder mehrere Doppel-oder Dreifachbindungen oder auch ein oder mehrere Heteroatome, bevorzugt Sauerstoff oder Stickstoff, unterbrochen sein können,
Im einen gegebenenfalls substituierten Imidazolidinrest darstellt und
An ein Anion darstellt.

23. Katalysator-System gemäß Anspruch 1, wobei ein Katalysator der allgemeinen Formel (D) eingesetzt wird, 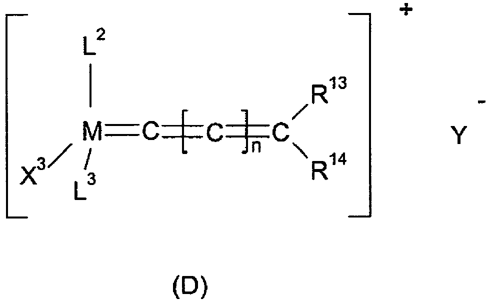 worin
M Ruthenium oder Osmium bedeutet,
R¹³ und R¹⁴ unabhängig voneinander Wasserstoff, C₁-C₂₀-Alkyl, C₂-C₂₀-Alkenyl, C₂-C₂₀ Alkinyl, C₆-C₂₄-Aryl, C₁-C₂₀-Carboxylat, C₁-C₂₀-Alkoxy, C₂-C₂₀-Alkenyloxy, C₂-C₂₀-Alkinyloxy, C₆-C₂₄-Aryloxy, C₂-C₂₀-Alkoxycarbonyl, C₁-C₂₀-Alkylthio, C₁-C₂₀-Alkylsulfonyl oder C₁-C₂₀-Alkylsulfinyl bedeuten,
X³ ein anionischer Ligand ist,
L² ein neutraler π-gebundener Ligand ist, unabhängig davon, ob mono- oder polycyclisch,
L³ einen Ligand aus der Gruppe der Phosphine, sulfonierten Phosphine, fluorierten Phosphine, funktionalisierten Phosphine mit bis zu drei Aminoalkyl-, Ammoniumalkyl, Alkoxyalkyl, Alkoxycarbonylalkyl, Hydrocarbonylalkyl-, Hydroxyalkyl- oder Ketoalkyl-Gruppen, Phosphite, Phosphinite, Phosphonite, Phosphinamine, Arsine, Stibine, Ether, Amine, Amide, Imine, Sulfoxide, Thioether und Pyridine darstellt,
Y⁻ ein nicht-koordinierendes Anion ist und
n 0, 1, 2, 3, 4 oder 5 ist.

24. Katalysator-System gemäß Anspruch 1, wobei ein Katalysator der allgemeinen Formel (E)
eingesetzt wird, 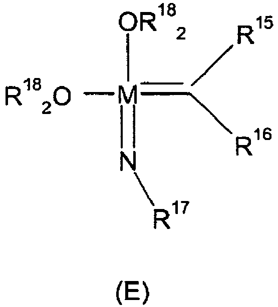 worin
M² Molybdän oder Wolfram ist,
R¹⁵ und R¹⁶ gleich oder verschieden sind und Wasserstoff, C₁-C₂₀-Alkyl, C₂-C₂₀-Alkenyl, C₂-C₂₀-Alkinyl, C₆-C₂₄-Aryl, C₁-C₂₀-Carboxylat, C₁-C₂₀-Alkoxy, C₂-C₂₀-Alkenyloxy, C₂-C₂₀-Alkinyloxy, C₆-C₂₄-Aryloxy, C₂-C₂₀-Alkoxy-carbonyl, C₁-C₂₀-Alkylthio, C₁-C₂₀-Alkylsulfonyl oder C₁-C₁₀ Alkylsulfinyl bedeuten,
R¹⁷ and R¹⁸ gleich oder verschieden sind und einen substituierten oder einen halogensubstituierten C₁-C₂₀-Alkyl, C₆-C₂₄-Aryl, C₆-C₃₀-Aralkyl-Rest oder Silikon-enthaltende Analoga davon darstellen.

25. Katalysator-System gemäß Anspruch 1, wobei ein Katalysator der allgemeinen Formel (F) eingesetzt wird, 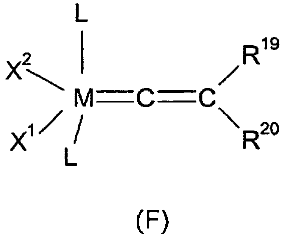 worin
M Ruthenium oder Osmium bedeutet,
X¹ und X² gleich oder verschieden sind und anionische Liganden darstellen, die alle Bedeutungen annehmen können, die X¹ und X² in der allgemeinen Formel (A) in den Ansprüchen 4-6 besitzen,
L gleiche oder verschiedene Liganden darstellt, die alle Bedeutungen von L in den allgemeinen Formeln (A) und (B) annehmen können und
R¹⁹ and R²⁰ gleich oder verschieden sind und Wasserstoff oder substituiertes oder unsubstituiertes Alkyl bedeuten.

26. Katalysator-System gemäß Anspruch 1, wobei ein Katalysator der allgemeinen Formeln (G), (H) oder (K) eingesetzt wird, 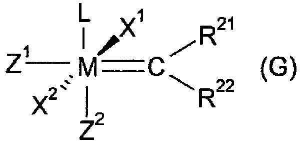 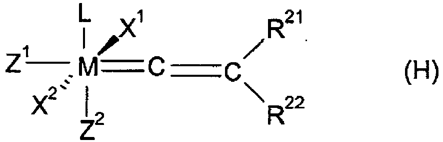 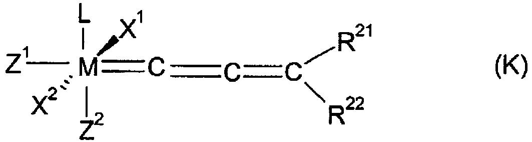 worin
M Osmium oder Ruthenium bedeutet,
X¹ und X² gleich oder verschieden sind und zwei anionische Liganden, darstellen,
L einen neutralen Elektronen-Donor-Liganden darstellt,
Z¹ und Z² gleich oder verschieden sind und neutrale Elektronen-Donoren darstellen,
R²¹ und R²² unabhängig voneinander Wasserstoff, Alkyl, Cycloalkyl, Alkenyl, Alkinyl, Aryl, Carboxylat, Alkoxy, Alkenyloxy, Alkinyloxy, Aryloxy, Alkoxycarbonyl, Alkylamin, Alkylthio, Alkylsulfonyl oder Alkylsulfinyl bedeuten, die jeweils optional durch ein oder mehrere Reste ausgewählt aus Alkyl, Halogen, Alkoxy, Aryl oder Heteroaryl substituiert sind.

27. Katalysator-System gemäß einem oder mehreren der Ansprüche 1-26, wobei der Metathese-Katalysator und das Erdalkalimetallchlorid in einem Gewichtsverhältnis Erdalkalimetallchlorid : Metathesekatalysator von 0,01:1 bis 10000:1, bevorzugt 0,1:1 bis 1000:1, besonders bevorzugt 0,5:1 bis 500:1 eingesetzt werden.

28. Verwendung der Katalysator-Systeme gemäß einem oder mehreren der Ansprüche 1-27 in Metathese-Reaktionen, bevorzugt in Ringschlussmetathesen (RCM), Kreuzmetathesen (CM) oder Ringöffnungsmetathesen (ROMP).

29. Verwendung der Katalysator-Systeme gemäß einem oder mehreren der Ansprüche 1-27 zur Metathese von Nitrilkautschuk.

30. Verwendung gemäß Anspruch 28 oder 29, wobei das Erdalkalimetallchlorid in einem Dispergiermittel oder ohne Dispergiermittel zu dem Katalysator oder einer Lösung des Katalysators gegeben wird.

31. Verwendung gemäß Anspruch 29 oder 30 , wobei die Menge des im Katalysator-System enthaltenen Katalysators 1 bis 1.000 ppm Edelmetall, bevorzugt 2 bis 500 ppm, insbesondere 5 bis 250 ppm, bezogen auf den eingesetzten Nitrilkautschuk beträgt.

32. Verwendung von Erdalkalimetallchloriden, bevorzugt Magnesiumchlorid oder Calciumchlorid als Bestandteil von Katalysator-Systemen für die Metathese.

33. Verfahren zum Molekulargewichtsabbau von Nitrilkautschuk, wobei als Nitrilkautschuk ein Co- oder Terpolymer eingesetzt wird, welches Wiederholungseinheiten mindestens eines konjugierten Diens, mindestens eines α,β-ungesättigten Nitrils und gegebenenfalls einer oder mehrerer weiterer copolymerisierbarer Monomere enthält und wobei der Nitrilkautschuk gegebenenfalls in Anwesenheit eines Co-Olefins mit dem Katalysator-System gemäß einem oder mehreren der Ansprüche 1 bis 27 in Kontakt gebracht wird.

34. Verfahren gemäß Anspruch 33, wobei man anschließend an den Molekulargewichtsabbau des Nitrilkautschuks eine Hydrierung des Nitrilkautschuks durchführt.

## Claims

1. Catalyst system comprising a metathesis catalyst which is a complex catalyst based on a metal of transition group 6 or 8 of the Periodic Table and has at least one ligand bound in a carbene-like fashion to the metal and an alkaline earth metal chloride, preferably calcium chloride or magnesium chloride.

2. Catalyst system according to Claim 1, wherein a complex catalyst based on molybdenum, tungsten, osmium or ruthenium is used.

3. Catalyst system according to Claim 1, wherein compounds of the general formula (A), 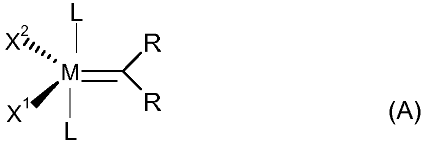 where
M is osmium or ruthenium,
X¹ and X² are identical or different and are two anionic ligands,
the symbols L represent identical or different uncharged electron donor ligands,
the radicals R are identical or different and are each hydrogen, an alkyl, preferably C₁-C₃₀-alkyl, cycloalkyl, preferably C₃-C₂₀-cycloalkyl, alkenyl, preferably C₂-C₂₀-alkenyl, alkynyl, preferably C₂-C₂₀-alkynyl, aryl, preferably C₆-C₂₄-aryl, carboxylate, preferably C₁-C₂₀-carboxylate, alkoxy, preferably C₁-C₂₀-alkoxy, alkenyloxy, preferably C₂-C₂₀-alkenyloxy, alkynyloxy, preferably C₂-C₂₀-alkynyloxy, aryloxy, preferably C₆-C₂₄-aryloxy, alkoxycarbonyl, preferably C₂-C₂₀-alkoxycarbonyl, alkylamino, preferably C₁-C₃₀-alkylamino, alkylthio, preferably C₁-C₃₀-alkylthio, arylthio, preferably C₆-C₂₄-arylthio, alkylsulphonyl, preferably C₁-C₂₀-alkylsulphonyl, or alkylsulphinyl, preferably C₁-C₂₀-alkylsulphinyl radical, which may in each case be substituted by one or more alkyl, halogen, alkoxy, aryl or heteroaryl radicals or, as an alternative, the two radicals R together with the common carbon atom to which they are bound are bridged to form a cyclic group which can be aliphatic or aromatic in nature, may be substituted and may contain one or more heteroatoms, are used as catalyst.

4. Catalyst system according to Claim 3, wherein X¹ and X² are identical or different and are each hydrogen, halogen, pseudohalogen, C₁-C₂₀-alkoxy, C₆-C₂₄-aryloxy, C₃-C₂₀-alkyldiketonate, C₆-C₂₄-aryldiketonate, C₁-C₂₀-carboxylate, C₁-C₂₀-alkylsulphonate, C₆-C₂₄-arylsulphonate, C₁-C₂₀-alkylthiol, C₆-C₂₄-arylthiol, C₁-C₂₀-alkylsulphonyl or C₁-C₂₀-alkylsulphinyl radicals.

5. Catalyst system according to Claims 3 or 4, wherein X¹ and X² are identical or different and are each halogen, in particular fluorine, chlorine, bromine or iodine, benzoate, C₁-C₅-carboxylate, C₁-C₅-alkyl, phenoxy, C₁-C₅-alkoxy, C₁-C₅-alkylthiol, C₆-C₂₄-arylthiol, C₆-C₂₄-aryl or C₁-C₅-alkylsulphonate.

6. Catalyst system according to one or more of Claims 3 to 5, wherein X¹ and X² are identical and are each halogen, in particular chlorine, CF₃COO, CH₃COO, CFH₂COO, (CH₃)₃CO, (CF₃)₂(CH₃)CO, (CF₃) (CH₃)₂CO, PhO (phenoxy), MeO (methoxy), EtO (ethoxy), tosylate (p-CH₃-C₆H₄-SO₃), mesylate (2,4,6-trimethylphenyl) or CF₃SO₃ (trifluoromethanesulphonate).

7. Catalyst system according to one or more of Claims 3 to 6, wherein the two ligands L are each, independently of one another, a phosphine, sulphonated phosphine, phosphate, phosphinite, phosphonite, arsine, stibine, ether, amine, amide, sulphoxide, carboxyl, nitrosyl, pyridine, thioether or imidazolidine ("Im") ligand.

8. Catalyst system according to Claim 7, wherein the imidazolidine radical (Im) has a structure of the general formula (IIa) or (IIb) 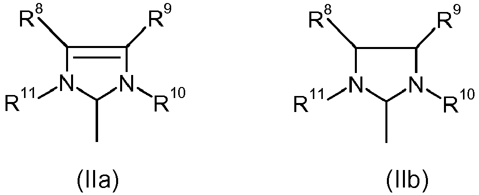 where
R⁸, R⁹, R¹⁰, R¹¹ are identical or different and are each hydrogen, straight-chain or branched C₁-C₃₀-alkyl, C₃-C₂₀-cycloalkyl, C₂-C₂₀-alkenyl, C₂-C₂₀-alkynyl, C₆-C₂₄-aryl, C₁-C₂₀-carboxylate, C₁-C₂₀-alkoxy, C₂-C₂₀-alkenyloxy, C₂-C₂₀-alkynyloxy, C₆-C₂₀-aryloxy, C₂-C₂₀-alkoxycarbonyl, C₁-C₂₀-alkylthio, C₆-C₂₀-arylthio, C₁-C₂₀-alkylsulphonyl, C₁-C₂₀-alkylsulphonate, C₆-C₂₀-arylsulphonate or C₁-C₂₀-alkylsulphinyl where all the above radicals may be substituted.

9. Catalyst system according to one or more of Claims 1 to 8, wherein catalysts of the general formula (A1), 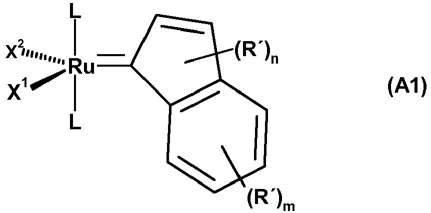 where
X¹, X² and L can have the same general, preferred and particularly preferred meanings as in the general formula (A),
n is 0, 1 or 2,
m is 0, 1, 2, 3 or 4 and
the radicals R' are identical or different and are alkyl, cycloalkyl, alkenyl, alkynyl, aryl, alkoxy, alkenyloxy, alkynyloxy, aryloxy, alkoxycarbonyl, alkylamino, alkylthio, arylthio, alkylsulphonyl or alkylsulphinyl radicals which may in each case be substituted by one or more alkyl, halogen, alkoxy, aryl or heteroaryl radicals,
are used.

10. Catalyst system according to Claim 1, wherein the catalyst has the structure (IV), (V) or (VI), where Cy is in each case cyclohexyl, Mes is 2,4,6-trimethylphenyl and Ph is phenyl.

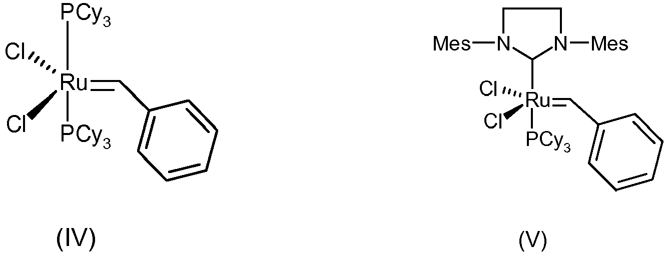

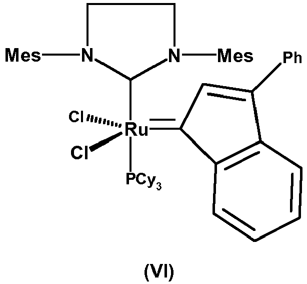

11. Catalyst system according to Claim 1, wherein catalysts of the general formula (B), 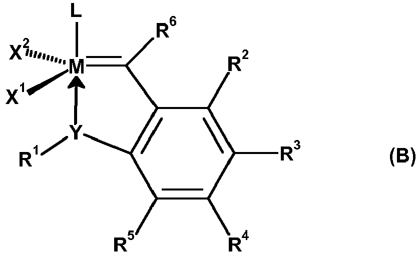 where
M is ruthenium or osmium,
Y is oxygen (O), sulphur (S), an N-R¹ radical or a P-R¹ radical,
X¹ and X² are identical or different anionic ligands,
R¹ is an alkyl, cycloalkyl, alkenyl, alkynyl, aryl, alkoxy, alkenyloxy, alkynyloxy, aryloxy, alkoxycarbonyl, alkylamino, alkylthio, arylthio, alkylsulphonyl or alkylsulphinyl radical which may in each case optionally be substituted by one or more alkyl, halogen, alkoxy, aryl or heteroaryl radicals,
R², R³, R⁴ and R⁵ are identical or different and are each hydrogen or an organic or inorganic radical,
R⁶ is hydrogen or an alkyl, alkenyl, alkynyl or aryl radical and
L is a ligand which has the same meanings as the ligand L in the formula (A) mentioned in Claim 6,
are used.

12. Catalyst system according to Claim 11, wherein L is a P(R⁷)₃ radical, where the radicals R⁷ are each, independently of one another, C₁-C₆-alkyl, C₃-C₈-cycloalkyl or aryl, or else is a substituted or unsubstituted imidazolidine radical ("Im") which preferably has the structure of one of the general formulae (IIa) and (IIb) mentioned in Claim 8 and particularly preferably one of the following structures (IIIa) to (IIIf), where Mes is in each case a 2,4,6-trimethylphenyl radical or alternatively in each case a 2,6-diisopropylphenyl radical.

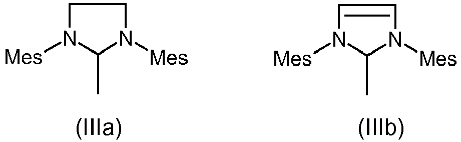

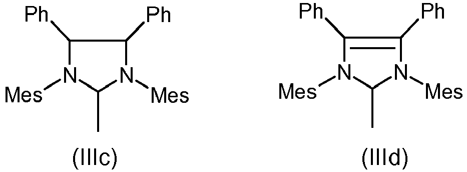

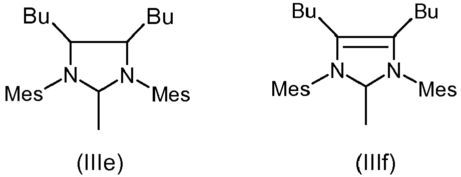

13. Catalyst system according to Claim 11 or 12, wherein X¹ and X² in the general formula (B) can have the meanings of X¹ and X² in Claims 4-6.

14. Catalyst system according to one or more of Claims 11 to 13, wherein catalysts of the general formula (B1), 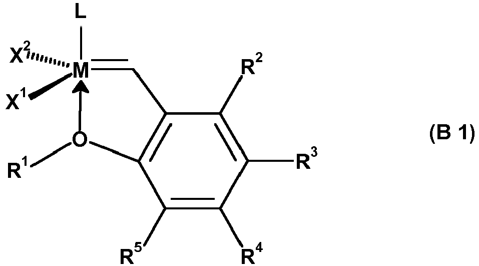 where
M, L, X¹, X², R¹, R², R³, R⁴ and R⁵ have the meanings mentioned for the general formula (B) in Claim 11,
are used.

15. Catalyst system according to Claim 14, wherein catalysts of the general formula (B1) in which
M is ruthenium,
X¹ and X² are both halogen, in particular chlorine,
R¹ is a straight-chain or branched C₁-C₁₂-alkyl radical,
R², R³, R⁴, R⁵ have the general and preferred meanings mentioned for the general formula (B) in Claim 11 and
L has the general and preferred meanings mentioned for the general formula (B) in Claim 11,
are used.

16. Catalyst system according to Claim 14, wherein catalysts of the general formula (B1) in which
M is ruthenium,
X¹ and X² are both chlorine,
R¹ is an isopropyl radical,
R², R³, R⁴, R⁵ are all hydrogen and
L is a substituted or unsubstituted imidazolidine radical of the formula (IIa) or (IIb) 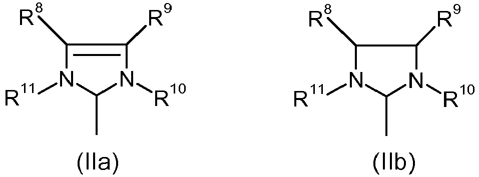
where
R⁸, R⁹, R¹⁰, R¹¹ are identical or different and are each hydrogen, straightchain or branched C₁-C₃₀-alkyl, C₃-C₂₀-cycloalkyl, C₂-C₂₀-alkenyl, C₂-C₂₀-alkynyl, C₆-C₂₄-aryl, C₁-C₂₀-carboxylate, C₁-C₂₀-alkoxy, C₂-C₂₀-alkenyloxy, C₂-C₂₀-alkynyloxy, C₆-C₂₄-aryloxy, C₂-C₂₀-alkoxycarbonyl, C₁-C₂₀-alkylthio, C₆-C₂₄-arylthio, C₁-C₂₀-alkylsulphonyl, C₁-C₂₀-alkylsulphonate, C₆-C₂₄-arylsulphonate or C₁-C₂₀-alkylsulphinyl,
are used.

17. Catalyst system according to Claim 14, wherein a catalyst of the structure (VII), (VIII), (IX), (X), (XI), (XII), (XIII), (XIV) or (XV) below, where Mes is in each case 2,4,6-trimethylphenyl, is used as catalyst of the general structural formula (B1).

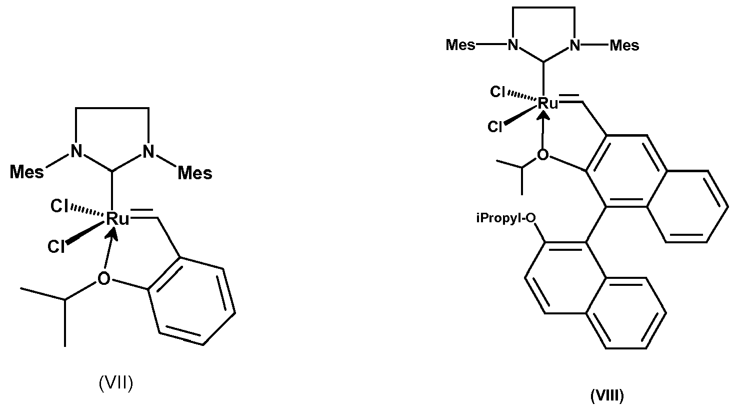

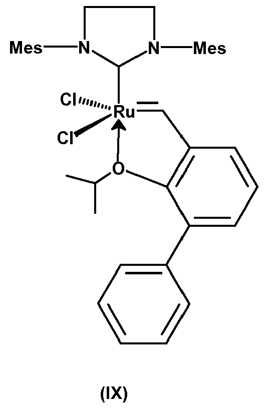

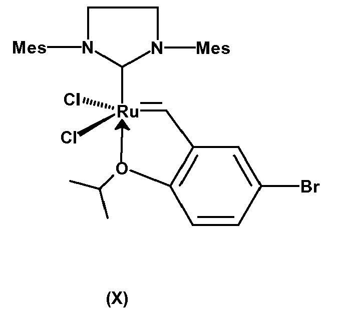

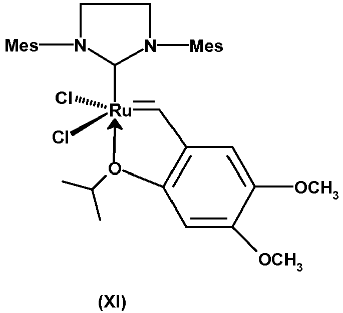

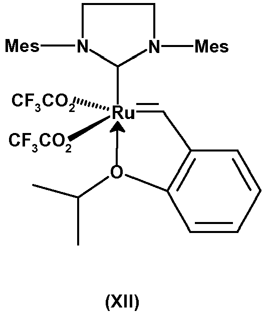

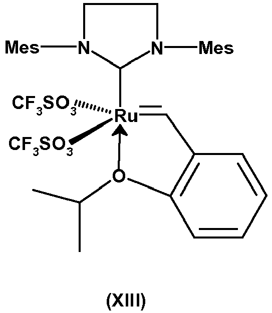

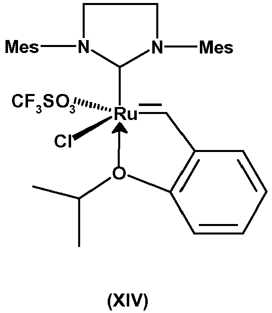

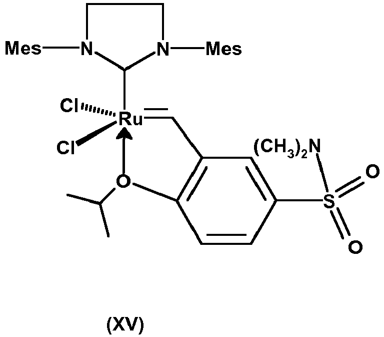

18. Catalyst system according to Claim 11, wherein a catalyst of the general formula (B2), 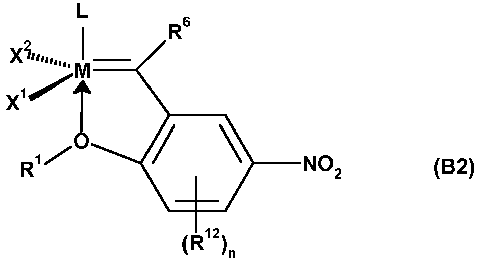 where
M, L, X¹, X², R¹ and R⁶ have the meanings mentioned for the general formula (B) in Claim 11,
the radicals R¹² are identical or different and have the meanings, with the exception of hydrogen, mentioned for the radicals R², R³, R⁴ and R⁵ in the general formula (B) in Claim 11 and
n is 0, 1, 2 or 3,
is used.

19. Catalyst system according to Claim 18, wherein a catalyst of the structure (XVI) or (XVII), where Mes is in each case 2,4,6-trimethylphenyl, is used.

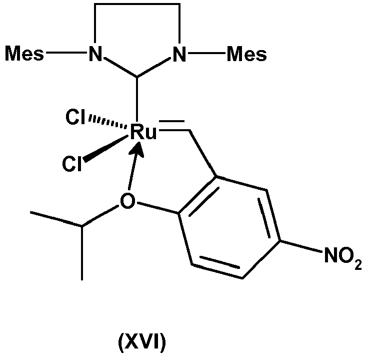

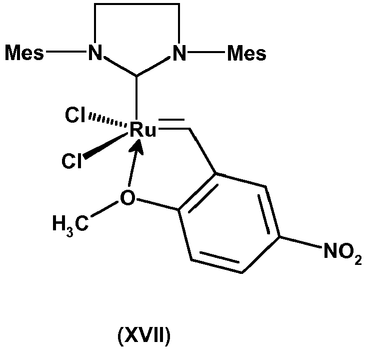

20. Catalyst system according to Claim 11, wherein a catalyst of the general formula (B3), 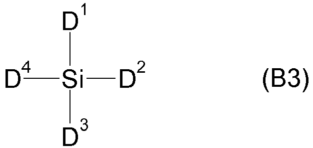 where D¹, D², D³ and D⁴ each have a structure of the general formula (XVIII) shown below which is bound via the methylene group to the silicon of the formula (B3), 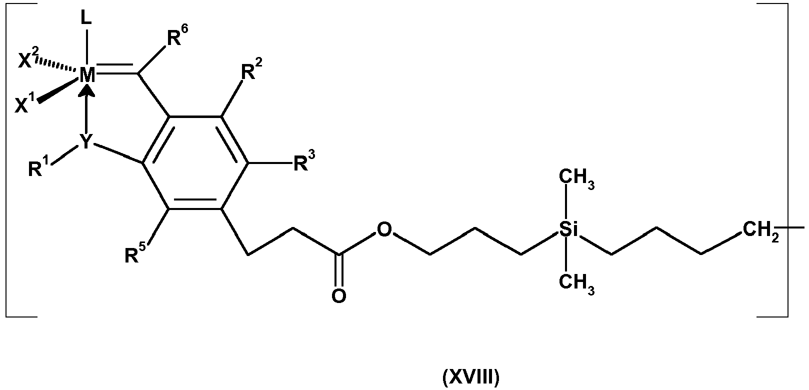 where
M, L, X¹, X², R¹, R², R³, R⁵ and R⁶ have the meanings mentioned for the general formula (B) in Claim 11,
is used.

21. Catalyst system according to Claim 1, wherein a catalyst of the general formula (B4), 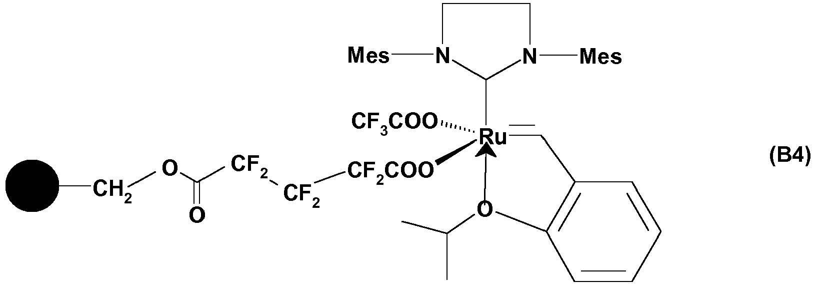 where the symbol 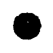
represents a support,
is used.

22. Catalyst system according to Claim 1, wherein a catalyst of the general formula (C), 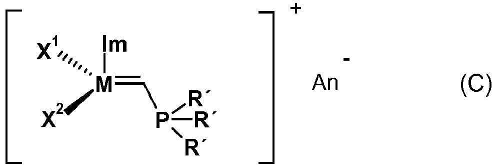 where
M is ruthenium or osmium,
X¹ and X² are identical or different and are anionic ligands,
R' are identical or different and are each a straight-chain or branched C1-C30-alkyl, C5-C30-cycloalkyl or aryl radical, where the C1-C30-alkyl radicals may be interrupted by one or more double or triple bonds or one or more heteroatoms, preferably oxygen or nitrogen,
Im is a substituted or unsubstituted imidazolidine radical and
An is an anion,
is used.

23. Catalyst system according to Claim 1, wherein a catalyst of the general formula (D), 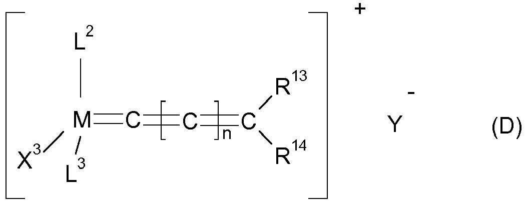 where
M is ruthenium or osmium,
R¹³ and R¹⁴ are each, independently of one another, hydrogen, C₁-C₂₀-alkyl, C₂-C₂₀-alkenyl, C₂-C₂₀-alkynyl, C₆-C₂₄-aryl, C₁-C₂₀-carboxylate, C₁-C₂₀-alkoxy, C₂-C₂₀-alkenyloxy, C₂-C₂₀-alkynyloxy, C₆-C₂₄-aryloxy, C₂-C₂₀-alkoxycarbonyl, C₁-C₂₀-alkylthio, C₁-C₂₀-alkylsulphonyl or C₁-C₂₀-alkylsulphinyl,
X³ is an anionic ligand,
L² is an uncharged π-bonded ligand which may either be monocyclic or polycyclic,
L³ is a ligand selected from the group consisting of phosphines, sulphonated phosphines, fluorinated phosphines, functionalized phosphines having up to three aminoalkyl, ammonioalkyl, alkoxyalkyl, alkoxycarbonylalkyl, hydrocarbonylalkyl, hydroxyalkyl or ketoalkyl groups, phosphites, phosphinites, phosphonites, phosphinamines, arsines stibines, ethers, amines, amides, imines, sulphoxides, thioethers and pyridines,
Y⁻ is a noncoordinating anion and
n is 0, 1, 2, 3, 4 or 5,
is used.

24. Catalyst system according to Claim 1, wherein a catalyst of the general formula (E), 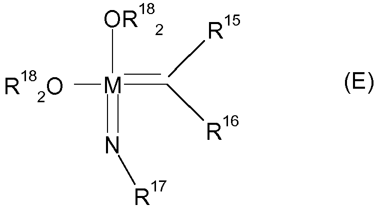 where
M² is molybdenum or tungsten,
R¹⁵ and R¹⁶ are identical or different and are each hydrogen, C₁-C₂₀-alkyl, C₂-C₂₀-alkenyl, C₂-C₂₀-alkynyl, C₆-C₂₄-aryl, C₁-C₂₀-carboxylate, C₁-C₂₀-alkoxy, C₂-C₂₀-alkenyloxy, C₂-C₂₀-alkynyloxy, C₆-C₂₄-aryloxy, C₂-C₂₀-alkoxycarbonyl, C₁-C₂₀-alkylthio, C₁-C₂₀-alkylsulphonyl or C₁-C₂₀-alkylsulphinyl,
R¹⁷ and R¹⁸ are identical or different and are each a substituted or halogen-substituted C₁-C₂₀-alkyl, C₆-C₂₄ -aryl, C₆-C₃₀-aralkyl radical or a silicone-containing analogue thereof,
is used.

25. Catalyst system according to Claim 1, wherein a catalyst of the general formula (F), 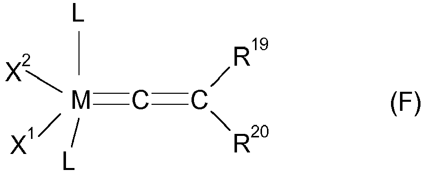 where
M is ruthenium or osmium,
X¹ and X² are identical or different and are anionic ligands which can have all meanings of X¹ and X² in the general formula (A) in Claims 4-6,
the symbols L represent identical or different ligands which can have all meanings of L in the general formulae (A) and (B), and
R¹⁹ and R²⁰ are identical or different and are each hydrogen or substituted or unsubstituted alkyl,
is used.

26. Catalyst system according to Claim 1, wherein a catalyst of the general formula (G), (H) or (K), 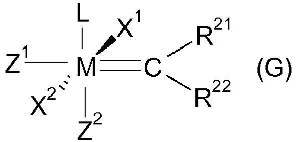 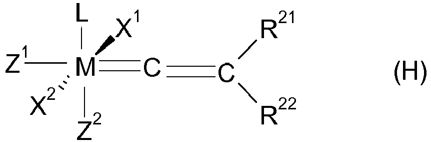 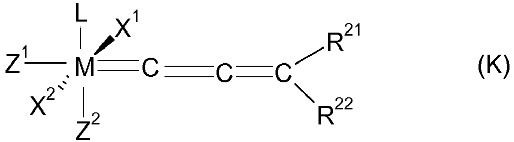 where
M is osmium or ruthenium,
X¹ and X² are identical or different and are two anionic ligands,
L is an uncharged electron donor ligand,
Z¹ and Z² are identical or different and are uncharged electron donors,
R²¹ and R²² are each, independently of one another, hydrogen alkyl, cycloalkyl, alkenyl, alkynyl, aryl, carboxylate, alkoxy, alkenyloxy, alkynyloxy, aryloxy, alkoxycarbonyl, alkylamino, alkylthio, alkylsulphonyl or alkylsulphinyl which may in each case optionally be substituted by one or more radicals selected from among alkyl, halogen, alkoxy, aryl or heteroaryl,
is used.

27. Catalyst system according to one or more of Claims 1-26, wherein the metathesis catalyst and the alkaline earth metal chloride are used in a weight ratio of alkaline earth metal chloride : metathesis catalyst of from 0.01:1 to 10 000:1, preferably from 0.1:1 to 1000:1, particularly preferably from 0.5:1 to 500:1.

28. Use of the catalyst systems according to one or more of Claims 1-27 in metathesis reactions, preferably in ring-closing metatheses (RCM), cross metatheses (CM) or ring-opening methatheses (ROMP).

29. Use of the catalyst systems according to one or more of Claims 1-27 for the metathesis of nitrile rubber.

30. Use according to Claim 28 or 29, wherein the alkaline earth metal chloride is added in a dispersant or without a dispersant to the catalyst or a solution of the catalyst.

31. Use according to Claim 29 or 30, wherein the amount of the catalyst present in the catalyst system is from 1 to 1000 ppm of noble metal, preferably from 2 to 500 ppm, in particular from 5 to 250 ppm, based on the nitrile rubber used.

32. Use of alkaline earth metal chlorides, preferably magnesium chloride or calcium chloride, as constituent of catalyst systems for metathesis.

33. Process for reducing the molecular weight of nitrile rubber, wherein a copolymer or terpolymer containing repeating units of at least one conjugated diene, at least one α,β-unsaturated nitrile and optionally one or more further copolymerizable monomers is used as nitrile rubber and the nitrile rubber is, if appropriate in the presence of a coolefin, brought into contact with the catalyst system according to one or more of Claims 1 to 27.

34. Process according to Claim 33, wherein the reduction in the molecular weight of the nitrile rubber is followed by a hydrogenation of the nitrile rubber.

## Revendications

1. Système catalytique comprenant un catalyseur de métathèse, qui est un catalyseur complexe à base d'un métal du groupe de transition 6 ou 8 du tableau périodique et qui comprend au moins un ligand relié au métal comme un carbène, et un chlorure de métal alcalino-terreux, de préférence le chlorure de calcium ou le chlorure de magnésium.

2. Système catalytique selon la revendication 1, dans lequel un catalyseur complexe à base de molybdène, tungstène, osmium ou ruthénium est utilisé.

3. Système catalytique selon la revendication 1, dans lequel des composés de formule générale (A) sont utilisés en tant que catalyseur 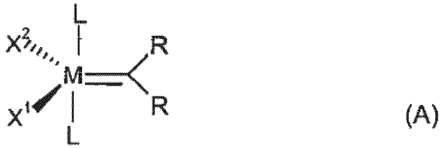 dans laquelle
M signifie osmium ou ruthénium,
X¹ et X² sont identiques ou différents et représentent deux ligands anioniques,
les L représentent des ligands donneurs d'électrons neutres identiques ou différents,
les R sont identiques ou différents et représentent l'hydrogène, un radical alkyle, de préférence alkyle en C₁-C₃₀, cycloalkyle, de préférence cycloalkyle en C₃-C₂₀, alcényle, de préférence alcényle en C₂-C₂₀, alcynyle, de préférence alcynyle en C₂-C₂₀, aryle, de préférence aryle en C₆-C₂₄, carboxylate, de préférence carboxylate en C₁-C₂₀, alcoxy, de préférence alcoxy en C₁-C₂₀, alcényloxy, de préférence alcényloxy en C₂-C₂₀, alcynyloxy, de préférence alcynyloxy en C₂-C₂₀, aryloxy, de préférence aryloxy en C₆-C₂₄, alcoxycarbonyle, de préférence alcoxycarbonyle en C₂-C₂₀, alkylamino, de préférence alkylamino en C₁-C₃₀, alkylthio, de préférence alkylthio en C₁-C₃₀, arylthio, de préférence arylthio en C₆-C₂₄, alkylsulfonyle, de préférence alkylsulfonyle en C₁-C₂₀, ou alkylsulfinyle, de préférence alkylsulfinyle en C₁-C₂₀, qui peuvent tous être substitués par un ou plusieurs radicaux alkyle, halogène, alcoxy, aryle ou hétéroaryle, ou en variante deux radicaux R sont pontés, en incluant l'atome C commun auquel ils sont reliés, en un groupe cyclique, qui peut être de nature aliphatique ou aromatique, qui est éventuellement substitué et qui peut contenir un ou plusieurs hétéroatomes.

4. Système catalytique selon la revendication 3, dans lequel X¹ et X² sont identiques ou différents et signifient hydrogène, halogène, pseudohalogène, des radicaux alcoxy en C₁-C₂₀, aryloxy en C₆-C₂₄, alkyldicétonate en C₃-C₂₀, aryldicétonate en C₆-C₂₄, carboxylate en C₁-C₂₀, alkylsulfonate en C₁-C₂₀, arylsulfonate en C₆-C₂₄, alkylthiol en C₁-C₂₀, arylthiol en C₆-C₂₄, alkylsulfonyle en C₁-C₂₀ ou alkylsulfinyle en C₁-C₂₀.

5. Système catalytique selon la revendication 3 ou 4, dans lequel X¹ et X² sont identiques ou différents et signifient halogène, notamment fluor, chlore, brome ou iode, benzoate, carboxylate en C₁-C₅, alkyle en C₁-C₅, phénoxy, alcoxy en C₁-C₅, alkylthiol en C₁-C₅, arylthiol en C₆-C₂₄, aryle en C₆-C₂₄ ou alkylsulfonate en C₁-C₅.

6. Système catalytique selon une ou plusieurs des revendications 3 à 5, dans lequel X¹ et X² sont identiques et signifient halogène, notamment chlore, CF₃COO, CH₃COO, CFH₂COO, (CH₃)₃CO, (CF₃)₂(CH₃)CO, (CF₃)(CH₃)₂CO, PhO (phénoxy), MeO (méthoxy), EtO (éthoxy), tosylate (p-CH₃-C₆H₄-SO₃), mésylate (2,4,6-triméthylphényle) ou CF₃SO₃ (trifluorométhanesulfonate).

7. Système catalytique selon une ou plusieurs des revendications 3 à 6, dans lequel les deux ligands L signifient indépendamment l'un de l'autre un ligand phosphine, phosphine sulfonée, phosphate, phosphinite, phosphonite, arsine, stibine, éther, amine, amide, sulfoxyde, carboxyle, nitrosyle, pyridine, thioéther ou imidazolidine (« Im »).

8. Système catalytique selon la revendication 7, dans lequel le radical imidazolidine (Im) présente une structure de formule générale (IIa) ou (IIb) 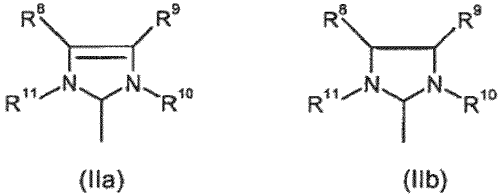 dans lesquelles
R⁸, R⁹, R¹⁰, R¹¹ sont identiques ou différents et signifient hydrogène, alkyle en C₁-C₃₀ linéaire ou ramifié, cycloalkyle en C₃-C₂₀, alcényle en C₂-C₂₀, alcynyle en C₂-C₂₀, aryle en C₆-C₂₄, carboxylate en C₁-C₂₀, alcoxy en C₁-C₂₀, alcényloxy en C₂-C₂₀, alcynyloxy en C₂-C₂₀, aryloxy en C₆-C₂₀, alcoxycarbonyle en C₂-C₂₀, alkylthio en C₁-C₂₀, arylthio en C₆-C₂₀, alkylsulfonyle en C₁-C₂₀, alkylsulfonate en C₁-C₂₀, arylsulfonate en C₆-C₂₀ ou alkylsulfinyle en C₁-C₂₀, tous les radicaux susmentionnés étant éventuellement substitués.

9. Système catalytique selon une ou plusieurs des revendications 1 à 8, dans lequel des catalyseurs de formule générale (A1) sont utilisés 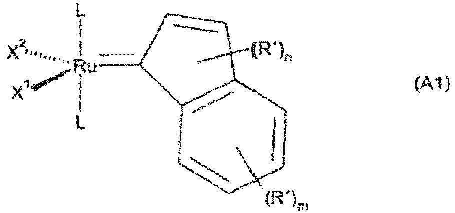 dans laquelle
X¹, X² et L peuvent avoir les mêmes significations générales, préférées et particulièrement préférées que dans la formule générale (A),
n représente 0, 1 ou 2,
m représente 0, 1, 2, 3 ou 4, et
les R' sont identiques ou différents et peuvent signifier des radicaux alkyle, cycloalkyle, alcényle, alcynyle, aryle, alcoxy, alcényloxy, alcynyloxy, aryloxy, alcoxycarbonyle, alkylamino, alkylthio, arylthio, alkylsulfonyle ou alkylsulfinyle, qui peuvent tous être substitués par un ou plusieurs radicaux alkyle, halogène, alcoxy, aryle ou hétéroaryle.

10. Système catalytique selon la revendication 1, dans lequel le catalyseur présente la structure (IV), (V) ou (VI), Cy représentant à chaque fois cyclohexyle, Mes 2,4,6-triméthylphényle et Ph phényle

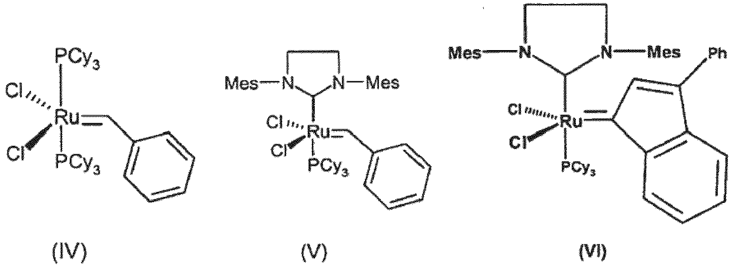

11. Système catalytique selon la revendication 1, dans lequel des catalyseurs de formule générale (B) sont utilisés 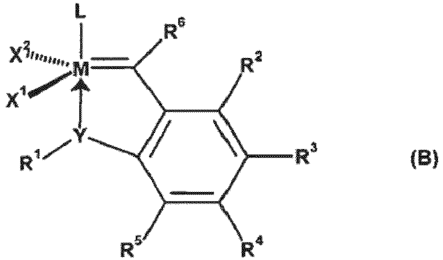 dans laquelle
M signifie ruthénium ou osmium,
Y signifie oxygène (O), soufre (S), un radical N-R¹ ou un radical P-R¹,
X¹ et X² sont des ligands anioniques identiques ou différents,
R¹ représente un radical alkyle, cycloalkyle, alcényle, alcynyle, aryle, alcoxy, alcényloxy, alcynyloxy, aryloxy, alcoxycarbonyle, alkylamino, alkylthio, arylthio, alkylsulfonyle ou alkylsulfinyle, qui peuvent tous éventuellement être substitués par un ou plusieurs radiaux alkyle, halogène, alcoxy, aryle ou hétéroaryle,
R², R³, R⁴ et R⁵ sont identiques ou différents et représentent l'hydrogène, des radicaux organiques ou inorganiques,
R⁶ signifie l'hydrogène, un radical alkyle, alcényle, alcynyle ou aryle, et
L est un ligand qui a les mêmes significations que le ligand L dans la formule (A) indiquée dans la revendication 7.

12. Système catalytique selon la revendication 11, dans lequel L représente un radical P(R⁷)₃, les R⁷ signifiant indépendamment les uns des autres alkyle en C₁-C₆, cycloalkyle en C₃-C₈- ou aryle, ou L représente un radical imidazolidine éventuellement substitué (« Im »), qui présente de préférence la structure des formules générales (IIa) et (IIb) indiquées dans la revendication 8, et présente de manière particulièrement préférée une des structures (IIIa) à (IIIf) suivantes, Mes représentant à chaque fois un radical 2,4,6-triméthylphényle ou en variante à chaque fois un radical 2,6-diisopropylphényle

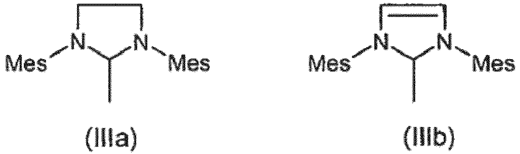

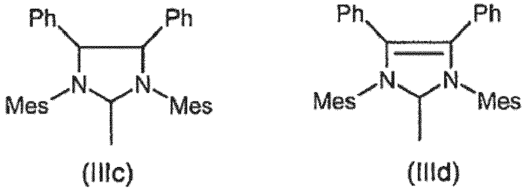

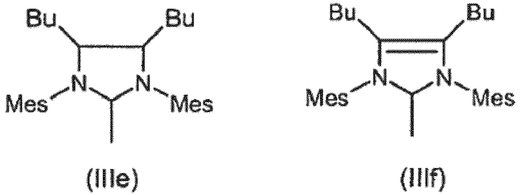

13. Système catalytique selon la revendication 11 ou 12, dans lequel X¹ et X² dans la formule générale (B) peuvent présenter les significations que X¹ et X² présentent dans les revendications 4 à 6.

14. Système catalytique selon une ou plusieurs des revendications 11 à 13, dans lequel des catalyseurs selon la formule générale (B1) sont utilisés 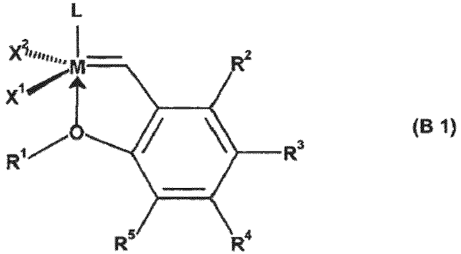 dans laquelle
M, L, X¹, X², R¹, R², R³, R⁴ et R⁵ ont les significations indiquées pour la formule générale (B) dans la revendication 11.

15. Système catalytique selon la revendication 14, dans lequel des catalyseurs selon la formule générale (B1) sont utilisés, dans laquelle
M signifie ruthénium,
X² et X² signifient simultanément halogène, notamment chlore,
R¹ représente un radical alkyle en C₁-C₁₂ linéaire ou ramifié,
R², R³, R⁴, R⁵ ont les significations indiquées pour la formule générale (B) dans la revendication 11, et
L a les significations indiquées pour la formule générale (B) dans la revendication 11.

16. Système catalytique selon la revendication 14, dans lequel des catalyseurs selon la formule générale (B1) sont utilisés, dans laquelle
M représente ruthénium,
X¹ et X² signifient simultanément chlore,
R¹ représente un radical isopropyle,
R², R³, R⁴, R⁵ signifient tous hydrogène, et
L représente un radical imidazolidine de formule (IIa) ou (IIb) éventuellement substitué, 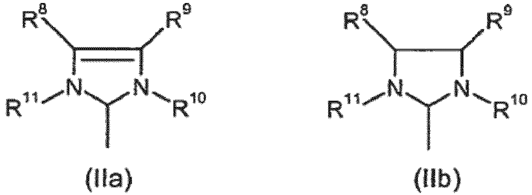 dans lesquelles
R⁸, R⁹, R¹⁰, R¹¹ sont identiques ou différents, et signifient hydrogène, alkyle en C₁-C₃₀ linéaire ou ramifié, cycloalkyle en C₃-C₂₀, alcényle en C₂-C₂₀, alcynyle en C₂-C₂₀, aryle en C₆-C₂₄, carboxylate en C₁-C₂₀, alcoxy en C₁-C₂₀, alcényloxy en C₂-C₂₀, alcynyloxy en C₂-C₂₀, aryloxy en C₆-C₂₄, alcoxycarbonyle en C₂-C₂₀, alkylthio en C₁-C₂₀, arylthio en C₆-C₂₄, alkylsulfonyle en C₁-C₂₀, alkylsulfonate en C₁-C₂₀, arylsulfonate en C₆-C₂₄ ou alkylsulfinyle en C₁-C₂₀.

17. Système catalytique selon la revendication 14, dans lequel un catalyseur de la structure (VII), (VIII), (IX), (X), (XI), (XII), (XIII), (XIV) ou (XV) suivante est utilisé en tant que catalyseur de formule structurale générale (B1), Mes signifiant à chaque fois 2,4,6-triméthylphényle

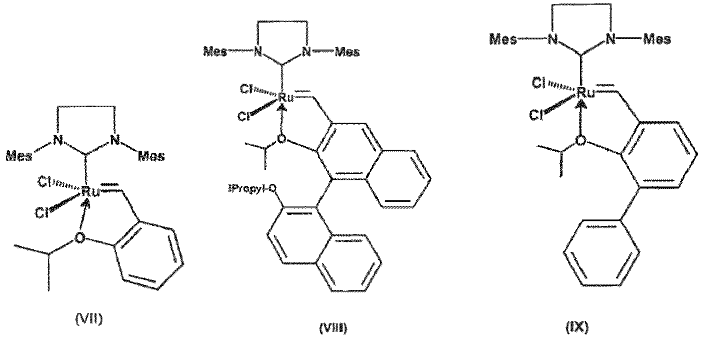

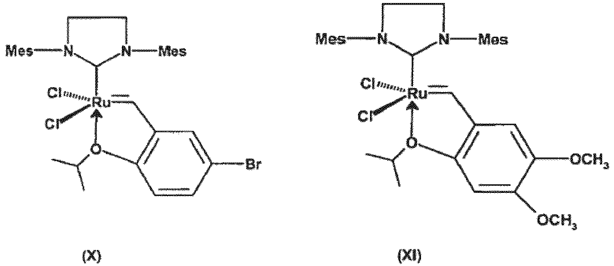

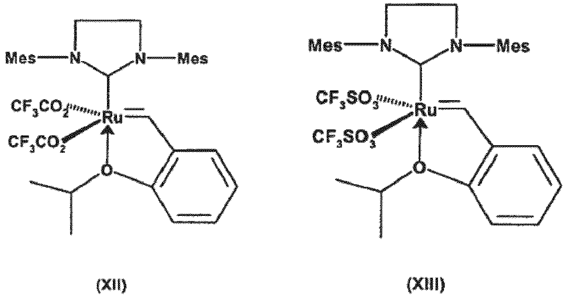

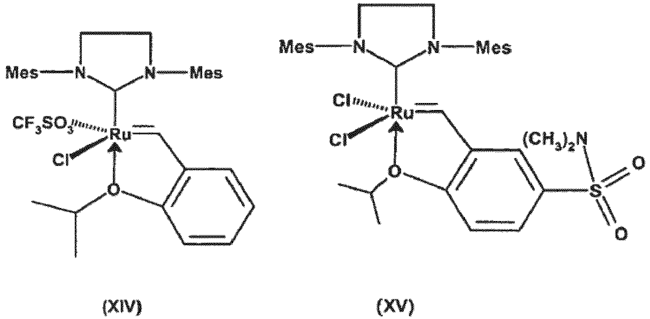

18. Système catalytique selon la revendication 11, dans lequel un catalyseur de formule générale (B2) est utilisé 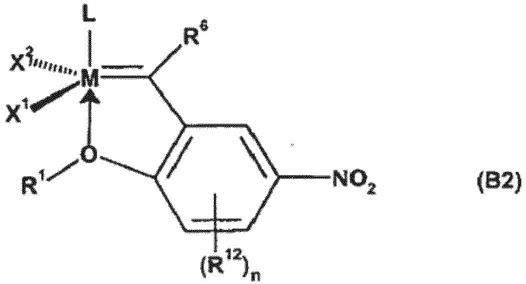 dans laquelle
M, L, X¹, X², R¹ et R⁶ ont les significations indiquées pour la formule générale (B) dans la revendication 11,
les R¹² sont identiques ou différents, et ont les significations indiquées pour les radicaux R², R³, R⁴ et R⁵ dans la formule générale (B) dans la revendication 11, à l'exception de l'hydrogène, et
n représente 0, 1, 2 ou 3.

19. Système catalytique selon la revendication 18, dans lequel un catalyseur de la structure (XVI) ou (XVII) suivante est utilisé, Mes signifiant à chaque fois 2,4,6-triméthylphényle

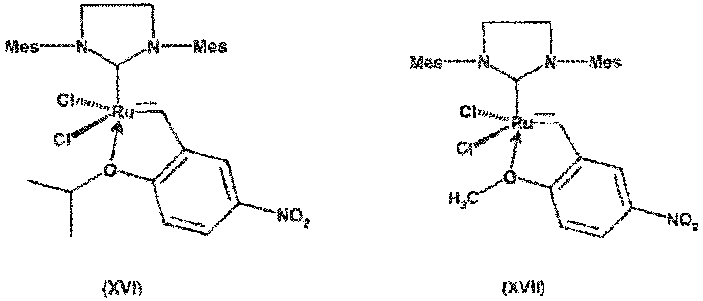

20. Système catalytique selon la revendication 11, dans lequel un catalyseur de formule générale (B3) est utilisé 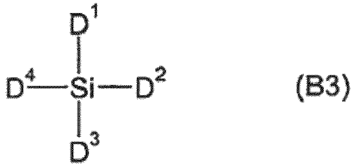 dans laquelle D¹, D², D³ et D⁴ présentent chacun une structure de la formule générale (XVIII) représentée ci-après, qui est reliée par le groupe méthylène au silicium de la formule (B3), 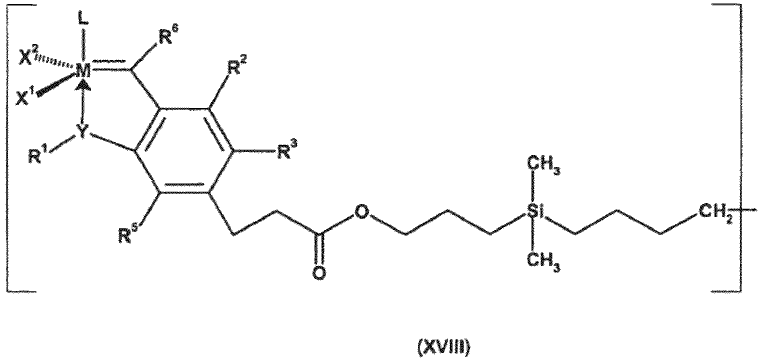 dans laquelle
M, L, X¹, X², R¹, R², R³, R⁵ et R⁶ ont les significations indiquées pour la formule générale (B) dans la revendication 11.

21. Système catalytique selon la revendication 1, dans lequel un catalyseur de formule générale (B4) est utilisé 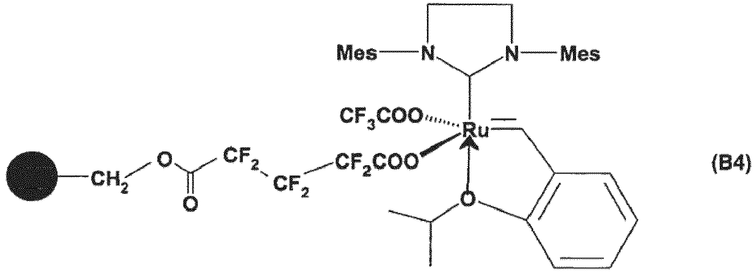 dans laquelle le symbole
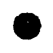 représente un support.

22. Système catalytique selon la revendication 1, dans lequel un catalyseur de formule générale (C) est utilisé 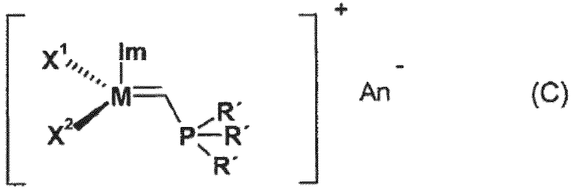 dans laquelle
M signifie ruthénium ou osmium,
X¹ et X² sont identiques ou différents, et représentent des ligands anioniques,
les R' sont identiques ou différents et signifient un radical alkyle en C₁-C₃₀ linéaire ou ramifié, cycloalkyle en C₅-C₃₀ ou aryle, les radicaux alkyle en C₁-C₃₀ pouvant éventuellement être interrompus par une ou plusieurs doubles ou triples liaisons ou également un ou plusieurs hétéroatomes, de préférence l'oxygène ou l'azote,
Im représente un radical imidazolidine éventuellement substitué, et
An représente un anion.

23. Système catalytique selon la revendication 1, dans lequel un catalyseur de formule générale (D) est utilisé 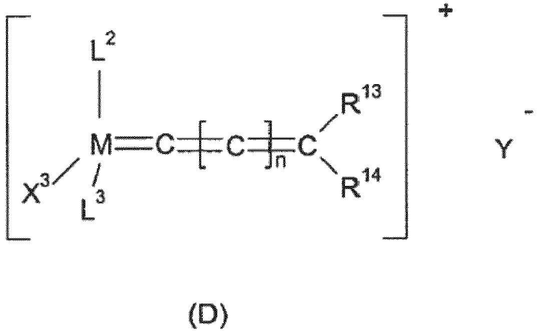 dans laquelle
M signifie ruthénium ou osmium,
R¹³ et R¹⁴ signifient indépendamment l'un de l'autre hydrogène, alkyle en C₁-C₂₀, alcényle en C₂-C₂₀, alcynyle en C₂-C₂₀, aryle en C₆-C₂₄, carboxylate en C₁-C₂₀, alcoxy en C₁-C₂₀, alcényloxy en C₂-C₂₀, alcynyloxy en C₂-C₂₀, aryloxy en C₆-C₂₄, alcoxycarboyle en C₂-C₂₀, alkylthio en C₁-C₂₀, alkylsulfonyle en C₁-C₂₀ ou alkylsulfinyle en C₁-C₂₀,
X³ est un ligand anionique,
L² est un ligand neutre à liaison n, indépendamment qu'il soit mono- ou polycyclique,
L³ représente un ligand du groupe constitué par les phosphines, les phosphines sulfonées, les phosphines fluorées, les phosphines fonctionnalisées avec jusqu'à trois groupes aminoalkyle, ammoniumalkyle, alcoxyalkyle, alcoxycarbonylalkyle, hydrocarbonylalkyle, hydroxyalkyle ou cétoalkyle, les phosphites, les phosphinites, les phosphonites, les phosphinamines, les arsines, les stibines, les éthers, les amines, les amides, les imines, les sulfoxydes, les thioéthers et les pyridines,
Y⁻ est un anion non coordonnant, et
n représente 0, 1, 2, 3, 4 ou 5.

24. Système catalytique selon la revendication 1, dans lequel un catalyseur de formule générale (E) est utilisé 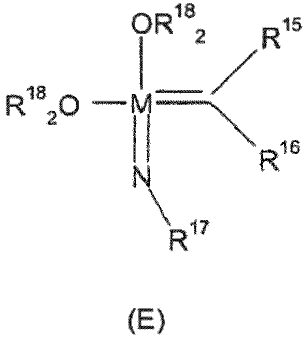 dans laquelle
M² représente molybdène ou tungstène,
R¹⁵ et R¹⁶ sont identiques ou différents, et signifient hydrogène, alkyle en C₁-C₂₀, alcényle en C₂-C₂₀, alcynyle en C₂-C₂₀, aryle en C₆-C₂₄, carboxylate en C₁-C₂₀, alcoxy en C₁-C₂₀, alcényloxy en C₂-C₂₀, alcynyloxy en C₂-C₂₀, aryloxy en C₆-C₂₄, alcoxycarbonyle en C₂-C₂₀, alkylthio en C₁-C₂₀, alkylsulfonyle en C₁-C₂₀ ou alkylsulfinyle en C₁-C₂₀,
R¹⁷ et R¹⁸ sont identiques ou différents, et représentent un radical alkyle en C₁-C₂₀, aryle en C₆-C₂₄, aralkyle en C₆-C₃₀ substitué ou substitué par halogène, ou un analogue contenant du silicium de celui-ci.

25. Système catalytique selon la revendication 1, dans lequel un catalyseur de formule générale (F) est utilisé 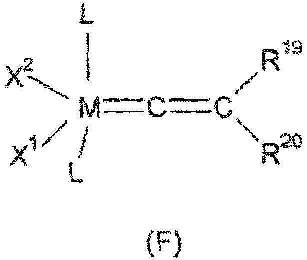 dans laquelle
M signifie ruthénium ou osmium,
X¹ et X² sont identiques ou différents, et représentent des ligands anioniques, qui peuvent avoir toutes les significations que X¹ et X² présentent dans la formule générale (A) dans les revendications 4 à 6,
les L représentent des ligands identiques ou différents, qui peuvent avoir toutes les significations de L dans les formules générales (A) et (B), et
R¹⁹ et R²⁰ sont identiques ou différents, et signifient hydrogène ou alkyle substitué ou non substitué.

26. Système catalytique selon la revendication 1, dans lequel un catalyseur de formule générale (G), (H) ou (K) est utilisé 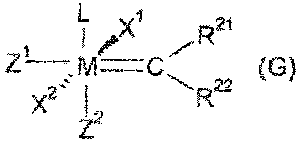 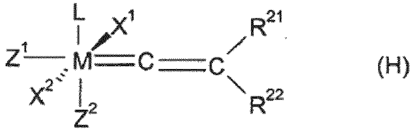 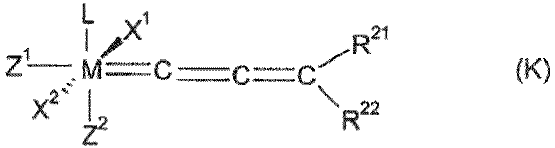 dans lesquelles
M signifie osmium ou ruthénium,
X¹ et X² sont identiques ou différents, et représentent deux ligands anioniques,
L représente un ligand neutre donneur d'électrons,
Z¹ et Z² sont identiques ou différents, et représentent des donneurs d'électrons neutres,
R²¹ et R²² signifient indépendamment l'un de l'autre hydrogène, alkyle, cycloalkyle, alcényle, alcynyle, aryle, carboxylate, alcoxy, alcényloxy, alcynyloxy, aryloxy, alcoxycarbonyle, alkylamino, alkylthio, alkylsulfonyle ou alkylsulfinyle, qui sont chacun éventuellement substitués par un ou plusieurs radicaux choisis parmi alkyle, halogène, alcoxy, aryle ou hétéroaryle.

27. Système catalyseur selon une ou plusieurs des revendications 1 à 26, dans lequel le catalyseur de métathèse et le chlorure de métal alcalino-terreux sont utilisés en un rapport en poids chlorure de métal alcalino-terreux:catalyseur de métathèse de 0,01:1 à 10 000:1, de préférence de 0,1:1 à 1 000:1, de manière particulièrement préférée de 0,5:1 à 500:1.

28. Utilisation des systèmes catalytiques selon une ou plusieurs des revendications 1 à 27 dans des réactions de métathèse, de préférence dans des métathèses à fermeture de cycle (RCM), des métathèses croisées (CM) ou des métathèses à ouverture de cycle (ROMP).

29. Utilisation des systèmes catalytiques selon une ou plusieurs des revendications 1 à 27 pour la métathèse de caoutchouc de nitrile.

30. Utilisation selon la revendication 28 ou 29, dans laquelle le chlorure de métal alcalino-terreux est ajouté dans un dispersant ou sans dispersant au catalyseur ou à une solution du catalyseur.

31. Utilisation selon la revendication 29 ou 30, dans lequel la quantité du catalyseur contenue dans le système catalytique est de 1 à 1 000 ppm de métal noble, de préférence de 2 à 500 ppm, notamment de 5 à 250 ppm, par rapport au caoutchouc de nitrile utilisé.

32. Utilisation de chlorures de métaux alcalino-terreux, de préférence de chlorure de magnésium ou de chlorure de calcium, en tant que constituant de systèmes catalytiques pour la métathèse.

33. Procédé de réduction du poids moléculaire de caoutchouc de nitrile, dans lequel un co- ou terpolymère qui contient des unités de répétition d'au moins un diène conjugué, d'au moins un nitrile α, β-insaturé et éventuellement d'un ou plusieurs autres monomères copolymérisables est utilisé en tant que caoutchouc de nitrile, et dans lequel le caoutchouc de nitrile est mis en contact avec le système catalytique selon une ou plusieurs des revendications 1 à 27 éventuellement en présence d'une co-oléfine.

34. Procédé selon la revendication 33, dans lequel une hydrogénation du caoutchouc de nitrile est réalisée après la réduction du poids moléculaire du caoutchouc de nitrile.
